# EUROPÄISCHE PATENTSCHRIFT

(11) **EP 3 634 887 B1**
(45) Veröffentlichungstag und Bekanntmachung des Hinweises auf die Patenterteilung: **09.02.2022**
(21) Anmeldenummer: 18730629.5
(22) Anmeldetag: 03.05.2018
(51) Int. Cl.: B65G 1/04

(54) **AUTOMATISIERTES LAGERSYSTEM FÜR HÄNGEWAREN UND HÄNGETASCHEN MIT VERBESSERTEM ZUGRIFF SOWIE WARENTRANSPORTVORRICHTUNG UND BETRIEBSVERFAHREN DAZU**
AUTOMATED STORAGE SYSTEM FOR SUSPENDED ITEMS, SUSPENSION BAGS WITH IMPROVED ACCESS, AND ITEM CONVEYING DEVICE AND OPERATING METHOD THEREFOR
SYSTÈME DE STOCKAGE AUTOMATISÉ POUR ARTICLES SUSPENDUS ET SACS SUSPENDUS PRÉSENTANT UNE MEILLEURE PRISE AINSI QUE DISPOSITIF DE TRANSPORT D'ARTICLES ET PROCÉDÉ DE FONCTIONNEMENT POUR CEUX-CI

(30) Priorität: 05.05.2017 AT 503732017
(43) Veröffentlichungstag der Anmeldung: 15.04.2020
(73) Patentinhaber: TGW Mechanics GmbH, 4600 Wels (AT)
(72) Erfinder: GROSSE, Eric, 63225 Langen (DE); RAUSCH, Martin, 4810 Gmunden (AT)
(74) Vertreter: Burger, Hannes
(86) Internationale Anmeldenummer: PCT/AT2018/060087
(87) Internationale Veröffentlichungsnummer: WO 2018/201176

(56) Entgegenhaltungen:
- EP-A1- 1 161 390
- AT-A4- 516 612
- CN-U- 206 013 606
- DE-U1- 9 406 152
- DE-U1- 29 915 522

## Beschreibung

Die Erfindung betrifft ein automatisiertes Lagersystem für Hängewaren, welche an Kleiderbügeln aufgehängt sind, und/oder für Hängetaschen für Waren. Das Lagersystem umfasst ein Lagerregal mit in übereinander liegenden und im Wesentlichen horizontalen Lagerebenen angeordneten Lagerbereichen für die Hängewaren / Hängetaschen und zumindest eine vor dem Lagerregal in einer ersten Richtung verfahrbare Warentransportvorrichtung. Das Lagerregal weist in den Lagerbereichen erste Warenaufnahmeträger auf, wobei an einem ersten Warenaufnahmeträger eine Vielzahl an Hängewaren / Hängetaschen aufnehmbar ist und eine Längserstreckung der ersten Warenaufnahmeträger in einer zweiten Richtung senkrecht zur ersten Richtung ausgerichtet ist. Die Warentransportvorrichtung umfasst einen Grundrahmen, einen zweiten Warenaufnahmeträger, der sich in der zweiten Richtung erstreckt und in der zweiten Richtung auf den ersten Warenaufnahmeträger verstellbar ist, sowie zumindest eine relativ zum Grundrahmen in der zweiten Richtung bewegbare Ein- und Auslagervorrichtung zum Bewegen der Hängewaren / Hängetaschen zwischen dem ersten Warenaufnahmeträger und dem zweiten Warenaufnahmeträger.

Weiterhin betrifft die Erfindung ein Betriebsverfahren für ein automatisiertes Lagersystem für Hängewaren, welche an Kleiderbügeln aufgehängt sind, und/oder für Hängetaschen für Waren, wobei das Lagersystem ein Lagerregal mit in übereinander liegenden und im Wesentlichen horizontalen Lagerebenen angeordneten Lagerbereichen für die Hängewaren / Hängetaschen und zumindest eine vor dem Lagerregal in einer ersten Richtung verfahrbare Warentransportvorrichtung umfasst. Das Betriebsverfahren weist folgende Schritte auf:
- Bewegen der Warentransportvorrichtung in der ersten Richtung in eine Warenübergabeposition im Bereich eines ersten Warenaufnahmeträgers des Lagerregals, wobei eine Längserstreckung des ersten Warenaufnahmeträgers in einer zweiten Richtung senkrecht zur ersten Richtung ausgerichtet ist,
- Bewegen eines auf der Warentransportvorrichtung verstellbar angeordneten und sich in der zweiten Richtung erstreckenden, zweiten Warenaufnahmeträgers in der zweiten Richtung bis zum ersten Warenaufnahmeträger,
- Bewegen von Mitnahmeorganen einer Ein- und Auslagervorrichtung von einer Freigabestellung, in welcher die Mitnahmeorgane quer zur zweiten Richtung vom ersten Warenaufnahmeträger wegbewegt sind, in eine Betätigungsstellung, in welcher die Mitnahmeorgane quer zur zweiten Richtung zum ersten Warenaufnahmeträger hin bewegt sind, wobei die Freigabestellung zur Freigabe der Kleiderbügel / Hängetaschen und die Betätigungsstellung zur Mitnahme der Kleiderbügel / Hängetaschen vorgesehen ist und
- Bewegen der Hängewaren / Hängetaschen vom ersten Warenaufnahmeträger auf den zweiten Warenaufnahmeträger oder umgekehrt mit Hilfe der in der zweiten Richtung bewegbaren Ein- und Auslagervorrichtung.

Die Erfindung betrifft schließlich auch eine Warentransportvorrichtung zum Ein- und Auslagern von Hängewaren, welche an Kleiderbügeln aufgehängt sind, und/oder für Hängetaschen für Waren, in ein Lagerregal eines automatisierten Lagersystems mit ersten Warenaufnahmeträgern, wobei die Warentransportvorrichtung in einer ersten Richtung verfahrbar ist. Die Warentransportvorrichtung umfasst einen Grundrahmen, einen zweiten Warenaufnahmeträger, der sich in der zweiten Richtung erstreckt und in der zweiten Richtung auf den ersten Warenaufnahmeträger verstellbar ist, sowie zumindest eine relativ zum Grundrahmen in der zweiten Richtung bewegbare Ein- und Auslagervorrichtung zum Bewegen der Hängewaren zwischen dem ersten Warenaufnahmeträger und dem zweiten Warenaufnahmeträger.

Die AT 516 612 A4 offenbart ein automatisiertes Lagersystem für Hängewaren nach dem Oberbegriff des Anspruchs 1, ein Betriebsverfahren für ein automatisiertes Lagersystem für Hängewaren nach dem Oberbegriff des Anspruchs 15 und eine Warentransportvorrichtung zum Ein- und Auslagern von Hängewaren nach dem Oberbegriff des Anspruchs 19.

Das automatisierte Lagersystem der AT 516 612 A4 umfasst ein ortsfestes Lagerregal mit in übereinander liegenden Lagerebenen angeordneten Lagerbereichen für die Hängewaren und zumindest eine vor dem Lagerregal in einer ersten Richtung verfahrbare Warentransportvorrichtung. Die Warentransportvorrichtung umfasst einen Grundrahmen, und zumindest eine relativ zum Grundrahmen in einer zweiten Richtung senkrecht zur ersten Richtung bewegbare Ein- und Auslagervorrichtung. Die Hängeware wird mittels der Ein- und Auslagervorrichtung zwischen einem dem Lagerbereich zugeordneten Warenaufnahmeträger und einem der Warentransportvorrichtung zugeordneten Warenaufnahmeträger bewegt, wobei die Warenaufnahmeträger in den Lagerbereichen im Lagerregal verbleiben.

Nachteilig ist an dem in der AT 516 612 A4 offenbarten Verfahren, dass die Mitnahmeorgane der Ein- und Auslagervorrichtung beim Ergreifen der Kleiderbügel die an den Kleiderbügeln aufgehängten Waren im Einzelfall beschädigen können. Insbesondere ist dies bei Kleidungsstücken der Fall, die einen hohen Kragen aufweisen, beispielsweise bei Winterjacken und Wintermänteln. Darüber hinaus kann es bei dem in der AT 516 612 A4 offenbarten Verfahren in ungünstigen Fällen zu einer Verklemmung der Ein- und Auslagervorrichtung kommen, die auch zu einer Beschädigung der Ware und auch der Ein- und Auslagervorrichtung führen kann.

Die US 6,558,102 B2 offenbart darüber hinaus ein automatisiertes Lagersystem für Hängeware, insbesondere Bekleidungsstücke, wie Mäntel, Sakkos, Anzüge, Kostüme usw., das einen Hängeförderer mit auf Schienen laufenden Laufwagen, Lagerregale mit in übereinander liegenden Lagerebenen angeordneten Lagerbereichen und zwischen den Lagerregalen in einer ersten Richtung (x-Richtung) verfahrbare Warentransportvorrichtungen (Regalbediengeräte) mit einem heb- und senkbaren Grundrahmen und je Warentransportvorrichtung eine relativ zum Grundrahmen in einer zweiten Richtung (z-Richtung) senkrecht zur ersten Richtung (x-Richtung) bewegbare Ein- und Auslagervorrichtung zum Be- und Entladen der Lagerregale aufweist. Die Hängeware ist mit Kleiderbügeln auf Lagerstangen aufgehängt und wird auch mit diesen in dem Lagersystem transportiert und gelagert. Dabei werden die Lagerstangen während dem Transport und der Lagerung formschlüssig fixiert.

Aus der DE 102 14 471 A1 ist ein automatisiertes Lagersystem für Hängeware bekannt, bei der Warenaufnahmeträger eingesetzt werden, welche mit Gleitelementen und Halterungen für die Hängeware versehen sind. Die Lagerbereiche und der heb- und senkbare Grundrahmen der Warentransportvorrichtung sind mit Tragschienen ausgestattet, entlang welcher die Warenaufnahmeträger laufen. Der Grundrahmen kann mit einer Ein- und Auslagervorrichtung ausgestattet sein, mittels welcher der Warenaufnahmeträger zwischen einem Lagerbereich und der Warentransportvorrichtung bewegt werden kann.

Gemäß der EP 1 972 577 B1 umfasst das automatisierte Lagersystem für Hängeware eine Fördertechnik, ein Regalbediengerät, Lagerregale und eine Übergabestation, wobei in der Übergabestation die Hängeware von der Fördertechnik auf Lagerstangen umgesetzt bzw. von den Lagerstangen abgegeben werden, wobei das Regalbediengerät ausgebildet ist, um leere oder volle Lagerstangen von der Übergabestation zu übernehmen oder an die Übergabestation abzugeben. Das Regalbediengerät weist auch Greifeinheiten auf, mittels welcher die Lagerstange auf dem Transport von der Übergabestation zum Lagerregal fixiert werden kann. Die EP 2 130 789 B1 sieht zusätzlich eine Zwischenaufnahme für eine leere Lagerstange unterhalb der Greifeinheiten und eine Ablageaufnahme für eine leere Lagerstange im Lagerregal vor.

In der DE 10 2008 035 651 A1 ist ein automatisiertes Lagersystem beschrieben, welche anstatt Lagerstangen Warenaufnahmeträger verwendet, die an einer Unterseite Hängeaufnahmen umfasst, an der die Hängeware einhängbar ist.

Aus der DE 10 2008 018 310 A1 ist ein Verfahren zum Betreiben eines Hochregallagers für Hängewaren bekannt, welches die Schritte umfasst:
- Aufhängen von Hängewaren auf eine lose Lagerstange in einem Wareneingang,
- Übergeben der behängten Lagerstange auf ein Regallagerbediengerät,
- Einlagern der behängten Lagerstange in einem freien Lagerbereich eines Lagerregales,
- Auslagern der behängten Lagerstange aus dem Lagerregal auf das Regalbediengerät,
- Übernehmen der behängten Lagerstange vom Regalbediengerät,
- Abhängen der Hängeware von der Lagerstange und
- Transportieren der leeren Lagerstange in ein Pufferlager.

Neben den bereits zu der AT 516 612 A4 angegebenen Nachteilen sind die Lagersysteme, die in den zusätzlich genannten Dokumenten offenbart sind, sehr aufwendig, da eine Vielzahl von Lagerstangen bzw. Warenaufnahmeträger eingesetzt werden, die gemeinsam mit der Hängeware manipuliert werden müssen. Die Regalbediengeräte und die Lagerbereiche sind mit entsprechenden Fixiermittel auszustatten, welche die Lagerstangen bzw. Warenaufnahmeträger nach jedem Wechsel neuerlich fixieren.

Die EP 1 161 390 A1, DE 94 06 152 U1, DE 299 15 522 U1 und CN 206013606 U offenbaren Förderer mit einem profilartigen Warenaufnahmeträger, auf dem ein Kleiderhaken gelagert sein kann, welcher von einem Mitnehmer bewegt werden kann, der auf einem endlos umlaufenden Fördermittel (zum Beispiel einer Kette) befestigt ist.

Der vorliegenden Erfindung liegt nun die Aufgabe zugrunde, ein verbessertes automatisiertes Lagersystem für Hängewaren / Hängetaschen, ein verbessertes Betriebsverfahren für ein automatisiertes Lagersystem für Hängewaren / Hängetaschen und eine verbesserte Warentransportvorrichtung eines automatisierten Lagersystems zum Ein- und Auslagern von Hängewaren / Hängetaschen anzugeben. Insbesondere soll eine Beschädigung einer an einem Kleiderbügel aufgehängten Hängeware oder in Hängetaschen gelagerten Ware oder der Hängetasche selbst beim Ergreifen der Kleiderbügel / Hängetaschen vermieden werden. Insbesondere soll auch das Risiko für eine Verklemmung der Ein- und Auslagervorrichtung verringert werden, die zu einer Beschädigung der Ware und auch der Ein- und Auslagervorrichtung führen kann. Schließlich soll im Speziellen auch eine automatisierte Lagervorrichtung geschaffen werden, mit welcher eine hohe Durchsatzleistung erreicht werden kann und welche sich gegenüber dem Stand der Technik einfacher betreiben lässt.

Die Aufgabe der Erfindung wird mit einem automatisierten Lagersystem nach Anspruch 1 gelöst, wobei der erste Warenaufnahmeträger und/oder der zweite Warenaufnahmeträger
- einen ersten Stützabschnitt und einen zweiten Stützabschnitt aufweist, welche in Längsrichtung des Warenaufnahmeträgers mit gegenseitigem Abstand verlaufen und zur Unterstützung eines Hakens eines Kleiderbügels / einer Hängetasche ausgebildet sind, und
- einen Aufnahmeabschnitt aufweist, welcher in Längsrichtung des Warenaufnahmeträgers zwischen dem ersten Stützabschnitt und zweiten Stützabschnitt verläuft und einen sich in Richtung der Stützabschnitte öffnenden Längsschlitz ausbildet und
- die Ein- und Auslagervorrichtung Mitnahmeorgane aufweist, welche zwischen einer Freigabestellung, in welcher die Mitnahmeorgane aus dem Aufnahmeabschnitt zurückgezogen sind, und einer Betätigungsstellung, in welcher die Mitnahmeorgane von oben in den Aufnahmeabschnitt hineinragen, verstellbar sind, wobei die Freigabestellung zur Freigabe der Kleiderbügel / Hängetaschen und die Betätigungsstellung zur Mitnahme der Kleiderbügel / Hängetaschen vorgesehen ist.

Die Aufgabe der Erfindung wird darüber hinaus mit einer Warentransportvorrichtung nach Anspruch 19 gelöst, bei welcher der zweite Warenaufnahmeträger
- einen ersten Stützabschnitt und einen zweiten Stützabschnitt aufweist, welche in Längsrichtung des zweiten Warenaufnahmeträgers mit gegenseitigem Abstand verlaufen und zur Unterstützung eines Hakens eines Kleiderbügels / einer Hängetasche ausgebildet sind,
- einen Aufnahmeabschnitt aufweist, welcher in Längsrichtung des zweiten Warenaufnahmeträgers zwischen dem ersten Stützabschnitt und zweiten Stützabschnitt verläuft und einen sich in Richtung der Stützabschnitte öffnende Längsschlitz ausbildet und
- die Ein- und Auslagervorrichtung Mitnahmeorgane aufweist, welche zwischen einer Freigabestellung, in welcher die Mitnahmeorgane aus dem Aufnahmeabschnitt zurückgezogen sind, und einer Betätigungsstellung, in welcher die Mitnahmeorgane von oben in den Aufnahmeabschnitt hineinragen, verstellbar sind, wobei die Freigabestellung zur Freigabe der Kleiderbügel / Hängetaschen und die Betätigungsstellung zur Mitnahme der Kleiderbügel / Hängetaschen vorgesehen ist.

Auf diese Weise kann sichergestellt werden, dass die Mitnahmeorgane die Kleiderbügel / Hängetaschen in der Betätigungsstellung hintergreifen, da der Haken des Kleiderbügels / der Hängetasche den ersten/zweiten Warenaufnahmeträgers im Bereich des Aufnahmeabschnitts überragt und es so zu einer Überdeckung der Mitnahmeorgane und der Haken kommt. Günstig ist es, wenn die Mitnahmeorgane durch in Richtung zum ersten Warenaufnahmeträger und/oder zweiten Warenaufnahmeträger weisende, stiftförmige Fortsätze gebildet sind. Insbesondere weisen die Mitnahmeorgane nach unten und sind von oben in den Aufnahmeabschnitt hinein bewegbar, beispielsweise in das offene/vertiefte Profil.

Die Aufgabe der Erfindung wird demgemäß auch mit einem Betriebsverfahren nach Anspruch 15 gelöst, bei dem
- die Mitnahmeorgane bei der Bewegung von der Freigabestellung in die Betätigungsstellung von oben in einen Aufnahmeabschnitt des ersten Warenaufnahmeträgers und/oder des zweiten Warenaufnahmeträgers hinein bewegt werden, wobei der erste Warenaufnahmeträger und/oder der zweite Warenaufnahmeträger einen ersten Stützabschnitt und einen zweiten Stützabschnitt aufweist, welche in Längsrichtung des Warenaufnahmeträgers mit gegenseitigem Abstand verlaufen und zur Unterstützung eines Hakens eines Kleiderbügels / einer Hängetasche ausgebildet sind, und wobei der Aufnahmeabschnitt in Längsrichtung des Warenaufnahmeträgers zwischen dem ersten Stützabschnitt und zweiten Stützabschnitt verläuft und einen sich in Richtung der Stützabschnitte öffnenden Längsschlitz ausbildet.

Vorteilhaft ist dabei, dass die Mitnahmeorgane auf jener Seite des ersten/zweiten Warenaufnahmeträgers angeordnet sind, welche den Waren abgewandt ist, das heißt auf der Oberseite des Warenaufnahmeträgers. Auf diese Weise kommen die Mitnahmeorgane keinesfalls mit den Waren in Berührung, womit Beschädigungen derselben vermieden werden. Dadurch ist es möglich, insbesondere auch Kleidungsstücke mit hohem Kragen, zum Beispiel Winterjacken und Wintermäntel, sicher zu transportieren. Darüber hinaus zeichnet sich das vorgestellte Lagersystem durch eine hohe Durchsatzleistung aus, und es kann gegenüber dem Stand der Technik auf einfachere Weise betrieben werden. Die parallele Ausrichtung von einem erstem Warenaufnahmeträger der Warentransportvorrichtung und einem zweiten Warenaufnahmeträger des Lagerregales begünstigt zudem einen einfachen Aufbau einer Ein- und Auslagervorrichtung zur Manipulation der Hängewaren / Hängetaschen.

Durch die Ausbildung des Profils wird der Haken des Kleiderbügels / der Hängetasche gut auf dem Warenaufnahmeträger stabilisiert, wodurch unerwünschte Schwenk- und Wackelbewegungen der auf dem Kleiderbügel aufgehängten Ware oder der Hängetasche mit der darin gelagerten Ware kaum oder nur in geringem Ausmaß auftreten. Insbesondere bilden die geneigt aufeinander zulaufenden Stützabschnitte Sehnen einer den Haken des Kleiderbügels / der Hängetasche bildenden Kurve. Mit anderen Worten sind die schräg verlaufenden Abschnitte hinsichtlich ihrer Neigung und Länge so ausgestaltet, dass sie den Haken eines Kleiderbügels / einer Hängetasche an jeweils zwei und somit insgesamt an vier Punkten berühren.

Der Aufnahmeabschnitt (Eingriffsabschnitt) beziehungsweise Längsschlitz kann nach oben hin offen oder vertieft sein und insbesondere nutförmig ausgebildet sein. Insbesondere ist er durch eine Vertiefung/Sicke gebildet.

Vorteilhaft weist der erste Warenaufnahmeträger und/oder der zweite Warenaufnahmeträger zusätzlich einen ersten Wandabschnitt und einen zweiten Wandabschnitt auf, welche in Längsrichtung des Warenaufnahmeträgers und parallel zu einer im Wesentlichen vertikal auf die betreffende Lagerebene ausgerichtete Symmetrieebene des Warenaufnahmeträgers verlaufen, wobei an den ersten Wandabschnitt der erste Stützabschnitt anschließt und an den zweiten Wandabschnitt der zweite Stützabschnitt anschließt, und wobei der erste Stützabschnitt und zweite Stützabschnitt in Richtung der Symmetrieebene nach oben geneigt aufeinander zulaufen. Mit anderen Worten kann der erste Warenaufnahmeträger und/oder der zweite Warenaufnahmeträger im Querschnitt gesehen einen ersten Stützabschnitt und einen zweiten Stützabschnitt ausbilden, welche zur Unterstützung eines Hakens eines Kleiderbügels / einer Hängetasche ausgebildet sind, und weist einen zwischen dem ersten Stützabschnitt und zweiten Stützabschnitt verlaufenden Aufnahmeabschnitt auf. Dadurch wird die Stabilität des Warenaufnahmeträgers verbessert.

In diesem Zusammenhang ist es auch von Vorteil, wenn an die geneigt aufeinander zulaufenden Stützabschnitte zusätzlich in Richtung der Symmetrieebene aufeinander zulaufende Wandabschnitte anschließen, insbesondere horizontale Wandabschnitte. Auf diese Weise wird die Stabilität des Warenaufnahmeträgers noch einmal verbessert.

Die Symmetrieebene des Warenaufnahmeträgers ist eine Ebene, die zwischen der zweiten Richtung (z) und einer auf die erste Richtung (x) und zweite Richtung (z) rechtwinkelig stehenden dritten Richtung (y) aufgespannt wird. Die erste Richtung (x) und/oder die zweite Richtung (z) kann insbesondere horizontal verlaufen. Die dritte Richtung (y) ist dann insbesondere vertikal ausgerichtet. Die Symmetrieebene des Warenaufnahmeträgers ist demzufolge insbesondere eine y-z-Ebene.

Insbesondere kann der erste Warenaufnahmeträger und/oder der zweite Warenaufnahmeträger ein im Querschnitt gesehen polygonförmiges Profil aufweisen, das im Bereich des Aufnahmeabschnitts nach oben hin offen oder vertieft ist und das einen unteren horizontalen Abschnitt, zwei an den Enden des horizontalen Abschnitts anschließende vertikale Abschnitte und zwei an die vertikalen Abschnitte anschließende, schräg aufeinander zulaufende Abschnitte, welche die Stützabschnitte bilden, umfasst.

Das beschriebene Profil kann auch nur einen Teilbereich des Querschnitts des Warenaufnahmeträgers bilden. Beispielsweise kann der Querschnitt des Warenaufnahmeträgers auch noch einen Bodenabschnitt und insbesondere einen Flanschabschnitt zur Befestigung des Warenaufnahmeträgers an anderen Strukturen des Lagerregals (beispielsweise an dessen Längstraversen) aufweisen.

Der erste Warenaufnahmeträger und/oder der zweite Warenaufnahmeträger weist nicht notgedrungen ein polygonförmiges Profil auf oder umfasst notgedrungen gerade Wandabschnitte. Denkbar ist vielmehr auch, dass der erste Warenaufnahmeträger und/oder der zweite Warenaufnahmeträger ein im Querschnitt gesehen rundes Profil aufweisen, das im Bereich des Aufnahmeabschnitts nach oben hin offen oder vertieft ist. Die Stützabschnitte und/oder Wandabschnitte können demzufolge auch gewölbt (konvex oder konkav) ausgeführt sein.

Bevorzugt ist der Warenaufnahmeträger im Hinblick auf die Stützabschnitte und gegebenenfalls auf die Wandabschnitte im Querschnitt gesehen symmetrisch. Der Warenaufnahmeträger weist im Hinblick auf die Stützabschnitte und gegebenenfalls auf die Wandabschnitte demzufolge eine (vertikal ausgerichtete) Symmetrieebene auf. Dies ist aber keine notwendige Bedingung, der Warenaufnahmeträger kann im Hinblick auf die Stützabschnitte und auf die Wandabschnitte auch asymmetrisch aufgebaut sein.

Eine "Hängetasche" ist allgemein eine Tasche, in welcher Waren beliebiger Art gelagert werden können, und welche mit Hilfe eines Aufhängemittels an einem Träger aufgehängt werden kann. Die Waren werden in der Hängetasche nicht zwingend hängend gelagert, sondern können auch liegend gelagert werden. Demzufolge können in Hängetaschen nicht nur Kleidungsstücke, sondern auch andere Waren aufbewahrt werden, beispielsweise Lebensmittel. Das Aufhängemittel kann ein Haken sein, der so wie der Haken eines Kleiderbügels geformt ist. Das Aufhängemittel kann aber auch anders geformt sein und beispielsweise einen im Warenaufnahmeträger gleitenden Schlitten oder einen im Warenaufnahmeträger rollenden Wagen aufweisen. Ein Beispiel für eine Hängetasche ist beispielsweise in der EP 2 792 620 A1 oder der EP 3 090 967 A2 offenbart.

In diesem Zusammenhang wird auch angemerkt, dass auch der Kleiderbügel nicht notwendigerweise ein hakenförmiges Aufhängemittel aufweisen muss. Das Aufhängemittel kann auch dort anders geformt sein und beispielsweise einen im Warenaufnahmeträger gleitenden Schlitten oder einen im Warenaufnahmeträger rollenden Wagen aufweisen. Im Rahmen der Offenbarung kann der Begriff "Haken" demzufolge gedanklich durch "Aufhängemittel" ersetzt werden.

Generell kann das Lagerregal ortsfest sein, es kann aber auch mobil sein. Ein mobiles Lagerregal kann beispielsweise mit Laufrollen ausgestattet sein.

Der zweite Warenaufnahmeträger ist in der zweiten Richtung (z) quer zum Grundrahmen zum ersten Warenaufnahmeträger hin verstellbar. Denkbar ist aber auch, dass er in einer weiteren Richtung, insbesondere in der dritten Richtung (y) verstellbar ist.

Vorteilhaft ist es nun weiterhin, wenn der Bewegung der Mitnahmeorgane quer zur zweiten Richtung und zum ersten/zweiten Warenaufnahmeträger hin eine Bewegung in der zweiten Richtung überlagert wird. Demgemäß weist das automatisiertes Lagersystem respektive dessen Warentransportvorrichtung vorteilhaft Mittel zur Bewegungssteuerung auf, welche der Bewegung der Mitnahmeorgane quer zur zweiten Richtung und zum ersten/zweiten Warenaufnahmeträger hin eine Bewegung in der zweiten Richtung überlagern. Das heißt, der vertikalen Abwärtsbewegung der Mitnahmeorgane wird eine Seitwärtsbewegung überlagert, beziehungsweise erfolgt die Abwärtsbewegung der Mitnahmeorgane gleichzeitig mit einer Seitwärtsbewegung. Das heißt, die Bewegung der Mitnahmeorgane erfolgt schräg nach unten.

Auf diese Weise wird eine Blockade der Ein- und Auslagervorrichtung verhindert, selbst dann wenn ein Mitnahmeorgan an jener Position abwärts bewegt wird, an der sich der Haken eines Kleiderbügels / einer Hängetasche befindet. Durch die Lateralkomponente der Bewegung des Mitnahmeorgans wird der Kleiderbügel / die Hängetasche zuverlässig zur Seite gedrückt.

Die Mittel für die Bewegungssteuerung beziehungsweise für die genannte Überlagerung von Abwärts- und Seitwärtsbewegung können durch eine mechanische Kopplung gebildet sein (beispielsweise durch eine Kulissenführung) oder durch eine elektronische Steuerung, welche beispielsweise Motoren für die Abwärts- und Seitwärtsbewegung synchron ansteuert.

Vorteilhaft ist es auch, wenn die Bewegung der Mitnahmeorgane alternativ oder zusätzlich quer zur zweiten Richtung und zum ersten/zweiten Warenaufnahmeträger hin an einer anderen Stelle erfolgt als die Bewegung der Mitnahmeorgane quer zur zweiten Richtung und vom ersten/zweiten Warenaufnahmeträger weg. Demgemäß weist das automatisiertes Lagersystem respektive dessen Warentransportvorrichtung vorteilhaft Mittel zur Bewegungssteuerung auf, welche die Bewegung der Mitnahmeorgane quer zur zweiten Richtung und zum ersten/zweiten Warenaufnahmeträger hin an einer anderen Stelle bewirken als die Bewegung der Mitnahmeorgane quer zur zweiten Richtung und vom ersten/zweiten Warenaufnahmeträger weg.

Wird beispielsweise angenommen, dass die Ein- und Auslagervorrichtung die Kleiderbügel / Hängetaschen an einer bestimmten Position abgesetzt hat, so erfolgt die Wiederaufnahme nach der oben angeführten Ausführungsvariante an einer anderen Position. Die Aufwärtsbewegung der Mitnahmeorgane nach dem Absetzen der Kleiderbügel / Hängetaschen erfolgt also an einer anderen Position als die Abwärtsbewegung bei der Wiederaufnahme. Mit anderen Worten ist der Ausfahrweg der Ein- und Auslagervorrichtung beim Einlagern von Hängewaren / Hängetaschen ein anderer als bei Auslagern der Hängewaren / Hängetaschen. Insbesondere ist der Versatz kleiner als der Abstand zwischen zwei benachbarten Mitnahmeorganen. Der Versatz entspricht im Speziellen dem halben Abstand zwischen zwei benachbarten Mitnahmeorganen abzüglich der halben Dicke des Hakens des Kleiderbügels / der Hängetasche.

Grundsätzlich wäre auch denkbar, dass die Ein- und Auslagervorrichtung vor der Aufwärtsbewegung der Mitnahmeorgane etwas von den Kleiderbügeln / Hängetaschen wegbewegt wird. Zwar erfolgt die Bewegung der Mitnahmeorgane quer zur zweiten Richtung und zum ersten Warenaufnahmeträger hin (also die vertikale Abwärtsbewegung) dann an unter Umständen an derselben Stelle wie die Bewegung der Mitnahmeorgane quer zur zweiten Richtung und vom ersten Warenaufnahmeträger weg (also die vertikale Aufwärtsbewegung), jedoch tritt derselbe, wie oben beschriebene Effekt ein. Diese Ausführungsvariante ist also als gleichwirkend einzustufen.

Die Mittel für die Bewegungssteuerung beziehungsweise für den genannten Versatz bei der Aufnahme der Kleiderbügel / Hängetaschen können durch eine mechanische Kopplung gebildet sein oder durch eine elektronische Steuerung, welche beispielsweise die Motoren für die Abwärts- und Seitwärtsbewegung entsprechend ansteuert.

Beide vorgeschlagenen Maßnahmen, also die Überlagerung von Abwärts- und Seitwärtsbewegung und der Versatz bei der Aufnahme der Kleiderbügel / Hängetaschen, verhindern Blockaden der Ein- und Auslagervorrichtung, die zu einer Beschädigung der Ware und auch der Einund Auslagervorrichtung führen können. Beide Maßnahmen können einzeln oder in Kombination angewandt werden. In einer bevorzugten Ausführungsform startet die Abwärtsbewegung der Mitnahmeorgane über den Haken der Kleiderbügel / Hängetaschen, wobei die Bewegung der Mitnahmeorgane schräg nach unten erfolgt. Die während der Seitwärtsbewegung zurückgelegte Distanz entspricht (im Wesentlichen) dem halben Abstand zwischen zwei benachbarten Mitnahmeorganen abzüglich der halben Dicke des Hakens des Kleiderbügels / der Hängetasche.

Günstig ist es, wenn die Mitnahmeorgane rotationssymmetrisch sind und in Richtung zum ersten Warenaufnahmeträger und/oder zweiten Warenaufnahmeträger nach unten hin spitz zulaufen, insbesondere nach unten hin. Die kegelförmige Ausführung der Mitnahmeorgane sorgt dafür, dass die Haken der Kleiderbügel / Hängetaschen bei einer Abwärtsbewegung der Mitnahmeorgane zur Seite geschoben werden, wenn ein Mitnahmeorgan an jener Position nach unten bewegt wird, an der sich ein Haken eines Kleiderbügels / einer Hängetasche befindet. Mit demselben Effekt kann das Mitnahmeorgan natürlich auch keilförmig (und nicht rotationssymmetrisch) ausgebildet sein.

Vorteilhaft ist es, wenn die Mitnahmeorgane in einer dritten Richtung (y) bewegbar sind, das heißt insbesondere vertikal bewegbar. Beispielsweise kann dies dadurch erfolgen, dass eine ausfahrbare Schiene der Ein- und Auslagervorrichtung, an der die Mitnahmeorgane fix montiert sind, vertikal verstellt wird. Denkbar ist aber auch, dass die Mitnahmeorgane gegenüber der Schiene ausfahrbar sind. Beispielsweise können die Mitnahmeorgane elektromechanisch, pneumatisch, hydraulisch oder elektrisch ein- und ausgefahren werden. Eine vertikale Verstellung der ausfahrbaren Schiene der Ein- und Auslagervorrichtung kann dann im Prinzip entfallen, denkbar ist aber auch eine Kombination der vorgeschlagenen Möglichkeiten. Besonders vorteilhaft ist es, wenn die Mitnahmeorgane einzeln (oder auch in Gruppen) angesteuert werden können, da dann die Waren besonders differenziert manipuliert werden können. Beispielsweise können einzelne Waren oder Warengruppen dann besonders elegant vom zweiten Warenaufnahmeträger der Warentransportvorrichtung auf einen ersten Warenaufnahmeträger des Lagers übergeben werden.

Günstig ist es, wenn die Bewegung der Mitnahmeorgane in der dritten (vertikalen) Richtung (y) durch eine Drehbewegung bewirkt wird, da ein Drehlager in der Regel leichter mit hoher Genauigkeit realisiert werden kann als eine Linearführung.

Günstig ist es, wenn die Bewegung der Mitnahmeorgane in der zweiten Richtung eine oszillierende Bewegung ist. Das heißt, dass der Bewegung der Mitnahmeorgane quer zur zweiten Richtung und zum ersten/zweiten Warenaufnahmeträger hin eine oszillierende Bewegung in der zweiten Richtung überlagert wird. Mit anderen Worten wird der Abwärtsbewegung der Mitnahmeorgane eine oszillierende Seitwärtsbewegung beziehungsweise eine laterale Hinund Herbewegung überlagert. Auch dies verhindert wirkungsvoll eine Blockade eines Mitnahmeorgans durch einen Kleiderbügel / eine Hängetasche.

Generell ist es von Vorteil, wenn die Mitnahmeorgane in der Betätigungsstellung positioniert sind, wenn die Warentransportvorrichtung in der ersten Richtung (x) bewegt wird. Das heißt insbesondere, dass die Mitnahmeorgane in der Betätigungsstellung positioniert bleiben, nachdem Waren vom ersten Warenaufnahmeträger des Lagerregals auf den zweiten Warenaufnahmeträger der Warentransportvorrichtung übernommen wurden. Auf diese Weise sind die Waren bei einer Fahrt der Warentransportvorrichtung lagefixiert (oder zumindest in ihrer Bewegung beschränkt) und können nicht vom zweiten Warenaufnahmeträger herunterfallen. Zudem kann auch ein Verdrehen der Hängewaren / Hängetaschen während der Fahrt der Warentransportvorrichtung in x-Richtung beziehungsweise auch ein Abheben der Kleiderbügel vom zweiten Warenaufnahmeträger weitestgehend vermieden werden. Obwohl die vorgeschlagene Vorgangsweise von Vorteil ist, ist dennoch vorstellbar, dass die Mitnahmeorgane in der Freigabestellung positioniert sind, wenn die Warentransportvorrichtung in der ersten Richtung (x) bewegt wird.

Günstig ist es weiterhin, wenn die Ein- und Auslagervorrichtung eine mit dem ersten Warenaufnahmeträger korrespondierende Führung aufweist, insbesondere auf dem ersten Warenaufnahmeträger aufliegende Führungsflächen und/oder Wälzkörper und/oder Rollen. Beispielsweise kann auf dem auskragenden Ende der Ein- und Auslagervorrichtung ein Wälzkörper, eine Rolle oder ein im Warenaufnahmeträger gleitenden Führungsstein angeordnet sein. Dadurch wird die Stabilität der Ein- und Auslagervorrichtung, insbesondere beim Aus- und Einfahren und vor allem im vollständig ausgefahrenen Zustand verbessert, wodurch störende Schwingungen verringert oder sogar vermieden werden. Die Führung wird bevorzugt mit einem Wälzlager oder einer Rolle bewerkstelligt, das/die an der unteren Fläche und/oder an den seitlichen Flächen des Profils des erste Warenaufnahmeträgers im Lagerregal abrollt. Auf diese Weise kann die die Bewegung der Ein- und Auslagervorrichtung in vertikaler und/oder lateraler Richtung begrenzt werden. Grundsätzlich könnte die Führung aber auch durch Gleitflächen gebildet sein, beispielsweise durch einen (quaderförmigen) Körper aus Polytetraflourethylen (PTFE bzw. Teflon), welcher in das Profil des Warenaufnahmeträgers hineinragt und an dessen unterer Fläche und/oder an dessen seitlichen Flächen aufliegt.

Vorteilhaft ist es, wenn der zweite Warenaufnahmeträger an seinem dem ersten Warenaufnahmeträger zugewandten Ende erste und zweite Positionierfortsätze aufweist, die in den ersten Warenaufnahmeträger ragen, wenn der zweite Warenaufnahmeträger an den ersten Warenaufnahmeträger heran bewegt ist, wobei
- der zumindest eine erste Positionierfortsatz so angeordnet ist, dass eine vom ersten Warenaufnahmeträger auf den zweiten Warenaufnahmeträger abwärts gerichtete Stufe entsteht, wenn der erste Positionierfortsatz auf dem ersten Warenaufnahmeträger aufliegt, insbesondere auf einem horizontalen Wandabschnitt des Profils, und
- der zumindest eine zweite Positionierfortsatz so angeordnet ist, dass eine vom zweiten Warenaufnahmeträger auf den ersten Warenaufnahmeträger abwärts gerichtete Stufe entsteht, wenn der zweite Positionierfortsatz auf dem ersten Warenaufnahmeträger aufliegt, insbesondere auf einem horizontalen Wandabschnitt des Profils.

In gleicher Weise ist es von Vorteil, wenn der erste Warenaufnahmeträger an seinem dem zweiten Warenaufnahmeträger zugewandten Ende erste und zweite Positionierfortsätze aufweist, die in den zweiten Warenaufnahmeträger ragen, wenn der zweite Warenaufnahmeträger an den ersten Warenaufnahmeträger heran bewegt ist, wobei
- der zumindest eine erste Positionierfortsatz so angeordnet ist, dass eine vom ersten Warenaufnahmeträger auf den zweiten Warenaufnahmeträger abwärts gerichtete Stufe entsteht, wenn der zweite Warenaufnahmeträger auf dem ersten Positionierfortsatz aufliegt, insbesondere ein horizontaler Wandabschnitt des Profils, und
- der zumindest eine zweite Positionierfortsatz so angeordnet ist, dass eine vom zweiten Warenaufnahmeträger auf den ersten Warenaufnahmeträger abwärts gerichtete Stufe entsteht, wenn der zweite Warenaufnahmeträger auf dem zweiten Positionierfortsatz aufliegt, insbesondere ein horizontaler Wandabschnitt des Profils.

Durch die vorgestellten Maßnahmen wird der zweite Warenaufnahmeträger vertikal auf dem ersten Warenaufnahmeträger, der in aller Regel fix im Lagerregal montiert ist, abgestützt. Denkbar ist auch, dass der zweite Warenaufnahmeträger durch entsprechende Ausbildung der Positionierfortsätze oder durch weitere Positionierfortsätze auch seitlich lagefixiert wird.

Günstig ist es, wenn im Lagerregal im Bereich des ersten Warenaufnahmeträgers eine Durchschubsicherung montiert ist, die eine Öffnung / einen Fortsatz aufweist, welche mit einem Fortsatz / einer Öffnung der Ein- und Auslagervorrichtung zusammenwirkt, wenn die Einund Auslagervorrichtung bis an die Durchschubsicherung heran bewegt ist. Dementsprechend ist es von Vorteil, wenn ein Fortsatz / eine Öffnung auf der Ein- und Auslagervorrichtung in eine Öffnung / auf einen Fortsatz einer im Bereich des ersten Warenaufnahmeträgers montieren Durchschubsicherung bewegt wird. Insbesondere bei weit auskragenden Ein- und Auslagervorrichtungen kann es zu unerwünschten Bewegungen beziehungsweise Schwingungen kommen, die am freien Ende der Ein- und Auslagervorrichtung naturgemäß am stärksten auftreten. Die Bewegung/Schwingung kann dabei in x-Richtung und/oder y-Richtung erfolgen. Durch die vorgeschlagenen Maßnahmen wird in der Endlage der Ein- und Auslagervorrichtung im Wesentlichen eine Lagefixierung in x-Richtung und/oder y-Richtung erreicht.

Vorteilhaft ist es weiterhin, wenn im Bereich des ersten Warenaufnahmeträgers und/oder des zweiten Warenaufnahmeträgers ein Blockierelement angeordnet ist, das in Richtung auf den Warenaufnahmeträger vorragt und insbesondere in die Bewegungsbahn der Kleiderbügel / Hängetaschen hineinragt. Das Blockierelement verhindert, dass die Kleiderbügel / Hängetaschen ungewollt (also ohne Eingriff der Mitnahmeorgane) am ersten und/oder zweiten Warenaufnahmeträger (in z-Richtung) verrutschen, beispielsweise durch Vibrationen im Lagerregal oder durch Vibrationen der Warentransportvorrichtung. Insbesondere werden die Kleiderbügel / Hängetaschen beim Verlagern an dem im Bereich des ersten und/oder zweiten Warenaufnahmeträgers angeordneten Blockierelement vorbei bewegt, sodass die Kleiderbügel / Hängetaschen die gewollte Position beibehalten.

Günstig ist es, wenn das Blockierelement
- im Lagerregal im Bereich eines Endes des ersten Warenaufnahmeträgers angeordnet ist, welches der Warentransportvorrichtung zugewandt ist und/oder
- an zumindest einem Ende des zweiten Warenaufnahmeträgers angeordnet ist, welches dem ersten Warenaufnahmeträgers zugewandt ist und/oder
- im Verlauf des ersten Warenaufnahmeträgers angeordnet ist.

Auf diese Weise wird verhindert, dass die Waren vom ersten oder zweiten Warenaufnahmeträger herunterfallen oder eben im Verlauf des Warenaufnahmeträgers verrutschen.

Günstig ist es, wenn das Blockierelement durch eine Bürste, eine durch die Warentransportvorrichtung betätigte Wippe oder einen durch die Warentransportvorrichtung betätigten Stift gebildet ist, welche/welcher in der Blockierstellung in die Bewegungsbahn der Kleiderbügel ragt. Beispielsweise kann die Wippe oder der Stift elektromagnetisch betätigt sein oder auch mechanisch durch die Warentransportvorrichtung. Eine elektromagnetische Betätigung kommt insbesondere dann in Betracht, wenn das Blockierelement auf dem zweiten Warenaufnahmeträger angeordnet ist. Ist das Blockierelement auf dem ersten Warenaufnahmeträger angeordnet, so kommen insbesondere mechanische Betätigungen in Betracht. Beispielsweise kann an der Ein- und Auslagervorrichtung ein Element (z.B. ein Fortsatz oder Keil) angeordnet sein, welches die am ersten Warenaufnahmeträger angeordnete Wippe beziehungsweise den am ersten Warenaufnahmeträger angeordneten Stift bei der Ausfahrbewegung der Einund Auslagervorrichtung freigibt. Im Falle einer Bürste sind deren Borsten bevorzugt so gestaltet, dass sie beim Verlagern der Hängewaren / Hängetaschen von selbst nachgeben und ein aktive Betätigung der Bürste daher unterbleiben kann. Dennoch kann vorgesehen sein, dass die Bürste aktiv durch die Warentransportvorrichtung betätigt wird.

Bevorzugt ragt die Bürste in den Aufnahmeabschnitt des Warenaufnahmeträgers hinein. Dazu wird die Bürste beispielsweise am Grund einer Nut des Warenaufnahmeträgers angeordnet, wobei die Borsten nach oben weisen. Auf diese Weise kann der Warenaufnahmeträger, insbesondere auf seiner gesamten Länge, mit einer Bürste respektive mit Borsten versehen sein.

Generell wird angemerkt, dass die Bürste nicht notgedrungen Borsten mit zylindrischem Querschnitt aufweisen muss. Denkbar ist vielmehr auch, dass die Borsten beispielsweise einen rechteckförmigen Querschnitt aufweisen können und dann daher Lappen ähneln. Vorteilhaft ist es, wenn auf der Warentransportvorrichtung ein Tiefenmeßsensor angeordnet ist, dessen Erfassungsbereich in die zweite Richtung weist. Beispielsweise kann der Tiefenmeßsensor auf dem Grundrahmen oder auf der Ein- und Auslagervorrichtung der Warentransportvorrichtung angeordnet sein. Mit Hilfe des Tiefenmeßsensors kann ein Erfassungsbereich, der sich ausgehend von der Warentransportvorrichtung in der zweiten Richtung z erstreckt, auf das Vorhandensein eines Objekts überprüft werden. Wird ein nicht erwartetes Objekt im Erfassungsbereich detektiert, wird ein Alarmsignal ausgegeben. Beispielsweise könnten ungewollt Hängewaren / Hängetaschen oder auch Folien, in welche die Hängewaren eingepackt sind, von ersten Warenaufnahmeträgern herunterfallen und auf darunter liegenden ersten Warenaufnahmeträgern liegen bleiben. In diesem Fall könnte es bei einem Ein- oder Auslagervorgang zu Problemen kommen. Vorzugsweise wird der Ein- oder Auslagervorgang daher dann angehalten und ein Alarm an eine übergeordnete Steuerung ausgegeben. Denkbar ist auch, dass ein Ausfahrweg der Ein- und Auslagervorrichtung bzw. Teleskopiereinrichtung mit Hilfe des Tiefenmeßsensors gemessen wird, das heißt die Ein- und Auslagervorrichtung bzw. der Teleskopiereinrichtung in der zweiten Richtung (z) mit Hilfe des Tiefenmeßsensors positioniert wird.

Vorteilhaft ist es weiterhin, wenn ein Warenerfassungssensor zur Erfassung der auf dem ersten Warenaufnahmeträger und/oder dem zweiten Warenaufnahmeträger gelagerten Hängewaren / Hängetaschen auf der Warentransportvorrichtung angeordnet ist. Insbesondere können die Hängewaren / Hängetaschen hinsichtlich ihrer Anzahl und/oder Art/Type erfasst werden. Beispielsweise ist es auf diese Weise möglich, eine bestimmte Anzahl an Mänteln vom ersten Warenaufnahmeträger auf den zweiten Warenaufnahmeträger zu schieben oder umgekehrt. Gleichermaßen ist es vorstellbar, beispielsweise die Mäntel hinsichtlich ihrer Farbe oder aber auch zum Beispiel Mäntel von Hemden zu unterscheiden. Der Warenerfassungssensor kann etwa an einem Ende der Ein- und Auslagervorrichtung bzw. der Teleskopiereinrichtung angeordnet sein, grundsätzlich kann er aber auch an anderer Stelle positioniert sein.

Vorteilhaft ist es darüber hinaus, wenn die Warentransportvorrichtung zumindest einen Warensicherungsbügel umfasst, welcher um eine parallel zur ersten Richtung ausgerichtete Drehachse drehbar an der Warentransportvorrichtung gelagert ist und welcher zwischen einer Freigabestellung, in welcher der Warensicherungsbügel nach oben verschwenkt ist, und einer Sicherungsstellung, in welcher der Warensicherungsbügel nach unten verschwenkt ist, verstellbar ist, wobei die Freigabestellung einen Transfer der Hängewaren / Hängetaschen zwischen dem ersten Warenaufnahmeträger und dem zweiten Warenaufnahmeträger ermöglicht und die Hängewaren / Hängetaschen in der Sicherungsstellung in einem Sicherungsbereich unterhalb der Warentransportvorrichtung gehalten und insbesondere zusammengedrückt sind. Dementsprechend wird der zumindest eine Warensicherungsbügel, welcher um eine parallel zur ersten Richtung ausgerichteten Drehachse drehbar an der Warentransportvorrichtung gelagert ist, beim Transfer der Hängewaren / Hängetaschen zwischen dem ersten Warenaufnahmeträger und dem zweiten Warenaufnahmeträger nach oben in eine Freigabestellung geschwenkt und beim Transport der auf dem zweiten Warenaufnahmeträger gelagerten Hängewaren / Hängetaschen in der ersten Richtung nach unten in eine Sicherungsstellung geschwenkt. Dadurch wird ein Schwingen oder Flattern der Hängewaren / Hängetaschen bei (schneller) Fahrt der Warentransportvorrichtung in der x-Richtung vermieden oder zumindest verringert. Durch variable Schrägstellung der Warensicherungsbügel können diese insbesondere an unterschiedliche Mengen der auf dem zweiten Warenaufnahmeträger zu transportierenden Hängewaren / Hängetaschen angepasst werden.

Besonders vorteilhaft ist es, wenn die Drehachse des zumindest einen Warensicherungsbügels in der zweiten Richtung verschiebbar auf der Warentransportvorrichtung gelagert ist. Durch Verschieben des Warensicherungsbügels kann dieser besonders gut an unterschiedliche Mengen der auf dem zweiten Warenaufnahmeträger zu transportierenden Hängewaren / Hängetaschen angepasst werden.

Generell können die auf dem zweiten Warenaufnahmeträger gelagerte Hängewaren / Hängetaschen in der Sicherungsstellung des zumindest einen Warensicherungsbügel nur durch eine Schwenkbewegung des zumindest einen Warensicherungsbügels oder durch eine kombinierte Schwenk- und Linearbewegung des zumindest einen Warensicherungsbügels in einem Sicherungsbereich unterhalb der Warentransportvorrichtung gehalten und/oder dort zusammengedrückt werden.

Besonders vorteilhaft ist es darüber hinaus, wenn die Drehachse des Warensicherungsbügels beim Schwenken in die Freigabestellung in der zweiten Richtung zur Mitte der Warentransportvorrichtung verschoben wird und beim Schwenken in die Sicherungsstellung in der zweiten Richtung zur Außenseite der Warentransportvorrichtung verschoben wird. Demgemäß umfasst die Warentransportvorrichtung Mittel zur Ausführung einer kombinierten Schwenkund Linearbewegung des zumindest einen Warensicherungsbügels. Der zum Schwenken des Warensicherungsbügels seitlich in z-Richtung benötigte Platz ist bei dieser Ausführungsvariante sehr klein, der zwischen den Warensicherungsbügel befindliche Platz dagegen sehr groß. Demgemäß kann mit dieser Variante der Warentransportvorrichtung eine große Anzahl an Hängewaren / Hängetaschen gesichert werden, ohne dass der Warensicherungsbügel über die Warentransportvorrichtung hinaus geschwenkt werden muss, was zu Kollisionen mit dem ersten Warenaufnahmeträger oder der dort gelagerten Hängewaren / Hängetaschen führen könnte. Für die Ausführung der kombinierten Schwenk- und Linearbewegung der Warensicherungsbügel kann beispielsweise eine Steuerung herangezogen werden, die zu diesem Zweck mit den Antriebsmotoren für die Schwenk- und Linearbewegung verbunden ist.

Der Antrieb der Warensicherungsbügel kann elektrisch, pneumatisch oder hydraulisch erfolgen. Zur Beschränkung der Kraft, mit der die Hängewaren / Hängetaschen zusammengedrückt werden, kann der Strom eines elektrischen Antriebsmotors respektive der Druck eines Pneumatikzylinders/Hydraulikzylinders beschränkt werden. Selbstverständlich können auch Kraftsensoren zum Messen der Kraft, mit der die Hängewaren / Hängetaschen zusammengedrückt werden, eingesetzt werden. Mehrere Warensicherungsbügel können mit getrennten Motoren angetrieben werden, oder mit einem Motor, der mit den Warensicherungsbügeln gekoppelt ist.

Günstig ist es, wenn das Lagerregal vertikale vordere Regalsteher umfasst, vertikale hintere Regalsteher, horizontale vordere Längstraversen, welche an den vorderen Regalstehern befestigt sind, sowie horizontale hintere Längstraversen, welche an den hinteren Regalstehern befestigt sind, wobei sich die ersten Warenaufnahmeträger jeweils in einer Lagerebene horizontal in Tiefenrichtung des Lagerregales zwischen den vorderen Längstraversen und hinteren Längstraversen erstrecken und an diesen befestigt sind. Dadurch kann das Lagerregal mit geringem Materialaufwand aufgebaut werden.

In einer besonders vorteilhaften Ausgestaltung werden die Hängewaren / Hängetaschen mittels der Ein- und Auslagervorrichtung zwischen einem dem Lagerbereich zugeordneten Warenaufnahmeträger und einem der Warentransportvorrichtung zugeordneten Warenaufnahmeträger bewegt, wobei die Warenaufnahmeträger in den Lagerbereichen im Lagerregal verbleiben. Demgemäß werden die Hängewaren / Hängetaschen zwischen den Warenaufnahmeträgern des Lagerbereiches und der Warentransportvorrichtung manipuliert. Dabei können die Hängewaren / Hängetaschen entweder relativ zu den Warenaufnahmeträgern verschoben oder relativ zu den Warenaufnahmeträgern angehoben / abgesenkt werden. Der Kleiderbügel dient mit seinem/ihrem Haken nicht nur dem Aufhängen der Hängeware, sondern auch dem Transport. Durch die vorgeschlagenen Maßnahmen ist auch ein Einzelzugriff oder Gruppenzugriff auf die Hängewaren / Hängetaschen möglich, wodurch Kommissionieraufträge effizient abgearbeitet werden, da nur jene Anzahl an Hängewaren / Hängetaschen ausgelagert werden muss, welche auch benötigt wird, und nicht die komplette Anzahl an Hängewaren / Hängetaschen, die auf einem Warenaufnahmeträger lagert. Außerdem sind Fixiermittel für den ersten Warenaufnahmeträger im Lagerbereich nicht erforderlich, womit sich auch eine kompakte und kostengünstige Bauweise der Lagerregale realisieren lässt.

Von Vorteil ist auch, wenn die Hängewaren / Hängetaschen vor der Einlagerung in das Lagerregal an einer Übergabestation von einem Warenaufnahmeträger übernommen und nach der Auslagerung aus dem Lagerregal an einer Übernahmestation auf einen Warenaufnahmeträger abgegeben werden, und wenn die Hängewaren / Hängetaschen bei der Übernahme und/oder Übergabe mittels der Ein- und Auslagervorrichtung zwischen dem der Warentransportvorrichtung zugeordneten Warenaufnahmeträger und dem der Übergabe- und/oder Übernahmestation zugeordneten Warenaufnahmeträger bewegt werden, wobei der Warenaufnahmeträger an der Übergabe- und/oder Übernahmestation in der Übergabe- und/oder Übernahmestation verbleibt. Die Übergabestation und Übernahmestation können zu beiden Seiten der Warentransportvorrichtung angeordnet werden oder eine kombinierte Übergabe- und Übernahmestation bilden, die auf einer Seite der Warentransportvorrichtung angeordnet ist. Es werden die Hängewaren / Hängetaschen zwischen den Warenaufnahmeträgern der Warentransportvorrichtung und der Übergabe- bzw. Übernahmestation manipuliert. Dabei können die Hängewaren / Hängetaschen entweder relativ zu den Warenaufnahmeträgern verschoben oder relativ zu den Warenaufnahmeträgern angehoben / abgesenkt werden. Die oben genannten Vorteile gelten hier sinngemäß.

Demnach kann das Lagersystem an ein Warenverteilsystem anschließen, welches Warenverteilsystem umfasst
- eine Übergabestation, an welcher einzulagernde Hängewaren / Hängetaschen von der Warentransportvorrichtung abgeholt werden, und
- eine Übernahmestation, an welcher auszulagernde Hängewaren / Hängetaschen abgegeben werden, aufweist,
- wobei die Übergabestation mit zumindest einem Warenaufnahmeträger und/oder die Übernahmestation mit zumindest einem Warenaufnahmeträger ausgestattet sind, und
- wobei die Hängewaren / Hängetaschen bei der Übernahme und/oder Übergabe mittels der Ein- und Auslagervorrichtung zwischen dem der Warentransportvorrichtung zugeordneten Warenaufnahmeträger und dem der Übergabe- und/oder Übernahmestation zugeordneten Warenaufnahmeträger bewegt werden.

Werden die Hängewaren / Hängetaschen im jeweiligen Lagerbereich auf einem Warenaufnahmeträger als Hängewarengruppen / Hängetaschengruppen gelagert, kann in einem Lagerregal in dem vorhandenen Lagervolumen eine hohe Anzahl an Hängewaren / Hängetaschen gelagert und die Warentransportvorrichtung besonders effizient eingesetzt werden. Eine besonders hohe Einlagerleistung und/oder Auslagerleistung wird zudem erreicht, wenn die Hängewaren / Hängetaschen zwischen dem Lagerbereich und der Warentransportvorrichtung oder zwischen der Übergabe- und/oder Übernahmestation und der Warentransportvorrichtung sowie auf der Warentransportvorrichtung als Hängewarengruppe / Hängetaschengruppe transportiert werden.

Von Vorteil ist auch, wenn die Hängewaren / Hängetaschen auf den Warenaufnahmeträgern jeweils eine Hängeebene definieren, welche in einer senkrechten Richtung zu den Warenaufnahmeträgern verlaufen. Die Ebene der Hängewaren / Hängetaschen ist somit parallel zur Fahrrichtung der Warentransportvorrichtung ausgerichtet. Damit kann der Fahrwiderstand reduziert werden, wenn die Hängewaren / Hängetaschen mit der Warentransportvorrichtung in Fahrrichtung bewegt werde. Dies vor allem deswegen, weil zwischen den Hängewaren / Hängetaschen hindurch eine Luftströmung möglich ist. Die Warentransportvorrichtung kann somit noch dynamischer in Fahrrichtung betrieben werden, wodurch die Anlagenleistung gesteigert wird.

Gemäß einer anderen Maßnahme ist es vorgesehen, dass die Hängewaren / Hängetaschen jeweils mit einem definierten Abstand zueinander auf dem Warenaufnahmeträger gelagert und transportiert werden. Dadurch wird die Luftzirkulation zwischen den Hängewaren / Hängetaschen begünstigt, und die Hängewaren / Hängetaschen beziehungsweise die in den Hängetaschen gelagerten Waren verknittern auch nicht.

Besonders vorteilhaft ist es auch, wenn die Ein- und Auslagervorrichtung zumindest eine am Grundrahmen angeordnete Teleskopiereinheit mit einem Tragrahmen und relativ gegenüber dem Tragrahmen verstellbare Schienen umfasst, wobei die Schiene mit dem größten Bewegungsbereich (in der zweiten Richtung z) mit Mitnahmeorganen versehen ist. Durch die Teleskopanordnung können auch tiefe Lagerbereiche erreicht werden.

Es erweist sich auch von Vorteil, wenn
- das ortsfeste Lagerregal in den übereinander liegenden Lagerebenen und innerhalb der Lagerbereiche parallel zur zweiten Richtung (z-Richtung) mit gegenseitigem Abstand verlaufende Führungsschienen umfasst, und
- die Warentransportvorrichtung am Grundrahmen befestigte und parallel zur zweiten Richtung (z-Richtung) mit gegenseitigem Abstand verlaufende Führungsschienen umfasst,
- wobei die Ein- und Auslagervorrichtung als Ein- und Auslagerfahrzeug gestaltet ist, welches über ein Fahrwerk (beispielweise Laufrollen) zwischen der Warentransportvorrichtung und einem Lagerbereich im Lagerregal auf den Führungsschienen verfahrbar und welches mit einem Warenaufnahmeträger ausgestattet ist, wobei der Warenaufnahmeträger einen oder mehrere Kleiderbügel / Hängetaschen ergreift und die Hängewaren / Hängetaschen zwischen dem Lagerbereich und der Warentransportvorrichtung bewegen kann.

Dabei wird die Ein- und Auslagervorrichtung bei der Übergabe von Hängewaren / Hängetaschen auf den Warenaufnahmeträger des Lagerregales und Übernahme von Hängewaren / Hängetaschen auf den Warenaufnahmeträger der Warentransportvorrichtung in z-Richtung oberhalb des Warenaufnahmeträgers im Lagerregal positioniert. Die Übergabe- bzw. Übernahmebewegung ist eine Vertikalbewegung, sodass die Hängewaren / Hängetaschen relativ zum Warenaufnahmeträger des Lagerregales abgesenkt oder angehoben werden. Damit wird eine zuverlässige Übergabe- bzw. Übernahme der Hängewaren / Hängetaschen erreicht.

Die Ein- und Auslagervorrichtung kann also durch ein selbstfahrendes Ein- und Auslagerfahrzeug (ein so genanntes Kanalfahrzeug) gebildet sein, das zum Bewegen der Hängewaren / Hängetaschen zwischen dem ersten Warenaufnahmeträger und dem zweiten Warenaufnahmeträger in z-Richtung in das Lagerregal respektive in die Lagerbereiche des Lagerregals fährt. Der zweite Warenaufnahmeträger ist jedoch an der Warentransportvorrichtung angeordnet. Zwischen der in x-Richtung bewegbaren Warentransportvorrichtung und dem in z-Richtung bewegbaren "Kanalfahrzeug" besteht nicht notwendigerweise eine mechanische Verbindung, wenn das Kanalfahrzeug (vollständig) in das Regal eingefahren ist. Insbesondere kann aber eine elektrische Verbindung zwischen der Warentransportvorrichtung und dem Kanalfahrzeug bestehen, beispielsweise über ein Schleppkabel. Im Speziellen kann das "Kanalfahrzeug" auf die Warentransportvorrichtung aufgenommen werden und von dieser in x-Richtung transportiert werden. Das "Kanalfahrzeug" bildet in diesem Fall ein "Tochterfahrzeug", die Warentransportvorrichtung fungiert als "Mutterfahrzeug".

Schließlich ist auch von Vorteil, wenn die Warentransportvorrichtung ein Einebenenregalbediengerät ist und das Lagersystem einige Einebenenregalbediengeräte aufweist, wobei jedes Einebenenregalbediengerät mit der Ein- und Auslagervorrichtung versehen ist und das Einebenenregalbediengerät einer Lagerebene die Lagerbereiche in dieser Lagerebene bedient. Dabei kann je Lagerebene zumindest ein Einebenenregalbediengerät oder nur in einigen der Lagerebenen jeweils zumindest ein Einebenenregalbediengerät vorgesehen werden. Durch Entkoppelung der Einlager- und Auslagervorgänge mehrerer Einebenenregalbediengeräte können höchste Einlager- und Auslagerleistungen erreicht werden.

Zum besseren Verständnis der Erfindung wird diese anhand der nachfolgenden Figuren näher erläutert.

Es zeigen jeweils in stark vereinfachter, schematischer Darstellung:
- Fig. 1: eine erste Ausführung eines Lagersystems zur Lagerung von Hängeware, in perspektivischer Ansicht;
- Fig. 2: eine Warentransportvorrichtung für das Lagersystem mit einem Warenaufnahmeträger in einer Grundstellung und einer Ein- und Auslagervorrichtung in einer in z-Richtung eingefahrenen Ausgangsstellung, in perspektivischer Ansicht;
- Fig. 3: die Warentransportvorrichtung für das Lagersystem mit einem Warenaufnahmeträger in einer Übergabestellung und einer Ein- und Auslagervorrichtung in einer in z-Richtung ausgefahrenen Übergabestellung, in perspektivischer Ansicht;
- Fig. 4: ein erstes Beispiel eines nach oben hin offenen Warenaufnahmeträgers im Schnitt, bei welchem ein Mitnahmeorgan einer Ein- und Auslagervorrichtung in einer Betätigungsstellung positioniert ist und den Haken eines Kleiderbügels hintergreift;
- Fig. 5: das im Fig. 4 dargestellte Beispiel in einem anderen Zustand, in dem ein Mitnahmeorgan einer Ein- und Auslagervorrichtung in einer Freigabestellung positioniert ist und den Haken eines Kleiderbügels demzufolge nicht mehr hintergreift;
- Fig. 6: ein weiteres Beispiel eines Warenaufnahmeträgers im Schnitt, bei dem das Profil vertieft und nicht offen ist, sowie eine schwenkbare Ein- und Auslagervorrichtung;
- Fig. 7: ein weiteres Beispiel eines Warenaufnahmeträgers im Schnitt, bei dem das Profil verrundet ist beziehungsweise eine Sicke aufweist, sowie eine Ein- und Auslagervorrichtung mit ausfahrbaren Mitnahmeorganen in Betätigungsstellung;
- Fig. 8: das im Fig. 7 dargestellte Beispiel in einem anderen Zustand, in dem Mitnahmeorgane der Ein- und Auslagervorrichtung in der Freigabestellung positioniert sind;
- Fig. 9: ein Beispiel eines Warenaufnahmeträgers mit rundem und nach oben hin offenem Profil im Schnitt;
- Fig. 10: ein weiteres Beispiel eines Warenaufnahmeträgers mit rundem und vertieftem Profil im Schnitt mit einem vertieften Aufnahmeabschnitt;
- Fig. 11: ein Beispiel einer Ein- und Auslagervorrichtung, die mit Hilfe eines Wälzlagers lateral in einem Warenaufnahmeträger geführt ist;
- Fig. 12: ein Beispiel einer Ein- und Auslagervorrichtung, die mit Hilfe eines Wälzlagers vertikal in einem Warenaufnahmeträger geführt ist;
- Fig. 13: ein Beispiel einer Ein- und Auslagervorrichtung, die mit Hilfe eines Wälzlagers vertikal und lateral in einem Warenaufnahmeträger geführt ist;
- Fig. 14: eine Ein- und Auslagervorrichtung und einen Warenaufnahmeträger in Seitenansicht, wobei sich die Ein- und Auslagervorrichtung in der Freigabestellung befindet;
- Fig. 15: die Ein- und Auslagervorrichtung aus Fig. 14 in einem anderen Zustand, in dem sich die Ein- und Auslagervorrichtung in der Betätigungsstellung befindet;
- Fig. 16: die Ein- und Auslagervorrichtung aus Fig. 14 mit einer nach unten schräg verlaufenden Bewegungsrichtung;
- Fig. 17: eine Ein- und Auslagervorrichtung sowie einen ersten Warenaufnahmeträger und einen zweiten Warenaufnahmeträger in Seitenansicht, wobei sich die Ein- und Auslagervorrichtung in Betätigungsstellung befindet;
- Fig. 18: eine Detailansicht eines ersten Warenaufnahmeträgers und eines zweiten Warenaufnahmeträgers von der Seite in einem Zustand, in dem sich der zweite Warenaufnahmeträger in seiner Ruhestellung befindet;
- Fig. 19: die Detailansicht aus Fig. 18 in einem Zustand, in dem sich der zweite Warenaufnahmeträger in einer Betätigungsstellung befindet und den Warentransfer vom zweiten Warenaufnahmeträger auf den ersten Warenaufnahmeträger ermöglicht;
- Fig. 20: die Detailansicht aus Fig. 18 in einem Zustand, in dem sich der zweite Warenaufnahmeträger in einer Betätigungsstellung befindet und den Warentransfer vom ersten Warenaufnahmeträger auf den zweiten Warenaufnahmeträger ermöglicht;
- Fig. 21: eine Ein- und Auslagervorrichtung und einen Warenaufnahmeträger in Seitenansicht, wobei sich die Ein- und Auslagervorrichtung im Eingriff mit einer im Bereich des Warenaufnahmeträgers montierten Durchschubsicherung befindet;
- Fig. 22: einen Warenaufnahmeträger in Draufsicht, in dessen Verlauf eine in den Bewegungsbereich der Kleiderbügel ragende Bürste angeordnet ist;
- Fig. 23: einen beispielhaften Warenaufnahmeträger im Schnitt, in dessen Bereich eine Bürste angeordnet ist, die in den Bewegungsbereich eines Kleiderbügels ragt;
- Fig. 24: einen beispielhaften Warenaufnahmeträger im Schnitt, welcher eine am Grund einer Nut des Warenaufnahmeträgers angeordnet Bürste aufweist, deren Borsten nach oben gerichtet sind und in den Bewegungsbereich eines Kleiderbügels ragen;
- Fig. 25: eine zweite Ausführung einer Warentransportvorrichtung mit einer alternativen Ein- und Auslagervorrichtung in Vorderansicht;
- Fig. 26: einen Ausschnitt aus einer zweiten Ausführung eines Lagersystems zur Lagerung von Hängeware, in dem die in Fig. 25 offenbarte Warentransportvorrichtung eingesetzt wird, in Draufsicht;
- Fig. 27: einen Ausschnitt aus der zweiten Ausführung eines Lagersystems mit einer Übergabestation, einer Übernahmestation und einem Vertikalförderer in Draufsicht;
- Fig. 28: einen Ausschnitt aus der zweiten Ausführung eines Lagersystems in einem Zustand, in dem die Warentransportvorrichtung bereit für einen Warentransfer vor dem Regal positioniert ist;
- Fig. 29: eine beispielhafte Warentransportvorrichtung mit einer Steuerung des Teleskopiermotors und der Hubmotoren sowie mit Tiefenmeßsensoren und Warenerfassungssensoren;
- Fig. 30: eine beispielhafte Warentransportvorrichtung mit Sicherungsbügeln in perspektivischer Ansicht;
- Fig. 31: die Warentransportvorrichtung aus Fig. 30 in schematisierter Vorderansicht;
- Fig. 32: eine beispielhafte Warentransportvorrichtung mit Sicherungsbügeln, die in der Sicherungsstellung schräg stehen und
- Fig. 33: eine beispielhafte Warentransportvorrichtung mit Sicherungsbügeln, die mit einer kombinierten Schwenk- und Linearbewegung zwischen einer Freigabestellung und einer Sicherungsstellung verstellt werden.

Einführend sei festgehalten, dass in den unterschiedlich beschriebenen Ausführungsformen gleiche Teile mit gleichen Bezugszeichen bzw. gleichen Bauteilbezeichnungen versehen werden. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

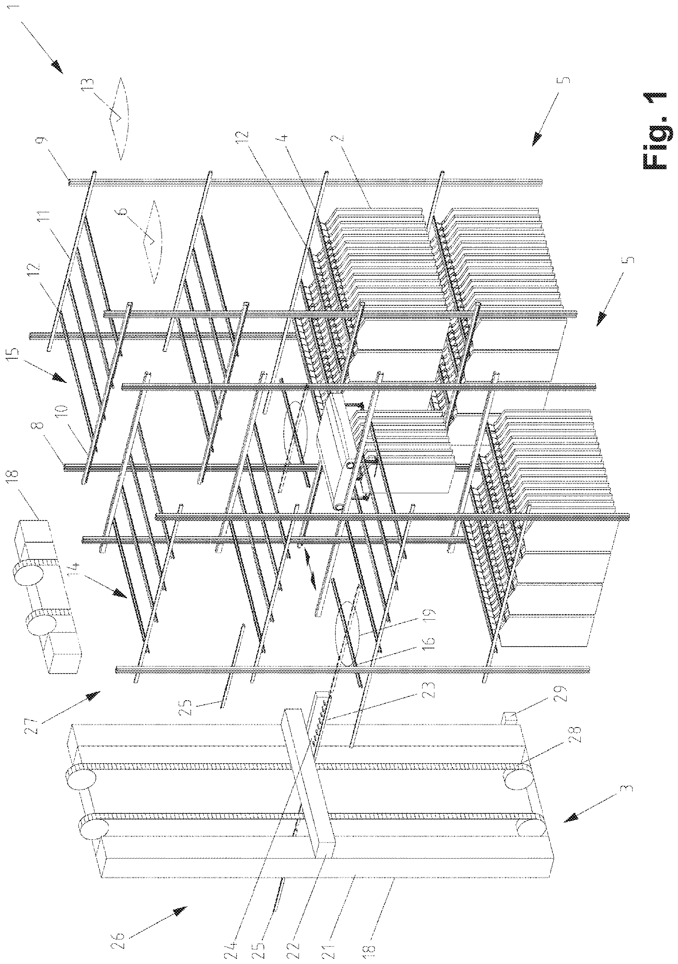

Fig. 1 zeigt eine erste Ausführung eines automatisierten Lagersystems 1 zur Lagerung hängender Waren 2 (im nachfolgenden Hängewäre genannt) und ein automatisiertes Warenverteilsystem 3 in perspektivischer Ansicht. Die Waren 2 sind beispielweise Kleidungsstücke, die auf Kleiderbügeln 4 hängen. Das Warenverteilsystem 3 umfasst die nachfolgend beschriebene Übergabe- und Übernahmestation 14, 15 und den/die Vertikalförderer 18. Es sei darauf hingewiesen, dass der Vertikalförderer 18 aus Gründen der besseren Übersicht nur teilweise dargestellt ist. Auch sind die Warenaufnahmeträger 16 der Übergabe- und Übernahmestation 14, 15 aus Gründen der besseren Übersicht nur in einer der Lagerebenen dargestellt.

Das Lagersystem 1 umfasst nach gezeigter Ausführung Lagerregale 5 und in übereinander liegenden Fahrebenen 6 vor den Lagerregalen 5 in einer ersten Richtung (x-Richtung) unabhängig voneinander verfahrbare Warentransportvorrichtungen 7. Die Warentransportvorrichtungen 7 dienen dem Einlagern der Waren 2 in das Lagerregal 5 bzw. Auslagern der Waren 2 aus dem Lagerregal 5. In Fig. 1 ist aus Gründen der besseren Übersicht nur eine einzige Warentransportvorrichtung 7 gezeigt. Üblicherweise ist ein solches Lagersystem 1 in jeder Fahrebene 6 mit einer Warentransportvorrichtung 7 versehen. Es können aber auch weniger Warentransportvorrichtungen 7 als Fahrebenen 6 vorhanden sein, wobei dann die Warentransportvorrichtungen 7 über eine nicht dargestellte Hebevorrichtung zwischen den Fahrebenen 6 umgesetzt werden kann.

Die Lagerregale 5 umfassen vertikale vordere Regalsteher 8, vertikale hintere Regalsteher 9, vordere Längstraversen 10, hintere Längstraversen 11 und Warenaufnahmeträger 12. Die vorderen Längstraversen 10 verlaufen horizontal in x-Richtung und sind an den vorderen Stehern 8 befestigt, wobei die paarweise einander gegenüberliegenden vorderen Längstraversen 10 jeweils eine Fahrebene 6 ausbilden, entlang welcher die Warentransportvorrichtung 7 bewegt wird. Die vorderen Längstraversen 10 bilden somit je Fahrebene 6 Führungsschienen für die Warentransportvorrichtung 7. Die hinteren Längstraversen 11 verlaufen horizontal in x-Richtung und sind an den hinteren Stehern 9 befestigt.

Die Warenaufnahmeträger 12 erstrecken sich jeweils in einer Lagerebene 13 horizontal in Tiefenrichtung des Lagerregales 5 (z-Richtung) zwischen den vorderen Längstraversen 10 und hinteren Längstraversen 11, wobei die Waren 2 über die Kleiderbügeln 4 an den Warenaufnahmeträgern 12 aufgehängt werden. Die Warenaufnahmeträger 12 sind ortsfest im Lagerregal 5 angeordnet, beispielsweise an den Längstraversen 10, 11 angeschraubt. Das Lagerregal 5 und der Warenaufnahmeträger 12 können aber auch mobil sein, wenn das Lagerregal 5 beispielsweise auf Laufrollen steht. Jeder Warenaufnahmeträger 12 bildet einen Lagerplatz, wobei an einem Lagerplatz eine Vielzahl von Waren 2 gelagert werden können. Somit bildet jedes Lagerregal 1 in den übereinander liegenden Lagerebenen 13 jeweils nebeneinander eine Vielzahl von Lagerplätzen bzw. Lagerbereichen aus.

Wie in Fig. 1 schematisch gezeigt ist, umfasst das Lagersystem 1 ferner eine Übergabestation 14, entlang welcher die vorderen Längstraversen 10 je Fahrebene 6 verlaufen und an welcher einzulagernde Hängewaren 2 von der Warentransportvorrichtung 7 abgeholt werden, und eine Übernahmestation 15, entlang welcher die vorderen Längstraversen 10 je Fahrebene 6 verlaufen und an welcher auszulagernde Hängewaren 2 von der Warentransportvorrichtung 7 abgegeben werden. Die Übergabe- und Übergabestation 14, 15 dienen als Puffer zwischen einem Vertikalförderer 18 und der Warentransportvorrichtung 7.

In diesem Ausführungsbeispiel weisen die Übergabestation 14 und Übernahmestation 15 je Lagerebene 13 zumindest einen Warenaufnahmeträger 16 auf. Es kann aber auch mehr als ein Warenaufnahmeträger 16 vorgesehen werden. Beispielweise können die Übergabestation 14 und Übernahmestation 15 je Lagerebene 13 zwei Warenaufnahmeträger 16 aufweisen. Sind die Übergabestation 14 und Übernahmestation 15 zu beiden Seiten der Warentransportvorrichtung 7 angeordnet, ist je Lagerebene 13 ein Warenaufnahmeträger 16 in der Übergabestation 14 und je Lagerebene 13 ein Warenaufnahmeträger 16 in der Übernahmestation 15 angeordnet. Eine solche Ausführung ist insbesondere dann von Vorteil, wenn eine hohe Leistung gefordert ist.

Die Warenaufnahmeträger 16 der Übergabestation 14 sind jeweils über einen Stellantrieb zwischen einer Aufnahmestellung (wie in strichlierten Linien eingetragen) und einer Übergabestellung (wie in vollen Linien eingetragen) verstellbar, wobei in der Aufnahmestellung Ware 2 von einem noch näher zu beschreibenden Vertikalförderer 18 auf den Warenaufnahmeträger 16 übernommen und in der Übergabestellung Ware 2 vom Warenaufnahmeträger 16 an die Warentransportvorrichtung 7 übergeben werden kann.

Der Stellantrieb umfasst eine über einen Antriebsmotor (nicht dargestellt) um eine Vertikalachse drehbare Montageplatte 19, auf welcher der zumindest eine Warenaufnahmeträger 16 montiert ist. Der zumindest eine Warenaufnahmeträger 16 verläuft in der Aufnahmestellung parallel zu den Warenaufnahmeträgern 12 und in der Übergabestellung senkrecht zu den Warenaufnahmeträgern 12.

Die Warenaufnahmeträger 16 der Übernahmestation 15 sind jeweils über einen Stellantrieb zwischen einer Übernahmestellung (wie in vollen Linien eingetragen) und einer Abgabestellung (wie in strichlierten Linien eingetragen) verstellbar, wobei in der Übernahmestellung Ware 2 von der Warentransportvorrichtung 7 auf den Warenaufnahmeträger 16 übernommen und in der Abgabestellung Ware 2 von dem Warenaufnahmeträger 16 an einen noch näher zu beschreibenden Vertikalförderer 18 übergeben werden kann. Der Stellantrieb umfasst eine über einen Antriebsmotor (nicht dargestellt) um eine Vertikalachse drehbare Montageplatte 19, auf welcher der zumindest eine Warenaufnahmeträger 16 montiert ist. Der zumindest eine Warenaufnahmeträger 16 verläuft in der Übernahmestellung parallel zu den Warenaufnahmeträgern 12 und in der Abgabestellung senkrecht zu den Warenaufnahmeträgern 12.

Der Warenaufnahmeträger 16 der Übergabe- bzw. Übernahmestation 14, 15 ist nach gezeigter Ausführung wie der Warenaufnahmeträger 12 des Lagerregales 5 gestaltet.

Der Vertikalförderer 18 verbindet die Lagerebenen 13 mit zumindest einer Fördertechnikebene und ist in der Verlängerung der Lagerregale 5 angeordnet. Dabei kann der erste Vertikalförderer 18 stirnseitig vor der Übergabestation 14 und der zweite Vertikalförderer 18 stirnseitig vor der Übernahmestation 15 angeordnet werden. Andererseits kann der erste Vertikalförderer 18 auch in das erste Lagerregal 5 und der zweite Vertikalförderer 18 auch in das zweite Lagerregal 5 integriert angeordnet werden, sodass in x-Richtung vor und nach dem Vertikalförderer 18 Lagerplätze angeordnet sind, wie dies jedoch nicht dargestellt ist.

Die Vertikalförderer 18 umfassen jeweils einen Führungsrahmen 21, einen heb- und senkbaren Hubrahmen 22, zumindest einen Warenaufnahmeträger 23 und eine Warenübergabevorrichtung 24. Der zumindest eine Warenaufnahmeträger 23 ist am Hubrahmen 22 befestigt und verläuft parallel zur x-Richtung. Der Warenaufnahmeträger 23 des Vertikalförderers 18 ist nach gezeigter Ausführung wie der Warenaufnahmeträger 12 des Lagerregales 5 gestaltet.

Die Ware 2 kann mittels der Warenübergabevorrichtung 24 zwischen dem Warenaufnahmeträger 16 der Übergabe- bzw. Übernahmestation 14, 15 und dem Warenaufnahmeträger 23 am Vertikalförderer 18 gefördert werden. Auch kann es vorgesehen werden, dass die Ware 2 mittels der Warenübergabevorrichtung 24 zwischen dem Warenaufnahmeträger 23 am Vertikalförderer 18 und einem Warenaufnahmeträger 25 einer Fördertechnik 26, 27 gefördert werden.

Der Führungsrahmen 21 ist durch vertikale Rahmenteile, eine diese miteinander verbindende untere Traverse und eine diese miteinander verbindende obere Traverse gebildet. Die vertikalen Rahmenteile sind jeweils mit einer Führungsvorrichtung versehen, an welcher der Hubrahmen 22 über Führungsorgane gelagert ist. Bevorzugt sind die Führungsorgane durch Führungsräder gebildet, welche an Führungsbahnen der Führungsvorrichtung abrollbar aufliegen.

Der Hubrahmen 22 ist mit einer Verstellvorrichtung gekoppelt, welche nach gezeigtem Ausführungsbeispiel einen am Führungsrahmen 21 gelagerten Zugmitteltrieb 28 und zumindest einen Hubantrieb 29 umfasst. Der Zugmitteltrieb 28 umfasst synchron angetriebene, endlos umlaufende Zugmittel, welche jeweils um ein (oberes) Umlenkrad und ein mit dem Hubantrieb gekuppeltes (unteres) Antriebsrad geführt sind. Das Zugmittel ist beispielsweise durch einen Zahnriemen, eine Kette oder dgl. gebildet. Der Hubantrieb 29 ist bevorzugt durch einen Elektromotor, insbesondere einen Asynchronmotor, Synchronmotor und dgl., gebildet und am Führungsrahmen 21 gelagert. Durch Drehbewegung der Antriebsräder wird der Hubrahmen 22 mit dem Warenaufnahmeträger 23 relativ zu den Lagerebenen 13 in vertikaler Richtung (y-Richtung) bewegt.

Der erste Vertikalförderer 18 schließt an eine erste Fördertechnik zum Antransport von Waren 2 und der zweite Vertikalförderer 18 schließt an eine zweite Fördertechnik zum Abtransport von Waren 2 an. Die erste Fördertechnik 26 und zweite Fördertechnik 27 sind bevorzugt automatisiert betrieben.

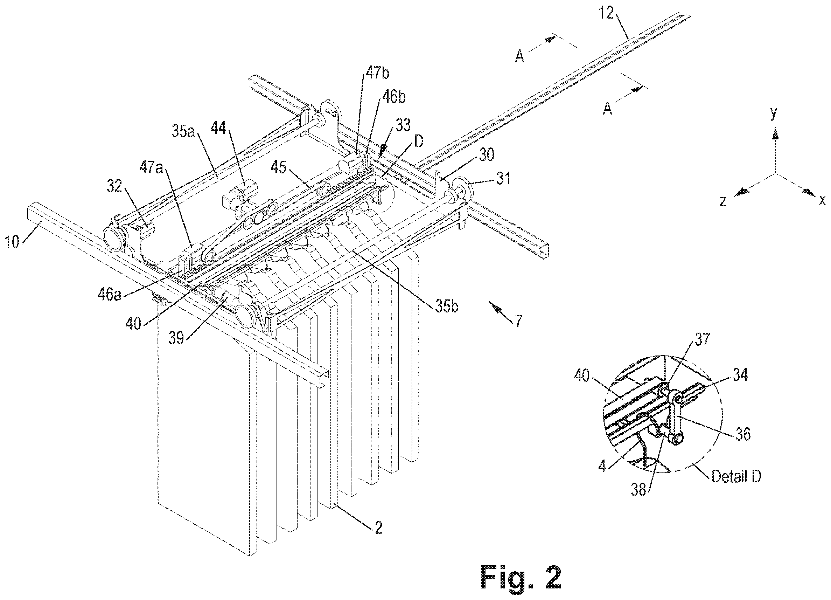

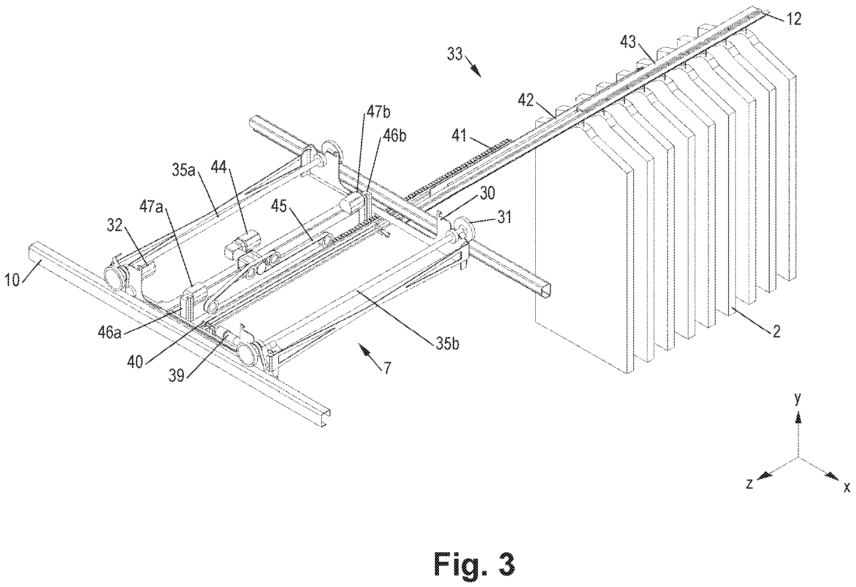

In den Fig. 2 und 3 sind die vorderen Längstraversen 10 einer der Fahrebenen 6, die Warentransportvorrichtung 7 und ein Lagerplatz mit einem ersten Warenaufnahmeträger 12 in perspektivischer Ansicht gezeigt. Die Fig. 2 zeigt einen Zustand, in dem die Waren 2 im Bereich der Warentransportvorrichtung 7 befindlich sind, und die Fig. 3 zeigt einen Zustand, in dem die Waren 2 an den ersten Warenaufnahmeträger 12 des Lagerplatzes übergeben sind.

Die Warentransportvorrichtung 7, ist nach dieser Ausführung durch ein Einebenenregalbediengerät gebildet und weist einen Grundrahmen 30, Laufräder 31, einen Fahrmotor 32, eine Ein- und Auslagervorrichtung 33 und einen zweiten Warenaufnahmeträger 34 auf. Die Laufräder 31 sind an den beiden Längsseiten des Grundrahmens 30 angeordnet. Der Grundrahmen 30 ist in den Figuren 2 und 3 aufgebrochen dargestellt, sodass der Blick in das Innere der Warentransportvorrichtung 7 ermöglicht ist.

Der Fahrantrieb umfasst nach einer möglichen ersten Ausführung die Laufräder 31, den elektrischen Fahrmotor 32, Antriebswellen 35a, 35b sowie einen in den Fig. 2 und 3 nicht explizit dargestellten Riementrieb. Über die Antriebswelle 35a werden die hinteren Laufräder 31 angetrieben. Gleichzeitig wird die Antriebsleistung des Fahrmotors 32 mit Hilfe eines Riementriebs auf die Antriebswelle 35b und damit auf die vorderen Laufräder 31 übertragen. Denkbar ist natürlich auch, dass nur die hinteren Laufräder 31 angetrieben sind, wodurch der Riementrieb und gegebenenfalls auch die Antriebswelle 35b entfallen kann. Denkbar ist auch, dass je einem angetriebenen Laufrad 31 je ein Fahrmotor 32 zugeordnet ist.

Wie aus den Figuren 2 und 3 ersichtlich ist, ist der zweite Warenaufnahmeträger 34 als Hubleiste gestaltet, welche in z-Richtung verläuft und mittels einer Verstellvorrichtung zwischen einer Grundstellung und einer ersten/zweiten Übergabestellung verstellbar ist. Die Verstellvorrichtung umfasst einen Schwenkhebel 36 (siehe die Detaildarstellung D), welcher mit Hilfe eine Achse 37 an einem (nicht dargestellten) Rahmenprofil des Grundrahmens 30 drehbar gelagert ist. An seinem unteren Ende ist der Schwenkhebel 36 mit Hilfe einer Achse 38 drehbar mit dem zweiten Warenaufnahmeträger 34 verbunden. An seinem dem Motor 39 zugewandten Ende ist der zweite Warenaufnahmeträger 34 mit einer gleichartigen Konstruktion gelagert. Mit Hilfe eines Riemens 40 wird die Antriebskraft des Motors 39 auf die beiden Schwenkhebel 36 übertragen, wodurch der zweite Warenaufnahmeträger 34 bei Drehung der Schwenkhebel 36 eine kombinierte Hubbewegung in y-Richtung und eine Bewegung zum ersten Warenaufnahmeträger 12 hin gegen die z-Richtung ausführt.

Die Ein- und Auslagervorrichtung 33 umfasst nach diesem Ausführungsbeispiel eine auf dem Grundrahmen 30 angeordnete und aus einer Ausgangsstellung nach beiden z-Richtungen ausfahrbare Teleskopiereinheit, sodass in die zu beiden Seiten der Warentransportvorrichtung 7 angeordneten Lagerregale 5 Waren 2 eingelagert bzw. Waren 2 ausgelagert werden können. Die Teleskopiereinheit weist in diesem Beispiel relativ gegenüber einem Tragrahmen horizontal in z-Richtung ein- bzw. ausfahrbare Schienen 41, 42, 43 auf.

Die erste Schiene 41 ist verschiebbar am Tragrahmen gelagert, die zweite Schiene 42 ist verschiebbar an der ersten Schiene 41 gelagert, und die dritte Schiene 43 ist verschiebbar an der zweiten Schiene 42 gelagert. Die erste Schiene 40 kann mit einer am Tragrahmen gelagerten Antriebsvorrichtung relativ gegenüber dem Tragrahmen bewegt werden. Die Antriebsvorrichtung umfasst einen Teleskopiermotor 44 sowie ein endlos umlaufendes Zugmittel 45, das beispielsweise durch einen Zahnriemen eine Kette oder dgl. gebildet ist. Mit Hilfe des Teleskopiermotors 44 und des Zugmittels 45 wird die erste Schiene 40 abhängig von der Drehrichtung des Teleskopiermotors 44 entweder in z-Richtung oder gegen die z-Richtung ausgefahren.

Die zweite Schiene 42 und die dritte Schiene 43 sind mit der ersten Schiene 41 bewegungsgekoppelt, sodass eine Bewegung der ersten Schiene 40 in z-Richtung ein teleskopisches Einbeziehungsweise Ausfahren der zweiten Schiene 42 und der dritten Schiene 43 bewirkt. Ein teleskopisches Ein- und Ausfahren eines Arms ist prinzipiell bekannt und wird daher untenstehend nur in seinen Grundzügen erläutert.

Beispielsweise ist ein erster Riemen um eine an der ersten Schiene 41 gelagerte (vordere) erste Rolle umgelenkt und mit seinem ersten Ende am Tragrahmen und mit seinem zweiten Ende an der zweiten Schiene 42 befestigt. Ein zweiter Riemen ist um eine an der ersten Schiene 41 gelagerte (hintere) zweite Rolle umgelenkt und mit seinem ersten Ende am Tragrahmen und mit seinem zweiten Ende an der zweiten Schiene 42 befestigt. Wird die erste Schiene 41 durch den Teleskopiermotor 44 bewegt, so wird auch die zweite Schiene 42 über die genannten Riemen mit bewegt, also entweder ein- bzw. ausgefahren.

Ferner ist ein weiterer Riemen um eine an der zweiten Schiene 42 gelagerte (vordere) erste Rolle umgelenkt und mit seinem ersten Ende an der ersten Schiene 41 und mit seinem zweiten Ende an der dritten Schiene 43 befestigt. Ein zweiter Riemen ist um eine an der zweiten Schiene 41 gelagerte (hintere) zweite Rolle umgelenkt und mit seinem ersten Ende an der ersten Schiene 41 und mit seinem zweiten Ende an der dritten Schiene 43 befestigt. Somit wird mit der Bewegung der zweiten Schiene 42 auch die dritte Schiene 43 über die genannten Riemen mit bewegt, also entweder ein- bzw. ausgefahren.

Das vorgestellte Prinzip ist natürlich nicht auf drei Schienen 41, 42, 43 beschränkt, sondern kann auf jede andere Zahl von Schienen übertragen werden.

Die Ein- und Auslagervorrichtung 33 bzw. die Teleskopiereinheit ist mit einer Verstellvorrichtung gekoppelt, mittels welcher die Ein- und Auslagervorrichtung 33 bzw. die Teleskopiereinheit in y-Richtung zwischen einer Freigabestellung und einer Betätigungsstellung verstellt werden kann. Zu diesem Zweck ist die Ein- und Auslagervorrichtung 33 bzw. die Teleskopiereinheit in diesem Ausführungsbeispiel in zwei vertikalen Führungen 46a, 46b in y-Richtung verschiebbar gelagert und kann mit den Hubmotoren 47a, 47b auf und ab bewegt werden. Die Ein- und Auslagervorrichtung 33 bzw. die Teleskopiereinheit können also in z-Richtung und/oder in y-Richtung bewegt werden.

In dem dargestellten Beispiel sind die Hubmotoren 47a, 47b als Rotationsmotoren ausgebildet. Dies ist aber keine notwendige Voraussetzung, sondern die Hubmotoren 47a, 47b können auch als Linearmotoren ausgebildet sein, das heißt beispielsweise als elektromagnetische Linearantriebe, Pneumatikzylinder oder Hydraulikzylinder.

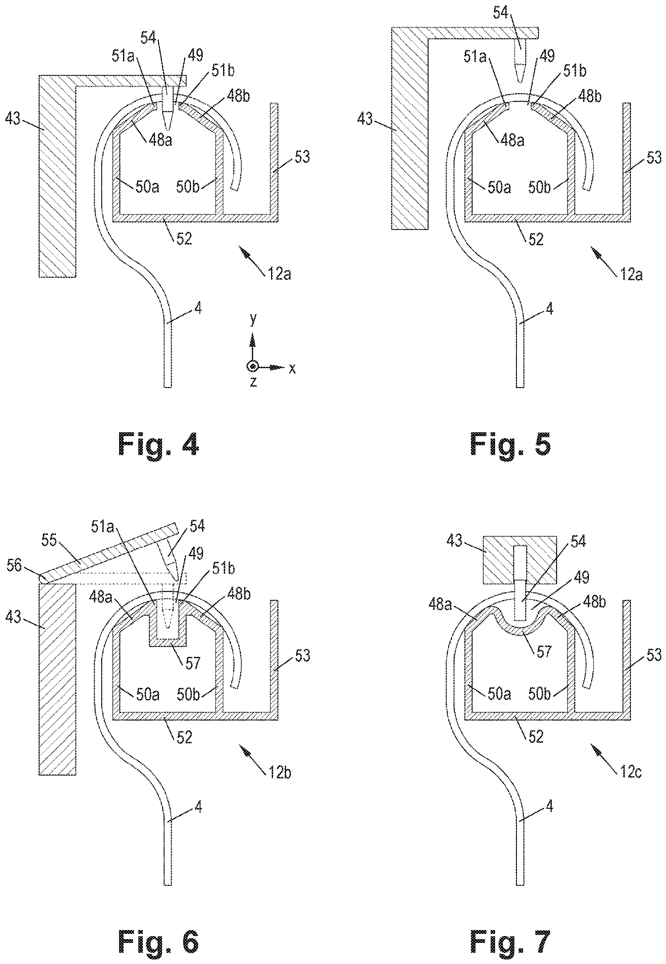

In der Freigabestellung sind Mitnahmeorgane zur Mitnahme der Kleiderbügel 4 aus dem Bewegungsweg der Kleiderbügel 4 heraus bewegt. In der Betätigungsstellung sind die Mitnahmeorgane in den Bewegungsweg der Kleiderbügel 4 hinein bewegt, sodass die Mitnahmeorgane die Kleiderbügel 4 der Ware 2 hintergreifen und diese bei einer Bewegung der Ein- und Auslagervorrichtung 33 bzw. die Teleskopiereinheit in z-Richtung mit bewegen. Die Mitnahmeorgane sind in den Figuren 2 und 3 nicht konkret dargestellt, werden aber im Rahmen der Figuren 5-17 näher erläutert.

Vorteilhaft ist es, wenn die Warentransportvorrichtung 7 mit einer Warentransportsicherung ausgestattet ist, welche die auf dem Warenaufnahmeträger 34 über Kleiderbügel 4 aufgehängte Ware 2 während der Bewegungsfahrt der Warentransportvorrichtung 7 in z-Richtung fixiert. Damit kann ein unerwünschtes Flattern und Verdrehen der Waren 2 gegenüber dem Warenaufnahmeträger 34 während der Bewegungsfahrt der Warentransportvorrichtung 7 in z-Richtung begrenzt beziehungsweise vermieden werden. Gegebenenfalls kann die Ware 2 für diesen Zweck auch geringfügig zusammengepresst werden, um den angegebenen Effekt noch zu verstärken.

Die Warentransportsicherung kann beispielsweise schwenkbare, L-förmige Warensicherungsfinger aufweisen, die an einander gegenüberliegenden Längsseiten der Warentransportvorrichtung 7 angeordnet sind und beispielwiese um eine in z-Richtung verlaufende Drehachse (oder aber auch um eine in y-Richtung oder x-Richtung verlaufende Drehachse) schwenkbar gelagert sind. Solche Warensicherungsfinger sind in der Fig. 1 schematisch dargestellt.

In der Freigabestellung sind die Warensicherungsfinger aus dem in z-Richtung verlaufenden Bewegungsweg der Waren 2 heraus bewegt. In der Sicherungsstellung sind die Warensicherungsfinger in den in z-Richtung verlaufenden Bewegungsweg der Waren 2 hinein bewegt, sodass die Warensicherungsfinger entweder die Kleiderbügel 4 oder die Waren 2 hintergreifen. Werden Waren 2 zwischen der Warentransportvorrichtung 7 und dem Lagerregal 5 oder der Warentransportvorrichtung 7 und der Übergabe- bzw. Übernahmestation 14, 15 gefördert, so werden zuvor die Warensicherungsfinger in die Freigabestellung bewegt.

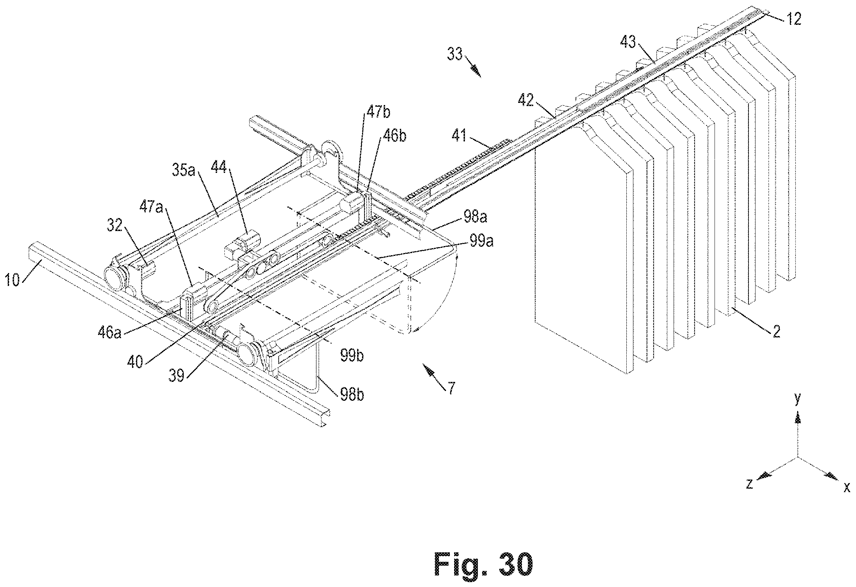

Die Warentransportsicherung kann beispielsweise auch durch an einander gegenüberliegenden Längsseiten der Warentransportvorrichtung 7 angeordnete, U-förmige Warensicherungsbügel gebildet sein, die um eine in x-Richtung verlaufende Drehachse schwenkbar gelagert sind (siehe auch Fig. 30-33).

In der Freigabestellung sind diese Warensicherungsbügel wiederum aus dem in z-Richtung verlaufenden Bewegungsweg der Waren 2 heraus bewegt. In der Sicherungsstellung sind die Warensicherungsbügel in den in z-Richtung verlaufenden Bewegungsweg der Waren 2 hinein bewegt, sodass die Warensicherungsbügel die Waren 2 hintergreifen. Werden Waren 2 zwischen der Warentransportvorrichtung 7 und dem Lagerregal 5 oder der Warentransportvorrichtung 7 und der Übergabe- bzw. Übernahmestation 14, 15 gefördert, so werden zuvor die Warensicherungsbügel in die Freigabestellung bewegt.

Sowohl die um eine in z-Richtung verlaufende Drehachse gelagerten Warensicherungsfinger als auch die um eine in x-Richtung verlaufende Drehachse gelagerten Warensicherungsbügel können, je nachdem wie viele Waren 2 auf dem zweiten Warenaufnahmeträger 34 gelagert sind mehr oder weniger stark nach innen geschwenkt werden, um die Waren 2 sicher zu fixieren, auch wenn nur wenige Waren 2 am zweiten Warenaufnahmeträger 34 gelagert sind.

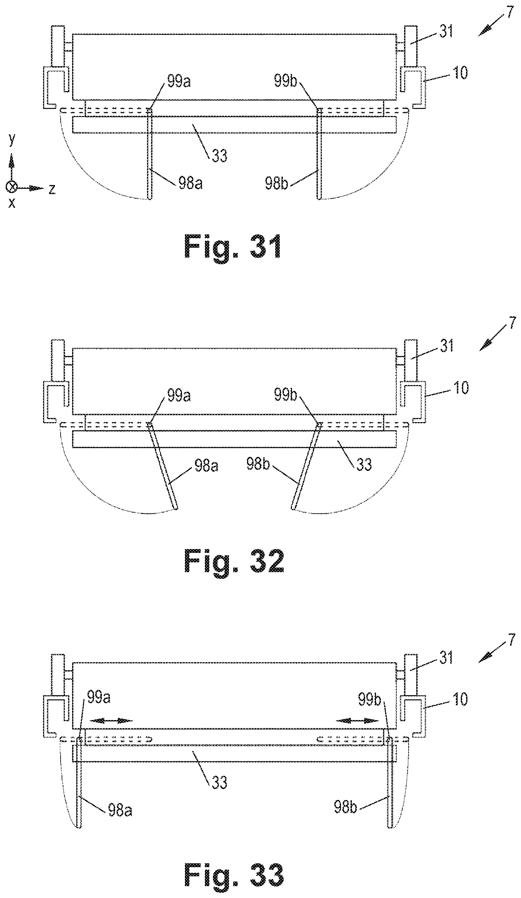

Denkbar ist darüber hinaus, dass die Drehachsen des Warensicherungsfingers oder des Warensicherungsbügels in z-Richtung verschiebbar gelagert sind, sodass die Warensicherungsfinger oder Warensicherungsbügel nach innen oder außen verschoben werden können, wodurch die Fixierung beziehungsweise Freigabe der Waren 2 noch besser ermöglicht ist. Denkbar ist im Speziellen auch, dass die Drehachsen bei einer Schwenkbewegung des Warensicherungsfingers oder des Warensicherungsbügels nach außen (also von der Sicherungsstellung in die Grundstellung) nach innen bewegt und bei einer Schwenkbewegung des Warensicherungsfingers oder Warensicherungsbügels nach innen (also von der Grundstellung in die Sicherungsstellung) nach außen bewegt werden. Auf diese Weise kann der Bereich, in den die Warensicherungsfinger oder Warensicherungsbügel seitlich über die Warentransportvorrichtung 7 hinausbewegt werden, gering gehalten werden. In einer vorteilhaften Ausführungsform werden die Warensicherungsfinger oder Warensicherungsbügel überhaupt nicht seitlich über die Warentransportvorrichtung 7 hinausbewegt (siehe auch Fig. 33).

Fig. 4 zeigt nun einen Querschnitt AA durch den Warenaufnahmeträger 12a und die dritte Schiene 43, wobei insbesondere die Schiene 43 vereinfacht dargestellt ist.

Der erste Warenaufnahmeträger 12a weist einen ersten Stützabschnitt 48a und einen zweiten Stützabschnitt 48b auf, welche in Längsrichtung des ersten Warenaufnahmeträgers 12a mit gegenseitigem Abstand verlaufen und zur Unterstützung eines Kleiderbügels 4 ausgebildet sind. Weiterhin weist der erste Warenaufnahmeträger 12a einen Aufnahmeabschnitt 49 auf, welcher in Längsrichtung des ersten Warenaufnahmeträgers 12a zwischen dem ersten Stützabschnitt 48a und zweiten Stützabschnitt 48b verläuft und einen sich in Richtung der Stützabschnitte 48a, 48b öffnenden Längsschlitz ausbildet.

Mit anderen Worten bildet der erste Warenaufnahmeträger 12a im Querschnitt gesehen einen ersten Stützabschnitt 48a und einen zweiten Stützabschnitt 48b aus, welche zur Unterstützung eines Kleiderbügels 4 ausgebildet sind, und weist einen zwischen dem ersten Stützabschnitt 48a und dem zweiten Stützabschnitt 48b verlaufenden Aufnahmeabschnitt 49 auf.

Die geneigt aufeinander zulaufenden Stützabschnitte 48a, 48b bilden insbesondere Sehnen einer den Haken des Kleiderbügels 4 bildenden Kurve. Mit anderen Worten sind die schräg verlaufenden Stützabschnitte 48a, 48b dann hinsichtlich ihrer Neigung und Länge so ausgestaltet, dass sie den Haken des Kleiderbügels 4 an jeweils zwei und somit insgesamt an vier Punkten berühren.

In dem gezeigten Beispiel weist der erste Warenaufnahmeträger 12a zusätzlich einen ersten Wandabschnitt 50a und einen zweiten Wandabschnitt 50b auf, welche in Längsrichtung des ersten Warenaufnahmeträgers 12a und parallel zu einer im Wesentlichen vertikal auf die betreffende Lagerebene (x-y-Ebene) ausgerichtete Symmetrieebene (y-z-Ebene) des Warenaufnahmeträgers 12a verlaufen, wobei an den ersten Wandabschnitt 50a der erste Stützabschnitt 48a anschließt und an den zweiten Wandabschnitt 50b der zweite Stützabschnitt 48b anschließt, und wobei der erste Stützabschnitt 48a und zweite Stützabschnitt 48b in Richtung der Symmetrieebene (y-z-Ebene) nach oben geneigt aufeinander zulaufen.

Zusätzlich schließen nach diesem Ausführungsbeispiel an die geneigt aufeinander zulaufenden Stützabschnitte 48a, 48b in Richtung der Symmetrieebene (y-z-Ebene) optionale, aufeinander zulaufende Wandabschnitte 51a, 51b an. Diese Wandabschnitte 51a, 51b sind in diesem Beispiel horizontal ausgerichtet, könnten aber auch anders orientiert sein.

Schließlich weist das Profil des ersten Warenaufnahmeträgers 12a einen Bodenabschnitt 52 und einen optionalen Flanschabschnitt 53 auf. Mit Hilfe des Flanschabschnitts 53 kann der erste Warenaufnahmeträger 12a im Lagerregal 5 befestigt sein, insbesondere an einer vorderen Längstraverse 10 und einer hinteren Längstraverse 11. Demzufolge bildet das in diesem Beispiel durch die Abschnitte 48a, 48b, 49, 50a, 50b, 51a, 51b und 52 beschriebene (um die Symmetrieebene symmetrische) Profil nur einen Teilbereich des Querschnitts des ersten Warenaufnahmeträgers 12a.

In der Fig. 4 ist schließlich auch ein Mitnahmeorgan 54 zur Mitnahme des Kleiderbügels 4 dargestellt, konkret in der Betätigungsstellung, in der das Mitnahmeorgan 54 in den Aufnahmeabschnitt 49 hineinragt und somit in den Bewegungsweg der Kleiderbügel 4 hineinragt, sodass die Mitnahmeorgane 54 die Kleiderbügel 4 der Ware 2 hintergreifen und diese bei einer Bewegung der Ein- und Auslagervorrichtung 33 bzw. die Teleskopiereinheit in z-Richtung mit bewegen.

Fig. 5 zeigt die in Fig. 4 dargestellte Anordnung in einem weiteren Zustand, konkret in der Freigabestellung, in der die Mitnahmeorgane 54 aus dem Aufnahmeabschnitt 49 und somit aus dem Bewegungsweg der Kleiderbügel 4 zurückgezogen sind. Die Mitnahmeorgane 54 hintergreifen die Kleiderbügel 4 der Ware 2 in diesem Zustand nicht, wodurch und diese auch bei einer Bewegung der Ein- und Auslagervorrichtung 33 bzw. die Teleskopiereinheit in z-Richtung nicht mit bewegt werden.

Die vertikale Verstellung zwischen der Freigabestellung und der Betätigungsstellung erfolgt in diesem Beispiel durch Bewegen der Ein- und Auslagervorrichtung 33 bzw. die Teleskopiereinheit in y-Richtung mit Hilfe der Hubmotoren 47a, 47b. Grundsätzlich kann der Wechsel zwischen der Freigabestellung und der Betätigungsstellung aber auch auf andere Art und Weise erfolgen (siehe auch Fig. 6 bis 8).

In dem konkret in den Figuren 4 und 5 dargestellten Beispiel sind die Mitnahmeorgane 54 durch in Richtung zum ersten Warenaufnahmeträger 12a weisende, stiftförmige Fortsätze gebildet. Konkret weisen die Mitnahmeorgane 54 nach unten und sind von oben in den Aufnahmeabschnitt 49 hinein bewegbar. Die Mitnahmeorgane 54 sind in diesem Beispiel zudem rotationssymmetrisch und laufen in Richtung zum ersten Warenaufnahmeträger 12a nach unten hin spitz zu. Auf diese Weise können die Mitnahmeorgane 54 auch dann in die Betätigungsstellung bewegt werden, wenn sie auf einen Haken eines Kleiderbügels 4 auflaufen, da dieser durch den spitz zulaufenden (hier kegelförmigen) Teil zur Seite geschoben wird.

In dem in den Figuren 4 und 5 dargestellten Beispiel wird die Verstellung zwischen der Freigabestellung und der Betätigungsstellung durch Verschieben der dritten Schiene 43 bewerkstelligt. In dem in Fig. 6 dargestellten Beispiel erfolgt die genannte Verstellung dagegen durch eine Drehbewegung. Zu diesem Zweck ist eine Schwenkplatte 55 um eine Drehachse 56 an der dritten Schiene 43 drehbar gelagert. Die Fig. 6 zeigt die Anordnung sowohl in der Freigabestellung, in der die Schwenkplatte 55 nach oben geschwenkt ist (durchgezogene Linien), als auch in der Betätigungsstellung, in der die Schwenkplatte 55 nach unten geschwenkt ist (strichlierte Linien).

Zudem ist das Profil des ersten Warenaufnahmeträgers 12b in Fig. 6 etwas anders ausgebildet als das Profil der ersten Warenaufnahmeträgers 12a aus Fig. 4 und 5. Das Profil ist nun nicht mehr im engeren Sinn offen, sondern weist eine Vertiefung 57 auf, in welche die Mitnahmeorgane 54 hineinragen können. Der Aufnahmeabschnitt 49 ist demzufolge nutförmig ausgebildet.

Der Aufnahmeabschnitt 49 (Eingriffsabschnitt) beziehungsweise Längsschlitz kann demzufolge nach oben hin offen oder vertieft sein und insbesondere nutförmig ausgebildet sein.

In den bisher dargestellten Beispielen erfolgt die Verstellung zwischen der Freigabestellung und der Betätigungsstellung durch Bewegen der dritten Schiene 43 beziehungsweise durch Bewegen der Schwenkplatte 55. Dies sind jedoch nicht die einzig vorstellbaren Möglichkeiten. In dem in Fig. 7 dargestellten Beispiel erfolgt die genannte Verstellung durch eine Bewegung (hier Verschiebung) der Mitnahmeorgane 54 relativ zur dritten Schiene 43, die in diesem Beispiel etwas anders geformt ist. Beispielsweise können die Mitnahmeorgane 54 pneumatisch, hydraulisch oder elektrisch ein- und ausgefahren werden. Die Fig. 7 zeigt die Anordnung in der Betätigungsstellung.

Zudem ist das Profil des ersten Warenaufnahmeträgers 12c in Fig. 7 etwas anders ausgebildet als das Profil der ersten Warenaufnahmeträgers 12b aus Fig. 6. Das Profil weist keine kantige Nut auf, sondern eine abgerundete Vertiefung beziehungsweise Sicke 57 auf, in welche die Mitnahmeorgane 54 hineinragen können.

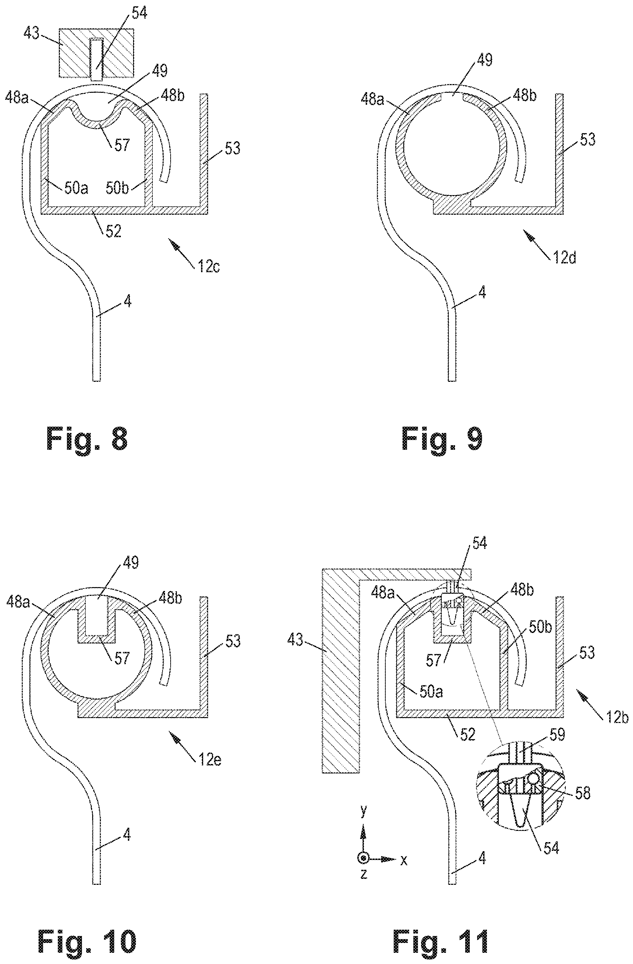

Die Fig. 8 zeigt die in bereits in Fig. 7 dargestellte Anordnung nun in der Freigabestellung, in welcher die Mitnahmeorgane 54 in die dritte Schiene 43 eingefahren sind.

In dem in Fig. 7 und 8 dargestellten Beispiel ist eine vertikale Verstellung der dritten Schiene 3 beziehungsweise der Ein- und Auslagervorrichtung 33 nicht unbedingt nötig, da die die Mitnahmeorgane 54 gegenüber der dritten Schiene 43 bewegbar sind. Das heißt, die Vertikalführung 46a 46b und die Hubmotoren 47a, 47b können in diesem Fall entfallen. Dennoch ist eine vertikale Verstellung der dritten Schiene 3 beziehungsweise der Ein- und Auslagervorrichtung 33 auch in dem in Fig. 7 und 8 dargestellten Beispiel denkbar.

An dieser Stelle wird angemerkt, dass die Hubmotoren 47a, 47b der Ein- und Auslagervorrichtung 33 und/oder die Mitnahmeorgane 54 hinsichtlich der Kraft, mit der sie nach unten bewegt werden, begrenzt sein können. Dazu kann ein Motorstrom begrenzt sein oder auch der Druck einer pneumatischen oder hydraulischen Betätigung. Auf diese Weise wird verhindert, dass es zu Beschädigungen kommt, wenn ein Mitnahmeorgan 54 bei der Abwärtsbewegung unglücklicherweise auf einen Haken eines Kleiderbügels 4 triff, der nicht seitlich ausweicht. Der Motorstrom beziehungsweise der Druck können auch gemessen und dahingehend ausgewertet werden, um eine solche Situation zu erkennen. Anstelle der Messung des Motorstroms beziehungsweise des Drucks kann auch die (vertikale) Position der Mitnahmeorgane 54 ausgewertet werden. Erreicht ein Mitnahmeorgan 54 eine vorgegebene (vertikale) Position nicht, insbesondere innerhalb einer vorgegebenen Zeit, dann kann ebenfalls darauf geschlossen werden, dass eine Kollisionssituation vorliegt.

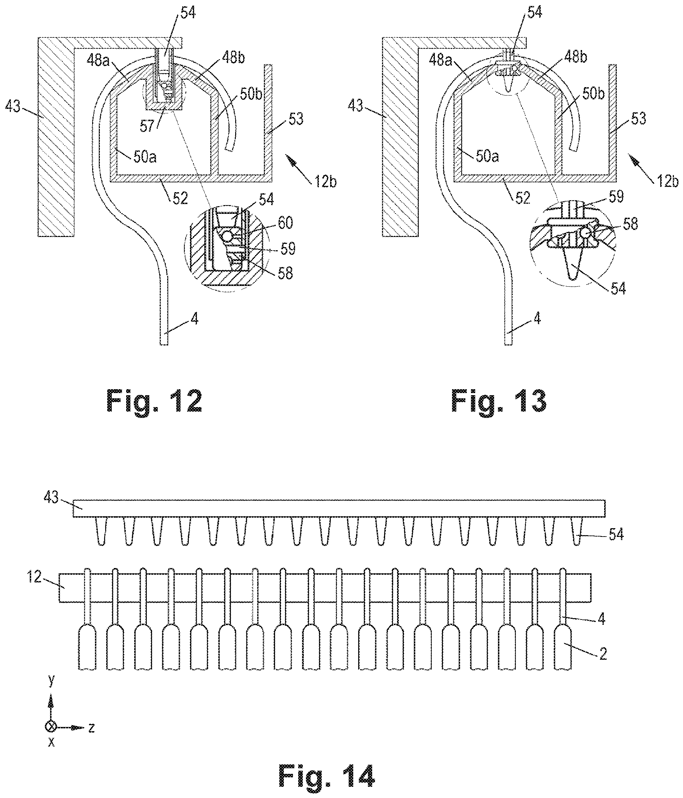

Im Fall einer Kollisionssituation kann vorgesehen sein, dass der betreffende Antrieb zurückgefahren wird und gegebenenfalls ein Alarm ausgelöst wird oder andere Maßnahmen ergriffen werden, beispielsweise die in den Figuren 14 bis 16 beschriebenen Maßnahmen, sofern diese nicht ohnehin standardmäßig ausgeführt werden (d.h. auch bei Nicht-Vorliegen einer Kollisionssituation).

Selbstverständlich gilt das Gesagte nicht nur für die Hubmotoren 47a, 47b und Antriebe der Mitnahmeorgane 54, sondern für alle Motoren im Lagersystem 1 beziehungsweise an der Warentransportvorrichtung 7. Dementsprechend können die dort verwendeten Antriebe insbesondere elektrisch, pneumatisch oder hydraulisch sein, hinsichtlich der Antriebskraft begrenzt sein, sowie hinsichtlich der Antriebskraft überwacht sein. Ebenso kann die Position eines bewegten Teils der Warentransportvorrichtung 7 ermittelt und ausgewertet werden. Gegebenenfalls kann ein Antrieb auch als Linearmotor ausgebildet sein, das heißt beispielsweise als Spindelmotor, Pneumatikzylinder oder Hydraulikzylinder.

Zusammenfassend weist der erste Warenaufnahmeträger 12 in den Figuren 1 bis 8 ein im Querschnitt gesehen polygonförmiges Profil auf, das im Bereich des Aufnahmeabschnitts 49 nach oben hin offen oder vertieft ist und das einen unteren horizontalen Abschnitt 52, zwei an den Enden des horizontalen Abschnitts 52 anschließende vertikale Abschnitte 50a, 50b und zwei an die vertikalen Abschnitte 50a, 50b anschließende, schräg auf einander zu laufende Abschnitte, welche die Stützabschnitte 48a, 48b bilden, umfasst.

Fig. 9 macht deutlich, dass das Profil des ersten Warenaufnahmeträgers 12d nicht notgedrungen eckig ist und zeigt einen Warenaufnahmeträger 12d, welcher ein im Querschnitt gesehen rundes Profil aufweist, das im Bereich des Aufnahmeabschnitts 49 nach oben hin offen ist

Der erste Warenaufnahmeträger 12d weist auch in diesem Fall einen ersten Stützabschnitt 48a und einen zweiten Stützabschnitt 48b auf, welche in Längsrichtung des ersten Warenaufnahmeträgers 12 mit gegenseitigem Abstand verlaufen und zur Unterstützung eines Kleiderbügels 4 ausgebildet sind, sowie einen Aufnahmeabschnitt 49, welcher in Längsrichtung des ersten Warenaufnahmeträgers 12 zwischen dem ersten Stützabschnitt 48a und zweiten Stützabschnitt 48b verläuft und einen sich in Richtung der Stützabschnitte 48a, 48b öffnenden Längsschlitz ausbildet. Auch diese Stützabschnitte 48a, 48b laufen geneigt aufeinander zu.

Fig. 10 zeigt einen ersten Warenaufnahmeträger 12e, welcher dem in Fig. 9 dargestellten ersten Warenaufnahmeträger 12d sehr ähnlich ist. Im Unterschied dazu ist das Profil nicht im engeren Sinn offen, sondern weist eine Vertiefung 57 beziehungsweise Nut auf. Die Vertiefung 57 ist in diesem Beispiel im Profil gesehen eckig ausgeführt, sie könnte aber auch, so wie in Fig. 8, verrundet sein.

Die Ein- und Auslagervorrichtung 33 und in dem dargestellten Ausführungsbeispiel insbesondere die dritte Schiene 43 können eine mit dem ersten Warenaufnahmeträger 12 korrespondierende Führung aufweisen, um die Stabilität der Ein- und Auslagervorrichtung 33 insbesondere im ausgefahrenen Zustand zu verbessern und um Schwingungen nach Möglichkeit zu vermeiden.

In diesem Zusammenhang zeigt die Fig. 11 ein Beispiel, bei dem die dritte Schiene 43 lateral beziehungsweise in der x-Richtung im ersten Warenaufnahmeträger 12b geführt ist. Konkret ist ein Wälzlager 58, das in der Nut 57 läuft, mit Hilfe einer Achse 59 an der dritte Schiene 43 befestigt, insbesondere im Bereich des am weitest auskragenden Punktes (d.h. an jenem Ende, das im ausgefahrenen Zustand der Ein- und Auslagervorrichtung 33 am weitesten vom Rahmen 30 der Warentransportvorrichtung 7 entfernt ist). In diesem Beispiel ist die Führung mit dem Wälzlager 58 gebildet, grundsätzlich könnte die Führung aber auch durch Gleitflächen gebildet sein, beispielsweise durch einen (quaderförmigen) Körper aus Polytetraflourethylen (PTFE bzw. Teflon), welcher in die Nut 57 hineinragt und an deren seitlichen Flächen aufliegt.

Fig. 12 zeigt ein weiteres Beispiel für eine Führung der Ein- und Auslagervorrichtung 33 im ersten Warenaufnahmeträger 12b. In diesem Beispiel ist die dritte Schiene 43 vertikal beziehungsweise in der y-Richtung im ersten Warenaufnahmeträger 12b geführt. Konkret läuft ein Wälzlager 58, welches mit Hilfe der Lagerhalter 60 mit der dritte Schiene 43 verbunden ist, am Grund der Nut 57. Das Wälzlager 58 ist wiederum insbesondere im Bereich des am weitest auskragenden Punktes an der dritten Schiene 43 befestigt (d.h. an jenem Ende, das im ausgefahrenen Zustand der Ein- und Auslagervorrichtung 33 am weitesten vom Rahmen 30 der Warentransportvorrichtung 7 entfernt ist). In diesem Beispiel ist die Führung wiederum mit einem Wälzlager 58 gebildet, grundsätzlich könnte die Führung aber auch durch Gleitflächen gebildet sein, beispielsweise durch einen (quaderförmigen) Körper aus Polytetraflourethylen (PTFE bzw. Teflon), welcher in die Nut 57 hineinragt und an Nutgrund aufliegt.

Selbstverständlich könnte der Gleitkörper an den seitlichen Flächen und am Grund der Nut 57 aufliegen, wodurch sowohl eine laterale als auch vertikale Führung der Ein- und Auslagervorrichtung 33 erreicht wird. Gleichermaßen ist es vorstellbar, die in Fig. 11 dargestellte Führung mit der in Fig. 12 dargestellten Führung zu kombinieren, um eine Führung in x-Richtung und in y-Richtung zu bewirken.

Fig. 13 zeigt schließlich ein Beispiel, bei dem die Ein- und Auslagervorrichtung 33 respektive die dritte Schiene 43 mit Hilfe eines einzigen Wälzlagers 58 in lateraler als auch vertikaler Richtung geführt ist. Das Wälzlager 58, das wiederum mit Hilfe einer Achse 59 an der dritten Schiene 43 befestigt ist, weist zu diesem Zweck seitliche Bunde auf, welche eine Bewegung der Ein- und Auslagervorrichtung 33 respektive der dritten Schiene 43 in y-Richtung verhindern. Auch hier wäre wiederum vorstellbar, die Führung mit Hilfe eines Gleitsteins zu verwirklichen, der ebenfalls oben und unten eine Verbreiterung aufweist.

Generell gilt das im Zusammenhang mit dem ersten Warenaufnahmeträger 12 Gesagte uneingeschränkt auch für den zweiten Warenaufnahmeträger 34. Das heißt insbesondere, dass der zweite Warenaufnahmeträger 34 dasselbe Profil wie der erste Warenaufnahmeträger 12 aufweisen kann (jedoch gegebenenfalls ohne Flanschabschnitt 53) und insbesondere auch, dass die Ein- und Auslagervorrichtung 33 in den beschriebenen Formen im zweiten Warenaufnahmeträger 34 gelagert sein kann.

Fig. 14 zeigt nun eine vereinfachte Seitenansicht eines ersten Warenaufnahmeträgers 12 mit mehreren auf Kleiderbügel 4 aufgehängten Waren 2 und einer Ein- und Auslagervorrichtung 33 in Form einer dritten Schiene 43 mit Mitnahmeorganen 54 in Freigabestellung.

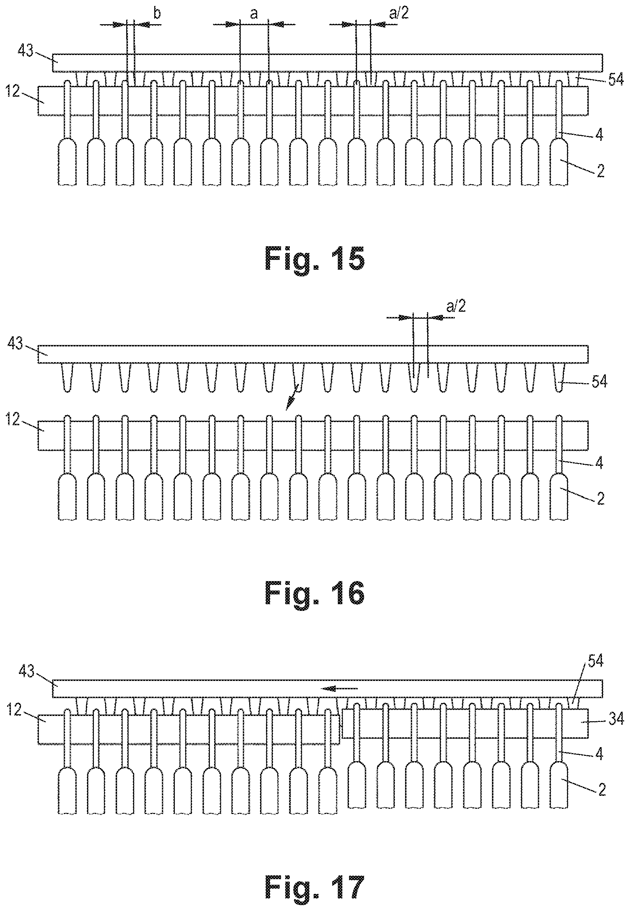

Fig. 15 zeigt die in Fig. 14 dargestellte Anordnung in Betätigungsstellung. Die dritte Schiene 43 mit den Mitnahmeorganen 54 ist zu diesem Zweck vertikal nach unten verstellt. Die Mitnahmeorgane 54 ragen somit in den Aufnahmeabschnitt 49 und in den Bewegungsweg der Kleiderbügel 4 hinein, sodass die Mitnahmeorgane 54 die Kleiderbügel 4 der Ware 2 hintergreifen und diese bei einer Bewegung der Ein- und Auslagervorrichtung 33 bzw. die Teleskopiereinheit in z-Richtung mit bewegen.

In den Figuren 14 und 15 sind die Mitnahmeorgane 54 der Ein- und Auslagervorrichtung 33 zwischen den Kleiderbügel 4 positioniert, sodass es bei ihrer Abwärtsbewegung zu keiner Kollision mit den Kleiderbügeln 4 kommen kann. Insbesondere kann dies dadurch sichergestellt werden, dass die Bewegung der Mitnahmeorgane 54 quer zur zweiten Richtung z und zum ersten Warenaufnahmeträger 12 hin (also hier die vertikale Abwärtsbewegung) an einer anderen Stelle erfolgt als die Bewegung der Mitnahmeorgane 54 quer zur zweiten Richtung (z) und vom ersten Warenaufnahmeträger 12 weg (also hier die vertikale Aufwärtsbewegung).

Konkret sind die Mitnahmeorgane 54 und somit die abgesetzten Kleiderbügel 4 m Abstand a angeordnet. Die Mitnahmeorgane 54 sind in diesem Beispiel genau zwischen zwei Kleiderbügel 4 positioniert. Der Mittenabstand zwischen einem Mitnahmeorgan 54 und einem Kleiderbügel 4 beträgt somit a/2. Der Abstand zwischen einem Mitnahmeorgan 54 und einem Kleiderbügel 4 beträgt dagegen b. Das heißt, ausgehend von der in Fig. 15 dargestellten Position müsste die Ein- und Auslagervorrichtung 33 respektive die dritte Schiene 43 um die Entfernung b verschoben werden (nach links oder nach rechts), sodass die Mitnahmeorgane 54 tatsächlich mit einem Kleiderbügel 4 in Eingriff gelangen.

Wird nun angenommen, dass die Ein- und Auslagervorrichtung 33 die Kleiderbügel 4 an der dargestellten Position abgesetzt hat, so erfolgt die Wiederaufnahme an einer um den Abstand b versetzten Position. Die Aufwärtsbewegung der Mitnahmeorgane 54 nach dem Absetzen der Kleiderbügel 4 erfolgt also an einer anderen z-Position als die Abwärtsbewegung bei der Wiederaufnahme. Der Versatz b ist dabei im Speziellen kleiner als der halbe Mittenabstand a/2 zwischen zwei benachbarten Mitnahmeorganen 54 abzüglich des halben Durchmessers der Mitnahmeorgane 54 und abzüglich des halben Drahtdurchmessers des Hakens des Kleiderbügels 4. Mit anderen Worten ist der Ausfahrweg der Ein- und Auslagervorrichtung 33 beim Einlagern von Hängewaren 2 ein anderer als bei Auslagern der Hängewaren 2.

Grundsätzlich wäre aber auch denkbar, dass die Ein- und Auslagervorrichtung 33 vor der Aufwärtsbewegung der Mitnahmeorgane 54 um die Distanz b von den Kleiderbügeln 4 wegbewegt wird. Mit demselben Effekt wie oben beschrieben erfolgt die Bewegung der Mitnahmeorgane 54 quer zur zweiten Richtung z und zum ersten Warenaufnahmeträger 12 hin (also hier die vertikale Abwärtsbewegung) dann an derselben Stelle wie die Bewegung der Mitnahmeorgane 54 quer zur zweiten Richtung (z) und vom ersten Warenaufnahmeträger 12 weg (also hier die vertikale Aufwärtsbewegung). Diese Variante ist also gleichwirkend wie die zuvor beschriebene Variante.

Die Ein- und Auslagervorrichtung 33 weist demgemäß Mittel zur Bewegungssteuerung auf, welche eine Bewegung der Mitnahmeorgane 54 quer zur zweiten Richtung z und zum ersten Warenaufnahmeträger 12 hin an einer anderen Stelle bewirken als eine Bewegung der Mitnahmeorgane 54 quer zur zweiten Richtung z und vom ersten Warenaufnahmeträger 54 weg.

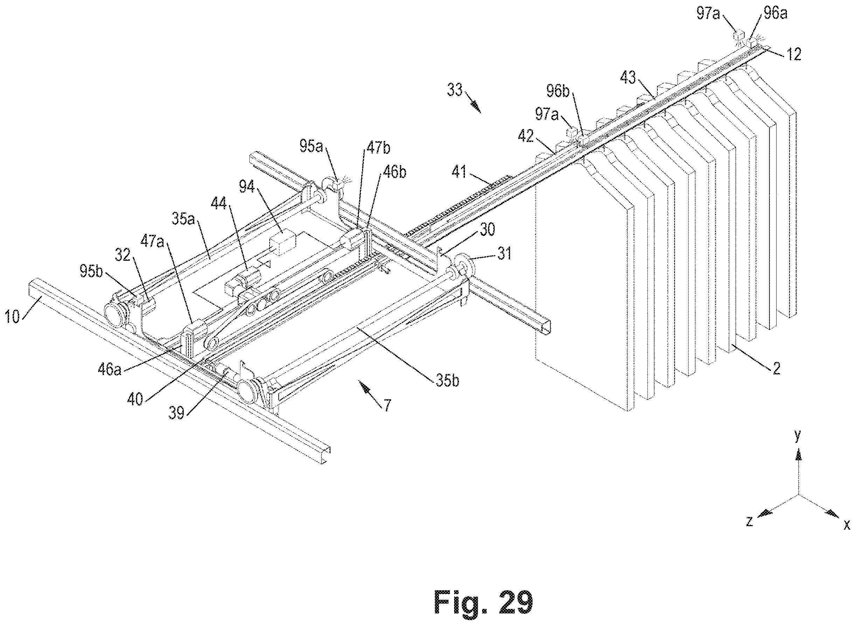

Die Mittel zur Bewegungssteuerung beziehungsweise für den genannten Versatz bei der Aufnahme der Kleiderbügel 4 können durch eine mechanische Kopplung gebildet sein oder durch eine elektronische Steuerung, welche beispielsweise mit dem Teleskopiermotor 44 und den Hubmotoren 47a, 47b verbunden ist und diese entsprechend ansteuert (siehe auch Fig. 29).

Ist das versetzte Aufnehmen der Kleiderbügel 4 nicht erwünscht oder möglich, so kann eine Kollision zwischen den Mitnahmeorganen 54 und den Kleiderbügeln 4 auch auf andere Weise vermieden werden. Beispielsweise kann der Bewegung der Mitnahmeorgane 54 quer zur zweiten Richtung (z) und zum ersten Warenaufnahmeträger 12 hin (also hier der vertikalen Abwärtsbewegung) eine Bewegung in der zweiten Richtung z überlagert werden (also eine Seitwärtsbewegung). In der Fig. 16 ist dargestellt, was damit gemeint ist. Die Mitnahmeorgane 54 befinden sich in diesem Beispiel genau über den Kleiderbügeln 4, was bei einer reinen Abwärtsbewegung derselben zu einer Kollision mit den Kleiderbügeln 4 führen würde. Zwar sorgt die keil- oder kegelförmige Ausführung der Mitnahmeorgane 54 in den meisten Fällen dafür, dass die Kleiderbügel 4 auch bei einer reinen Abwärtsbewegung der Mitnahmeorgane 54 zur Seite geschoben werden, jedoch kann in seltenen Fällen eine Blockade eintreten, falls das Verdrängen der Kleiderbügel 4 durch die Mitnahmeorgane 54 nicht funktioniert.

In einer bevorzugten Ausführungsform erfolgt die Abwärtsbewegung der Mitnahmeorgane 54 daher gleichzeitig mit einer Seitwärtsbewegung der Ein- und Auslagervorrichtung 33. Die Bewegung der Mitnahmeorgane 54 erfolgt also schräg nach unten, so wie das in der Fig. 16 dargestellt ist. Bevorzugt startet die Abwärtsbewegung der Mitnahmeorgane 54 über den Kleiderbügeln 4, und die während der Seitwärtsbewegung zurückgelegte Distanz entspricht (im Wesentlichen) dem halben Mittenabstand a/2 der Mitnahmeorgane 54.

Denkbar ist nach einer weiteren Ausführungsform auch, dass der Bewegung der Mitnahmeorgane 54 quer zur zweiten Richtung (z) und zum ersten Warenaufnahmeträger 12 hin (also hier der vertikalen Abwärtsbewegung) eine oszillierende Bewegung in der zweiten Richtung (z) überlagert wird (also eine oszillierende Seitwärtsbewegung beziehungsweise eine laterale Hin- und Herbewegung). Auch dies verhindert wirkungsvoll eine Blockade eines Mitnahmeorgans 54 durch einen Kleiderbügel 4.

Die Ein- und Auslagervorrichtung 33 weist demgemäß Mittel zur Bewegungssteuerung auf, welche der Bewegung der Mitnahmeorgane 54 quer zur zweiten Richtung z und zum ersten Warenaufnahmeträger 12 hin eine Bewegung in der zweiten Richtung z überlagern.

Die Mittel zur Bewegungssteuerung beziehungsweise für die genannte Überlagerung von Abwärts- und Seitwärtsbewegung können durch eine mechanische Kopplung gebildet sein (beispielsweise durch eine Kulissenführung) oder durch eine elektronische Steuerung, welche beispielsweise mit dem Teleskopiermotor 44 und den Hubmotoren 47a, 47b verbunden ist und diese synchron ansteuert (siehe auch Fig. 29).

Generell gilt das im Zusammenhang mit dem ersten Warenaufnahmeträger 12 Gesagte uneingeschränkt auch für den zweiten Warenaufnahmeträger 34. Das heißt insbesondere, dass die Ein- und Auslagervorrichtung 33 respektive die Mitnahmeorgane 54 im Bereich des zweiten Warenaufnahmeträgers 34 in derselben Weise angesteuert werden können wie im Bereich des ersten Warenaufnahmeträgers 12.

Generell ist es von Vorteil, wenn die Mitnahmeorgane 54 in der Betätigungsstellung positioniert sind, wenn die Warentransportvorrichtung 7 in der ersten Richtung x bewegt wird. Das heißt insbesondere, dass die Mitnahmeorgane 54 in der Betätigungsstellung positioniert bleiben, nachdem Waren 2 vom ersten Warenaufnahmeträger 12 des Lagers 5 auf den zweiten Warenaufnahmeträger 34 der Warentransportvorrichtung 7 übernommen wurden. Auf diese Weise sind die Waren 2 bei einer Fahrt der Warentransportvorrichtung 7 lagefixiert, beziehungsweise zumindest in ihrer Bewegung beschränkt, und können nicht vom zweiten Warenaufnahmeträger 34 herunterfallen. Zudem kann auch ein Verdrehen der Hängeware 2 während der Fahrt der Warentransportvorrichtung 7 in x-Richtung beziehungsweise auch ein Abheben der Kleiderbügel 2 vom zweiten Warenaufnahmeträger 34 weitestgehend vermieden werden. Obwohl die vorgeschlagene Vorgangsweise von Vorteil ist, ist dennoch vorstellbar, dass die die Mitnahmeorgane 54 in der Freigabestellung positioniert sind, wenn die Warentransportvorrichtung 7 in der ersten Richtung x bewegt wird.

Fig. 17 zeigt nun das Zusammenspiel zwischen dem ersten Warenaufnahmeträger 12 des Lagers 5 und dem zweiten Warenaufnahmeträger 34 der Warentransportvorrichtung 7. In dem konkreten Beispiel wird angenommen, dass die Waren 2 vom zweiten Warenaufnahmeträger 34 auf den ersten Warenaufnahmeträger 12 verlagert werden.

Zu diesem Zweck wird der zweite Warenaufnahmeträger 34 in z-Richtung an den ersten Warenaufnahmeträger 12 bewegt, um den Spaltabstand zwischen den beiden Warenaufnahmeträgern 12, 34 auf ein solches Maß zu verringern, dass der Haken eines Kleiderbügels 4 nicht dazwischen rutschen und die Ware 2 hinunter fallen kann. Der Spalt ist also vorzugsweise kleiner als ein Drahtdurchmesser des Hakens des Kleiderbügels 4.

Vorteilhaft wird der zweite Warenaufnahmeträger 34 dabei höhenversetzt zum ersten Warenaufnahmeträger 12 positioniert, sodass eine vom zweiten Warenaufnahmeträger 34 auf den ersten Warenaufnahmeträger 12 abwärts gerichtete Stufe entsteht. Dadurch wird das Verlagern der Waren 2 vom zweiten Warenaufnahmeträger 34 auf den ersten Warenaufnahmeträger 12 erleichtert, beziehungsweise wird ein Hängenbleiben oder Verhaken der Kleiderbügel 4 im Zwischenbereich zwischen dem zweiten Warenaufnahmeträger 34 und dem ersten Warenaufnahmeträger 12 vermieden.

Werden die Waren 2 vom ersten Warenaufnahmeträger 12 auf den zweiten Warenaufnahmeträger 34 verlagert, dann wird der zweite Warenaufnahmeträger 34 vorteilhaft höhenversetzt zum ersten Warenaufnahmeträger 12 positioniert, nun allerdings so, dass eine vom ersten Warenaufnahmeträger 12 auf den zweiten Warenaufnahmeträger 34 abwärts gerichtete Stufe entsteht.

Besonders vorteilhaft ist es in diesem Zusammenhang, wenn der zweite Warenaufnahmeträger 34 an seinem dem ersten Warenaufnahmeträger 12 zugewandten Ende erste und zweite Positionierfortsätze 61, 62 aufweist, die in den ersten Warenaufnahmeträger 12 ragen, wenn der zweite Warenaufnahmeträger 34 an den ersten Warenaufnahmeträger 12 heran bewegt ist, wobei
- der zumindest eine erste Positionierfortsatz 61 so angeordnet ist, dass eine vom ersten Warenaufnahmeträger 12 auf den zweiten Warenaufnahmeträger 34 abwärts gerichtete Stufe entsteht, wenn der erste Positionierfortsatz 61 auf dem ersten Warenaufnahmeträger 12 aufliegt, insbesondere auf einem horizontalen Wandabschnitt des Profils, und
- der zumindest eine zweite Positionierfortsatz 62 so angeordnet ist, dass eine vom zweiten Warenaufnahmeträger 34 auf den ersten Warenaufnahmeträger 12 abwärts gerichtete Stufe entsteht, wenn der zweite Positionierfortsatz 62 auf dem ersten Warenaufnahmeträger 12 aufliegt, insbesondere auf einem horizontalen Wandabschnitt des Profils.

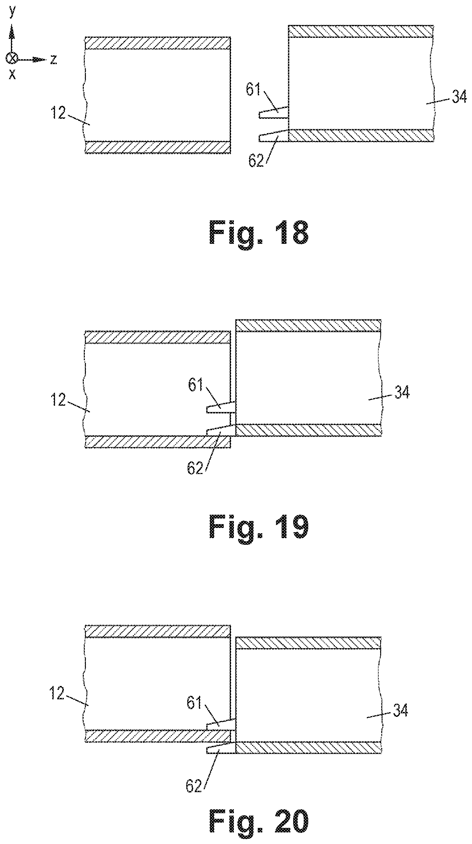

Die Figuren 18 bis 20 zeigen dazu ein Beispiel, wobei der zweite Warenaufnahmeträger 34 in der Fig. 18 noch nicht vollständig an den ersten Warenaufnahmeträger 12 heran bewegt ist beziehungsweise sich in der Grundstellung befindet, in der Fig. 19 die vom zweiten Warenaufnahmeträger 34 auf den ersten Warenaufnahmeträger 12 abwärts gerichtete Stufe dargestellt ist und in der Fig. 20 die vom ersten Warenaufnahmeträger 12 auf den zweiten Warenaufnahmeträger 34 abwärts gerichtete Stufe dargestellt ist. In dem in Fig. 19 dargestellten Zustand können die Waren 4 also vom zweiten Warenaufnahmeträger 34 auf den ersten Warenaufnahmeträger 12 verlagert werden und in dem in Fig. 20 dargestellten Zustand vom ersten Warenaufnahmeträger 12 auf den zweiten Warenaufnahmeträger 34.

Durch die vorgestellten Maßnahmen wird der zweite Warenaufnahmeträger 34 vertikal auf dem ersten Warenaufnahmeträger 12, der in aller Regel fix im Lager 5 montiert ist, abgestützt. Denkbar ist zudem, dass der zweite Warenaufnahmeträger 34 durch entsprechende Ausbildung der Positionierfortsätze 61, 62 oder durch weitere Positionierfortsätze aus seitlich lagefixiert wird.

Denkbar ist weiterhin, dass die Positionierfortsätze 61, 62 nicht auf dem zweiten Warenaufnahmeträger 34, sondern auf dem ersten Warenaufnahmeträger 12 angeordnet sind. Dementsprechend weist dann der erste Warenaufnahmeträger 12 an seinem dem zweiten Warenaufnahmeträger 34 zugewandten Ende erste und zweite Positionierfortsätze auf, die in den zweiten Warenaufnahmeträger 34 ragen, wenn der zweite Warenaufnahmeträger 34 an den ersten Warenaufnahmeträger 12 heran bewegt ist, wobei
- der zumindest eine erste Positionierfortsatz so angeordnet ist, dass eine vom ersten Warenaufnahmeträger 12 auf den zweiten Warenaufnahmeträger 34 abwärts gerichtete Stufe entsteht, wenn der zweite Warenaufnahmeträger 34 auf dem ersten Positionierfortsatz aufliegt, insbesondere ein horizontaler Wandabschnitt des Profils, und
- der zumindest eine zweite Positionierfortsatz so angeordnet ist, dass eine vom zweiten Warenaufnahmeträger 34 auf den ersten Warenaufnahmeträger 12 abwärts gerichtete Stufe entsteht, wenn der zweite Warenaufnahmeträger 34 auf dem zweiten Positionierfortsatz aufliegt, insbesondere ein horizontaler Wandabschnitt des Profils.

Wie bereits im Zusammenhang mit den Figuren 11 bis 13 erläutert wurde, kann es insbesondere bei weit auskragenden Ein- und Auslagervorrichtungen 33 zu unerwünschten Bewegungen beziehungsweise Schwingungen kommen, die am freien Ende der Ein- und Auslagervorrichtung 33 naturgemäß am stärksten auftreten. Die Bewegung/Schwingung kann dabei in x-Richtung und/oder y-Richtung auftreten. Zur Vermeidung dieser Bewegung/Schwingung wird in einer bevorzugten Ausführungsform vorgeschlagen, dass im Lagerregal 5 im Bereich des ersten Warenaufnahmeträgers 12 eine Durchschubsicherung 63 montiert ist, die eine Öffnung 64 aufweist, welche mit einem Fortsatz 65 der Ein- und Auslagervorrichtung 33 zusammenwirkt, wenn die Ein- und Auslagervorrichtung 33 bis an die Durchschubsicherung 63 heran bewegt ist.

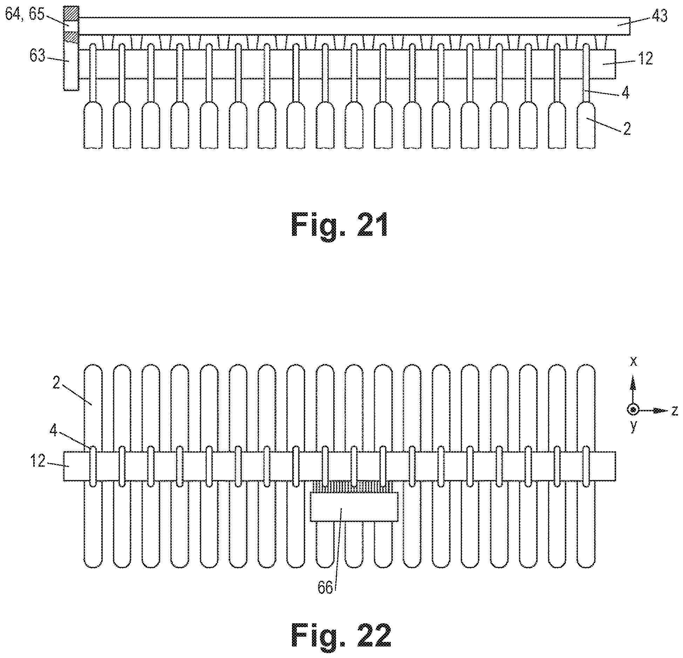

In der Fig. 21 ist dazu ein Beispiel gezeigt, bei dem die Durchschubsicherung 63 direkt am ersten Warenaufnahmeträger 12 montiert ist und die dritte Schiene 43 der Ein- und Auslagervorrichtung 33 einen Fortsatz 65 aufweist, der in eine Öffnung 64 der Durchschubsicherung 63 bewegt wird, wenn die Ein- und Auslagervorrichtung 33 entsprechend weit ausgefahren ist. Auf diese Weise wird wenigstens in der Endlage der Ein- und Auslagervorrichtung 33 eine Lagefixierung in x-Richtung und/oder y-Richtung erreicht. Diese Maßnahme kann alleine oder zusätzlich zu den in Figuren 11 bis 13 vorgestellten Maßnahmen ergriffen werden. Denkbar ist für denselben Effekt natürlich auch, dass die Durchschubsicherung 63 einen Fortsatz aufweist, welcher mit einer Öffnung der Ein- und Auslagervorrichtung 33 zusammenwirkt, wenn die Ein- und Auslagervorrichtung 33 bis an die Durchschubsicherung 63 heran bewegt ist.

Neben der oben beschriebenen Wirkung verhindert die Durchschubsicherung 63 auch das Verschieben der Waren 2 in nicht unerwünschte Bereiche. Insbesondere kann eine Durchschubsicherung 63 daher an einem Ende eines ersten Warenaufnahmeträgers 12 oder eines zweiten Warenaufnahmeträgers 34 vorgesehen werden. Selbstverständlich ist es auch möglich, Durchschubsicherungen ohne eine Öffnung 64 beziehungsweise ohne einen Fortsatz einzusetzen.

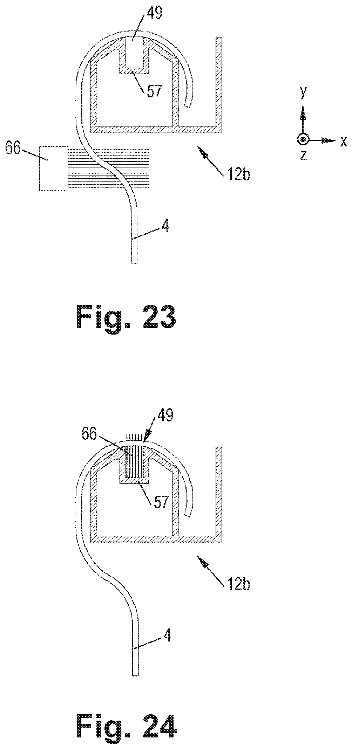

Fig. 22 zeigt nun eine Draufsicht auf einen ersten Warenaufnahmeträger 12 und eine Bürste 66, die in Richtung auf den ersten Warenaufnahmeträger 12 vorragt und insbesondere in die Bewegungsbahn der Kleiderbügel 4 hineinragt. Fig. 23 zeigt die in Fig. 22 dargestellte Anordnung im Schnitt. Durch die vorgeschlagenen Maßnahmen werden die Kleiderbügel 4 beim Verlagern durch die im Bereich des ersten Warenaufnahmeträgers 12 angeordnete Bürste 66 bewegt. Die Bürste 66 verhindert, dass die Kleiderbügel 4 ungewollt (also ohne Eingriff der Mitnahmeorgane 54) am ersten Warenaufnahmeträger 12 verrutschen, beispielsweise durch Vibrationen im Lager 5. Das für den ersten Warenaufnahmeträger 12 Gesagte gilt natürlich sinngemäß auch für den zweiten Warenaufnahmeträger 34. Das heißt, die Bürste 66 kann mit derselben Wirkung auch in Richtung auf den ersten Warenaufnahmeträger 34 vorragen und insbesondere in die Bewegungsbahn der Kleiderbügel 4 hineinragen. Auf diese Weise wird ein Verrutschen auf oder ein Herunterrutschen vom zweiten Warenaufnahmeträger 34 verhindert, beispielsweise wenn bei einer Bewegung der Warentransportvorrichtung 7 Vibrationen auftreten.

Die Bürste 66 kann beispielsweise im Lagerregal 5 im Bereich des Endes des ersten Warenaufnahmeträgers 12 angeordnet sein, welches der Warentransportvorrichtung 7 zugewandt ist. Auf diese Weise wird verhindert, dass die Waren vom ersten Warenaufnahmeträger 12 herunterfallen. Alternativ oder zusätzlich ist auch vorstellbar, dass eine Bürste 66 an zumindest einem Ende des zweiten Warenaufnahmeträgers 34 angeordnet ist, welches dem ersten Warenaufnahmeträgers 12 zugewandt ist. Auf diese Weise wird verhindert, dass die Waren vom zweiten Warenaufnahmeträger 34 herunterfallen. Schließlich kann eine Bürste 66 auch im Verlauf (also nicht am Ende) des ersten Warenaufnahmeträgers 12 oder zweiten Warenaufnahmeträger 34 angeordnet sein.

Fig. 24 zeigt eine weitere Ausführungsform, nach der die Bürste 66 in den Aufnahmeabschnitt 49 hineinragt. Konkret ist die Bürste 66 in diesem Beispiel am Grund der Nut 57 angeordnet. Auf diese Weise kann der erste Warenaufnahmeträger 12 insbesondere auf seiner gesamten Länge mit einer Bürste 66 respektive mit Borsten versehen sein.

Generell wird angemerkt, dass die Bürste 66 nicht notgedrungen Borsten mit zylindrischem Querschnitt aufweisen muss. Denkbar ist vielmehr auch, dass die Borsten beispielsweise einen rechteckförmigen Querschnitt aufweisen und daher Lappen ähneln. Weiterhin wird angemerkt, dass die Bürste 66 auch in Kombination mit einer Durschubsicherung 63 angewandt werden kann.

Anstelle der als Blockierelement fungierenden Bürste 66 oder zusätzlich dazu kann eine durch die Warentransportvorrichtung 7 betätigte Wippe oder ein durch die Warentransportvorrichtung 7 betätigter Stift vorgesehen sein, welcher in der Blockierstellung in die Bewegungsbahn der Kleiderbügel 4 ragt. Beispielsweise kann die Wippe oder der Stift elektromagnetisch betätigt sein oder auch mechanisch. Eine elektromagnetische Betätigung kommt insbesondere dann in Betracht, wenn das Blockierelement auf dem zweiten Warenaufnahmeträger 34 angeordnet ist. Ist das Blockierelement auf dem ersten Warenaufnahmeträger 12 angeordnet, so kommt insbesondere eine mechanische Betätigung durch die Warentransportvorrichtung 7 in Betracht. Beispielsweise kann an der Ein- und Auslagervorrichtung 33 ein Element (z.B. ein Fortsatz oder Keil) angeordnet sein, welches die am ersten Warenaufnahmeträger 12 angeordnete Wippe beziehungsweise den am ersten Warenaufnahmeträger 12 angeordneten Stift bei der Ausfahrbewegung der Ein- und Auslagervorrichtung 33 freigibt. Im Falle einer Bürste 66 sind deren Borsten bevorzugt so gestaltet, dass sie beim Verlagern der Hängewaren 4 nachgeben und ein aktive Betätigung der Bürste 66 daher unterbleiben kann. Dennoch kann vorgesehen sein, dass die Bürste 66 aktiv durch die Warentransportvorrichtung 7 betätigt wird.

Im Nachfolgenden wird ein Einlagervorgang und Auslagervorgang beschrieben, wobei insbesondere auf die Figuren 1 bis 3 Bezug genommen wird.

### Einlagervorgang

Die einzulagernde Ware 2 wird am Warenaufnahmeträger 25 der ersten Fördertechnik 26 zum Vertikalförderer 18 angefördert. Dort wird die Ware 2 vom Warenaufnahmeträger 25 der ersten Fördertechnik 26 auf den Warenaufnahmeträger 23 am Vertikalförderer 18 gefördert. Die Förderbewegung der Ware 2 zwischen den Warenaufnahmeträgern 23, 25 kann über die Warenübergabevorrichtung 24 erfolgen. Danach wird der Hubrahmen 22 mit dem Warenaufnahmeträger 23 vertikal auf Höhe einer der Lagerebenen 13 verstellt und die Waren 2 vom Warenaufnahmeträger 23 des Vertikalförderers 18 auf den Warenaufnahmeträger 16 der Übergabestation 14 (Puffer) gefördert. Die Förderbewegung der Ware 2 zwischen den Warenaufnahmeträgern 16, 23 kann über die Warenübergabevorrichtung 24 erfolgen. Danach wird der Warenaufnahmeträger 16 der Übergabestation 14 aus einer Aufnahmestellung in eine Übergabestellung verstellt. In der Übergabestellung kann nun jene Warentransportvorrichtung 7, welche der Lagerebene 13 zugeordnet ist, in welcher die Waren 2 an einem Lagerplatz eingelagert werden sollen, die Waren 2 von der Übergabestation 14 abholen.

Die Warentransportvorrichtung 7 wird hierzu in x-Richtung vor dem ersten Warenaufnahmeträger 16 positioniert, und der zweite Warenaufnahmeträger 34 (Hubleiste) der Warentransportvorrichtung 7 wird aus einer Grundstellung (Fig. 2) in eine Übergabestellung verstellt, insbesondere in die in Fig. 20 dargestellte Position. Der erste Warenaufnahmeträger 16 überragt den zweiten Warenaufnahmeträger 34 dabei in z-Richtung, sodass eine vom ersten Warenaufnahmeträger 16 auf den zweiten Warenaufnahmeträger 34 abwärts gerichtete Stufe entsteht. Der zweite Warenaufnahmeträger 34 stützt sich dabei auf den ersten Warenaufnahmeträger 12 ab.

Sobald der zweite Warenaufnahmeträger 34 der Warentransportvorrichtung 7 in die Übergabestellung verstellt ist, wird die Ein- und Auslagervorrichtung 33 seitlich beziehungsweise oberhalb des ersten Warenaufnahmeträgers 16 aus einer Ausgangsstellung gegen die z-Richtung ausgefahren. Danach werden die Ein- und Auslagervorrichtung 33 beziehungsweise die Mitnahmeorgane 54 gegen die y-Richtung aus der Freigabestellung in die Betätigungsstellung verstellt, in welcher die Mitnahmeorgane 54 die Kleiderbügel 4 hintergreifen. Dabei können zwischen aufeinander folgenden Mitnahmeorganen 54 nur ein einziger Kleiderbügel 4 (beispielsweise bei Wintermäntel) oder mehrere Kleiderbügel 4 (beispielsweise bei Sommerkleidern) aufgenommen werden.

Wird nun die Ein- und Auslagervorrichtung 33 nun in z-Richtung in die Ausgangsstellung eingefahren, werden die Waren 2 mittels der Mitnahmeorgane 54 vom ersten Warenaufnahmeträger 16 auf den zweiten Warenaufnahmeträger 34 gefördert. Dabei gleiten die Kleiderbügel 4 mit deren Haken entlang dem ersten Warenaufnahmeträger 16 und dem zweiten Warenaufnahmeträger 34. Danach wird der zweite Warenaufnahmeträger 34 der Warentransportvorrichtung 7 wieder in die Grundstellung verstellt (siehe Fig. 3).

Wurden die Waren 2 auf der Warentransportvorrichtung 7 übernommen, kann diese in x-Richtung bis zu einem definierten Lagerplatz verfahren und vor einem ersten Warenaufnahmeträger 12 positioniert werden.

Danach wird der zweite Warenaufnahmeträger 34 (Hubleiste) der Warentransportvorrichtung 7 aus einer Grundstellung (Fig. 2) in eine Übergabestellung verstellt, insbesondere in die in Fig. 19 dargestellte Position. Der zweite Warenaufnahmeträger 34 überragt den ersten Warenaufnahmeträger 12 dabei in z-Richtung, sodass eine vom zweiten Warenaufnahmeträger 34 auf den ersten Warenaufnahmeträger 12 abwärts gerichtete Stufe entsteht. Der zweite Warenaufnahmeträger 34 stützt sich dabei wiederum auf den ersten Warenaufnahmeträger 12 ab.

Wenn die Mitnahmeorgane 54 während der Fahrt der Warentransportvorrichtung 7 in x-Richtung in die Freigabestellung bewegt wurden, was grundsätzlich möglich aber nicht notwendig ist, werden die Mitnahmeorgane 54 wieder in die Betätigungsstellung bewegt. Andernfalls befinden sich die Mitnahmeorgane 54 ohnehin noch in der Betätigungsstellung, in der die Mitnahmeorgane 54 die Kleiderbügel 4 beziehungsweise deren Haken hintergreifen.

Wird nun die Ein- und Auslagervorrichtung 33 aus einer Ausgangsstellung gegen die z-Richtung ausgefahren, werden die Waren 2 mittels der Mitnahmeorgane 54 vom zweiten Warenaufnahmeträger 34 auf den ersten Warenaufnahmeträger 12 gefördert. Dabei gleiten die Kleiderbügel 4 mit deren Haken entlang dem zweiten Warenaufnahmeträger 34 und dem ersten Warenaufnahmeträger 12.

Befinden sich die Waren 2 im Lagerregal 5, werden die Ein- und Auslagervorrichtung 33 beziehungsweise die Mitnahmeorgane 54 in y-Richtung aus der Betätigungsstellung in die Freigabestellung verstellt. Danach kann die Ein- und Auslagervorrichtung 33 in z-Richtung in die Ausgangsstellung eingefahren und der zweite Warenaufnahmeträger 34 in die Grundstellung verstellt werden.

Wie in den Figuren ersichtlich, können beim Einlagervorgang die Waren 2 als Hängewarengruppe gefördert und gelagert werden. Eine Hängewarengruppe kann beispielsweise bis zu vierzig Waren 2 umfassen. Dabei sind innerhalb einer Hängewarengruppe insbesondere ein und dieselben Waren 2 enthalten. Mit anderen Worten, werden auf den ersten Warenaufnahmeträgern 16 der Übergabestation 14 jeweils eine Hängewarengruppe bereitgestellt und auf dem zweiten Warenaufnahmeträger 34 der Warentransportvorrichtung 7 jeweils eine Hängewarengruppe aufgenommen und auf dem ersten Warenaufnahmeträger 12 des Lagerregales 5 jeweils eine Hängewarengruppe eingelagert. Bevorzugt kann der erste Warenaufnahmeträger 12 im Lagerregal 5 in z-Richtung hintereinander zwei Hängewarengruppen lagern.

Grundsätzlich ist es auch möglich, dass die Waren 2 vereinzelt gefördert und gelagert werden. Dies ist beispielsweise dann der Fall, wenn nach einem Kommissioniervorgang aus einer Hängewarengruppe nur noch eine Ware 2 (Restware) verbleibt, welche wiederum in das Lagerregal 5 einzulagern ist.

### Auslagervorgang

Die Warentransportvorrichtung 7 wird hierzu in x-Richtung vor einem ersten Warenaufnahmeträger 12 positioniert, und der Warenaufnahmeträger 34 der Warentransportvorrichtung 7 wird aus einer Grundstellung (Fig. 2) in die in Fig. 20 dargestellte Übergabestellung verstellt.

Danach wird die Ein- und Auslagervorrichtung 33 aus seiner Ausgangsstellung seitlich beziehungsweise oberhalb des ersten Warenaufnahmeträgers 12 gegen die z-Richtung ausgefahren. Danach werden die Ein- und Auslagervorrichtung 33 beziehungsweise die Mitnahmeorgane 54 gegen die y-Richtung aus der Freigabestellung in die Betätigungsstellung verstellt, in welcher die Mitnahmeorgane 54 die Kleiderbügel 4 hintergreifen. Dabei können zwischen aufeinander folgenden Mitnahmeorganen 54 nur ein einziger Kleiderbügel 4 (beispielsweise bei Wintermäntel) oder mehrere Kleiderbügel 4 (beispielsweise bei Sommerkleidern) aufgenommen werden.

Wird nun die Ein- und Auslagervorrichtung 33 in z-Richtung in die Ausgangsstellung eingefahren, werden die Waren 2 mittels der Mitnahmeorgane 54 vom ersten Warenaufnahmeträger 12 auf den zweiten Warenaufnahmeträger 34 gefördert. Dabei gleiten die Kleiderbügel 4 mit deren Haken entlang dem ersten Warenaufnahmeträger 12 und dem zweiten Warenaufnahmeträger 34. Befinden sich die Waren 2 auf dem zweiten Warenaufnahmeträger 34, wird dieser wieder in die Grundstellung (siehe Fig. 3) verstellt.

Nachdem die Waren 2 auf der Warentransportvorrichtung 7 übernommen wurden, kann diese in x-Richtung zur Übernahmestation 15 verfahren und vor einem ersten Warenaufnahmeträger 16 positioniert werden.

Danach wird der zweite Warenaufnahmeträger 34 der Warentransportvorrichtung 7 aus einer Grundstellung (Fig. 2) in eine Übergabestellung verstellt, insbesondere in die in Fig. 19 dargestellte Position. Der zweite Warenaufnahmeträger 34 überragt den ersten Warenaufnahmeträger 16 dabei in z-Richtung, sodass eine vom zweiten Warenaufnahmeträger 34 auf den ersten Warenaufnahmeträger 16 abwärts gerichtete Stufe entsteht. Der zweite Warenaufnahmeträger 34 stützt sich dabei wiederum auf den ersten Warenaufnahmeträger 16 ab.

Anschließend werden die auszulagernden Waren 2 von der Warentransportvorrichtung 7 an die Übernahmestation 15 übergeben. Dabei werden die Waren 2 mit Hilfe der Ein- und Auslagervorrichtung 33 vom zweiten Warenaufnahmeträger 34 auf den ersten Warenaufnahmeträger 16 in z-Richtung gefördert.

Wurden die auszulagernden Waren 2 auf einem ersten Warenaufnahmeträger 16 der Übernahmestation 14 übernommen, wird dieser aus einer Übernahmestellung in eine Abgabestellung verstellt. Danach werden die Waren 2 mittels der Warenübergabevorrichtung 24 vom Warenaufnahmeträger 16 auf den Warenaufnahmeträger 23 des Vertikalförderers 18 abgefördert. Danach wird der Hubrahmen 22 mit dem Warenaufnahmeträger 23 vertikal auf Höhe einer Fördertechnikebene verstellt und die Waren 2 vom Warenaufnahmeträger 23 des Vertikalförderers 18 auf den Warenaufnahmeträger 25 der zweiten Fördertechnik 27 gefördert. Die Förderbewegung der Ware 2 zwischen den Warenaufnahmeträgern 23, 25 kann über die Warenübergabevorrichtung 24 erfolgen. Die zweite Fördertechnik 27 fördert die Waren 2 zu einem Kommissionierarbeitsplatz oder einen Packarbeitsplatz.

Beim Auslagervorgang können die Waren 2 als Hängewarengruppe gefördert und gelagert werden. Grundsätzlich ist es aber auch möglich, dass die Waren 2 vereinzelt gefördert und gelagert werden. Dies ist beispielsweise dann der Fall, wenn zu einem Kommissioniervorgang / Packvorgang aus einer Hängewarengruppe nur eine einzige Ware 2 erforderlich ist.

Zusammenfassend wird also ein Betriebsverfahren für ein automatisiertes Lagersystem 1 für Hängewaren 2, welche an Kleiderbügeln 4 aufgehängt sind, angegeben, wobei das Lagersystem 1 ein Lagerregal 5 mit in übereinander liegenden und im Wesentlichen horizontalen Lagerebenen 13 angeordneten Lagerbereichen für die Hängewaren 2 und zumindest eine vor dem Lagerregal 5 in einer ersten Richtung x verfahrbare Warentransportvorrichtung 7 umfasst, aufweisend die Schritte
- Bewegen der Warentransportvorrichtung 7 in der ersten Richtung x in eine Warenübergabeposition im Bereich eines ersten Warenaufnahmeträgers 12 des Lagerregals 5, wobei eine Längserstreckung des ersten Warenaufnahmeträgers 12 in einer zweiten Richtung z senkrecht zur ersten Richtung x ausgerichtet ist,
- Bewegen eines auf der Warentransportvorrichtung 7 verstellbar angeordneten und sich in der zweiten Richtung z erstreckenden, zweiten Warenaufnahmeträgers 34 in der zweiten Richtung z bis zum ersten Warenaufnahmeträger 12,
- Bewegen von Mitnahmeorganen 54 einer Ein- und Auslagervorrichtung 33 von einer Freigabestellung, in welcher die Mitnahmeorgane 54 quer zur zweiten Richtung z vom ersten Warenaufnahmeträger 12 wegbewegt sind, in eine Betätigungsstellung, in welcher die Mitnahmeorgane 54 quer zur zweiten Richtung z zum ersten Warenaufnahmeträger 12 hin bewegt sind, wobei die Freigabestellung zur Freigabe der Kleiderbügel 4 und die Betätigungsstellung zur Mitnahme der Kleiderbügel 4vorgesehen ist und
- Bewegen der Hängewaren 2 vom ersten Warenaufnahmeträger 12 auf den zweiten Warenaufnahmeträger 34 oder umgekehrt mit Hilfe der in der zweiten Richtung z bewegbaren Einund Auslagervorrichtung 33.

Die Mitnahmeorgane 54 werden bei der Bewegung von der Freigabestellung in die Betätigungsstellung in einen Aufnahmeabschnitt 49 des ersten Warenaufnahmeträgers 12 und/oder des zweiten Warenaufnahmeträgers 34 hinein bewegt.

Alternativ oder zusätzlich wird
- der Bewegung der Mitnahmeorgane 54 quer zur zweiten Richtung z und zum ersten/zweiten Warenaufnahmeträger 12, 34 hin eine Bewegung in der zweiten Richtung z überlagert und/oder
- die Bewegung der Mitnahmeorgane 54quer zur zweiten Richtung z und zum ersten/zweiten Warenaufnahmeträger 12, 34 hin erfolgt an einer anderen Stelle als die Bewegung der Mitnahmeorgane 54 quer zur zweiten Richtung z und vom ersten/zweiten Warenaufnahmeträger 12, 34 weg.

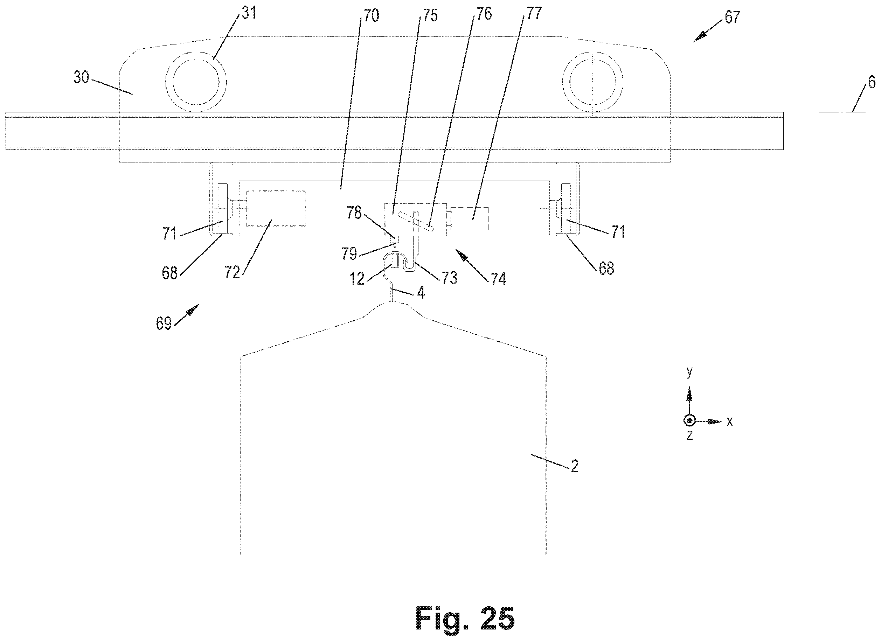

In den gemeinsam beschriebenen Fig. 25 bis 28 ist eine weitere Ausführung einer Warentransportvorrichtung 67 beziehungsweise eine weitere Ausführung eines automatisierten Lagersystems 80 zur Lagerung hängender Waren 2 gezeigt.

Die Fig. 25 zeigt eine alternative Ausführungsform einer Warentransportvorrichtung 67 auf einer der Fahrebenen 6. Die Warentransportvorrichtung 67 ist nach dieser Ausführung durch ein Einebenenregalbediengerät gebildet und weist einen Grundrahmen 30, Laufräder 31 und einen Fahrantrieb (nicht näher dargestellt) auf. Die Laufräder 31 sind an den beiden Längsseiten des Grundrahmens 30 angeordnet. Der Fahrantrieb der Warentransportvorrichtung 67 kann dem in den Figuren 2 und 3 beschriebenen Fahrantrieb 32 der Warentransportvorrichtung 7 entsprechen. Zusätzlich sind auf einer Unterseite der Warentransportvorrichtung 67 am Grundrahmen 30 befestigte und parallel zur z-Richtung mit gegenseitigem Abstand verlaufende Führungsschienen 68 angeordnet.

Ferner ist der Warentransportvorrichtung 67 eine Ein- und Auslagervorrichtung 69 zugeordnet, welche nach der gezeigten Ausführung ein relativ zur Warentransportvorrichtung 67 in der z-Richtung bewegbares, selbstfahrendes Ein- und Auslagerfahrzeug umfasst oder aus diesem besteht.

Die Ein- und Auslagervorrichtung 69 umfasst einen Grundrahmen 70, Laufrollen 71, einen Fahrantrieb mit einem Antriebsmotor 72 und einen Warenaufnahmeträger 73. Ebenso kann die Ein- und Auslagervorrichtung 69 (d.h. das Ein- und Auslagerfahrzeug) einen Energiespeicher aufweisen, um den Fahrantrieb und eine noch näher zu beschreibende Verstellvorrichtung für den Warenaufnahmeträger 73 sowie eine Steuerelektronik mit Energie zu versorgen. Die Laufrollen 71 sind an den beiden Längsseiten des Grundrahmens 70 angeordnet und bilden ein Fahrwerk. Die Ein- und Auslagervorrichtung 69 kann auf den Führungsschienen 68 in z-Richtung bewegt werden und die Warentransportvorrichtung 67 gegebenenfalls auch verlassen. Die Energieversorgung der Ein- und Auslagervorrichtung 69 kann beispielsweise autonom oder mit Hilfe eines mit der Warentransportvorrichtung 67 verbundenen Schleppkabels erfolgen.

Der Fahrantrieb der Ein- und Auslagervorrichtung 69 umfasst nach einer ersten Ausführung zumindest einen elektrischen Antriebsmotor 72 und ein endlos umlaufendes Zugmittel (nicht dargestellt) sowie Antriebswellen (nicht dargestellt). An den Antriebswellen sind endseitig die Laufrollen 71 befestigt. Das Zugmittel ist mit einem Antriebsabschnitt an den Antriebswellen geführt. Auf diese Weise sind die beiden Laufrollen 71 auf der ersten Seite des Ein- und Auslagerfahrzeuges angetrieben. Die Antriebswellen übertragen das Antriebsmoment von der ersten Seite auf die zweite Seite des Ein- und Auslagerfahrzeuges, sodass auch die beiden Laufrollen 71 auf der zweiten Seite angetrieben sind. Dieser für die Ein- und Auslagervorrichtung 69 vorgeschlagene Antrieb entspricht dem in den Figuren 2 und 3 beschriebenen Fahrantrieb 32 der Warentransportvorrichtung 7.

Nach einer zweiten Ausführung kann auch nur ein Laufradpaar angetrieben werden, beispielweise das in Fahrtrichtung des Ein- und Auslagerfahrzeuges vordere Laufradpaar oder hintere Laufradpaar.

Wie aus der Fig. 25 ersichtlich ist, ist der Warenaufnahmeträger 73 an der Ein- und Auslagervorrichtung 69 (d.h. am Ein- und Auslagerfahrzeug) daher getrennt von der Warentransportvorrichtung 6 angeordnet. Der Warenaufnahmeträger 73 ist über eine Verstellvorrichtung 74 in x-Richtung und y-Richtung verstellbar am Grundrahmen 70 gelagert.

Die Verstellvorrichtung 74 umfasst nach gezeigter Ausführung in z-Richtung mit Abstand angeordnete Lagerplatten 75, an welche jeweils eine Kulissenführung 76 angeordnet ist, und einen Antriebsmotor 77, welcher mit dem Warenaufnahmeträger 73 bewegungsgekoppelt ist. Der Warenaufnahmeträger 73 ist über Führungsmittel an den Kulissenführungen 76 verschiebbar gelagert und kann durch Betätigung des Antriebsmotors 77 der Warenaufnahmeträger 73 in x-Richtung und y-Richtung zwischen einer ersten Endstellung (rechtes Ende der Kulissenführungen 76) und einer zweiten Endstellung (linkes Ende der Kulissenführungen 76) bewegt werden. Fig. 25 zeigt eine Zwischenstellung, in welcher die Kleiderbügel 4 der Waren 2 gerade vom Warenaufnahmeträger 73 ergriffen werden. Wird der Warenaufnahmeträger 73 aus der Zwischenstellung in die zweite Endstellung bewegt, so werden die Kleiderbügel 4 der Waren 2 von dem ersten Warenaufnahmeträger 12 (der zum Beispiel im Lagerregal 5 angeordnet ist) abgehoben und auf den Warenaufnahmeträger 73 des Ein- und Auslagerfahrzeuges übernommen. Wird der Warenaufnahmeträger 73 aus der Zwischenstellung in die erste Endstellung bewegt, so werden die Kleiderbügel 4 der Waren 2 von dem Warenaufnahmeträger 73 des Ein- und Auslagerfahrzeuges auf den ersten Warenaufnahmeträger 12 abgegeben. Eine horizontale Aufnahmeebene auf dem Warenaufnahmeträger 73 verläuft in der ersten Stellung demgemäß unterhalb der Lagerebene 13 und in der zweiten Stellung oberhalb der Lagerebene 13.

Die in Fig. 25 gezeigte Kulissenführung 76 für den Warenaufnahmeträger 73 ist zwar vorteilhaft aber nicht zwingend. Denkbar ist auch, dass der Warenaufnahmeträger 73 durch zwei getrennte Antriebe in y-Richtung und x-Richtung verschoben werden kann. Diese Antriebe können so angesteuert werden, dass der Warenaufnahmeträger 73 zuerst in x-Richtung und dann in y-Richtung bewegt wird oder auch so, dass sich der Warenaufnahmeträger 73 entlang einer der Kulissenführung 76 entsprechenden Geraden bewegt. Selbstverständlich sind auch komplexere Bewegungsabläufe vorstellbar. Denkbar ist weiterhin, dass die Verstellvorrichtung 74 derart gestaltet, dass sich der Warenaufnahmeträger 73 ausschließlich in der y-Richtung zwischen der ersten Stellung und zweiten Stellung verstellbar am Grundrahmen 70 bewegt.

In dem gezeigten Beispiel umfasst die Ein- und Auslagervorrichtung 69 weiterhin eine optionale Mitnehmerleiste 78 mit Mitnahmeorganen 79, die hier fix am Grundrahmen 70 montiert ist. Beim Hochheben des Warenaufnahmeträgers 73 werden die Haken der Kleiderbügel 4 in die Zwischenräume zwischen den Mitnahmeorganen 79 gehoben, sodass die Ware 2 beim Beschleunigen der Ein- und Auslagervorrichtung 69 in z-Richtung nicht vom Warenaufnahmeträger 73 herunterfallen kann. Mit einem gleichwertigen Ergebnis kann der Warenaufnahmeträger 73 auch rechenartig ausgebildet sein, sodass die Haken der Kleiderbügel 4 beim Hochheben des Warenaufnahmeträgers 73 im Zwischenraum zwischen den Zinken des Warenaufnahmeträgers 73 zu liegen kommen oder beim Beschleunigen der der Ein- und Auslagervorrichtung 69 in z-Richtung in den genannten Zwischenraum rutschen.

Nach einer weiteren Ausführungsvariante können die Mitnehmerleiste 78 und/oder die Mitnahmeorgane 79 vertikal verstellbar sein. Auf diese Weise ist es möglich, die Waren 2 direkt auf dem ersten Warenaufnahmeträger 12 zu verschieben, ohne dass diese mit dem Warenaufnahmeträger 73 hochgehoben werden müssen. Das bisher zur Ein- und Auslagervorrichtung 33 Gesagte gilt uneingeschränkt auch für die Mitnehmerleiste 78 und die Mitnahmeorgane 79. Die Mitnehmerleiste 78 tritt dabei insbesondere an die Stelle der dritten Schiene 43 und die Mitnahmeorgane 79 insbesondere an die Stelle der Mitnahmeorgane 54. Grundsätzlich kann die Mitnehmerleiste 78 in z-Richtung relativ zum Grundrahmen 70 der Ein- und Auslagervorrichtung 69 verstellbar sein, in der Regel ist dies aber nicht notwendig, da die Bewegung der Mitnehmerleiste 78 und der Mitnahmeorgane 79 in z-Richtung ja durch eine Fahrbewegung der Ein- und Auslagervorrichtung 69 erfolgen kann.

Zusammenfassend kann gesagt werden, dass die Ein- und Auslagervorrichtung 69 der Warentransportvorrichtung 67 in diesem Beispiel durch ein selbstfahrendes Ein- und Auslagerfahrzeug (ein so genanntes Kanalfahrzeug) gebildet ist, das zum Bewegen der Hängewaren 2 zwischen dem ersten Warenaufnahmeträger 12 und dem zweiten Warenaufnahmeträger 73 in z-Richtung in das Lagerregal 5 respektive in die Lagerbereiche des Lagerregals 5 fährt. Der zweite Warenaufnahmeträger 73 ist hier nicht am Rahmen 30 der Warentransportvorrichtung 67, sondern an der Ein- und Auslagervorrichtung 69 angeordnet. Zwischen der in x-Richtung bewegbaren Warentransportvorrichtung 67 und dem in z-Richtung bewegbaren "Kanalfahrzeug" 69 besteht nicht notwendigerweise eine mechanische Verbindung, wenn das Kanalfahrzeug 69 (vollständig) in das Regal 5 eingefahren ist. Insbesondere kann aber eine elektrische Verbindung zwischen der Warentransportvorrichtung 67 und dem Kanalfahrzeug 69 bestehen, beispielsweise über ein Schleppkabel. Im Speziellen kann das "Kanalfahrzeug" 69 auf die Warentransportvorrichtung 67 aufgenommen werden und von dieser in x-Richtung transportiert werden. Das "Kanalfahrzeug" 69 bildet in diesem Fall ein "Tochterfahrzeug", die Warentransportvorrichtung 67 fungiert als "Mutterfahrzeug".

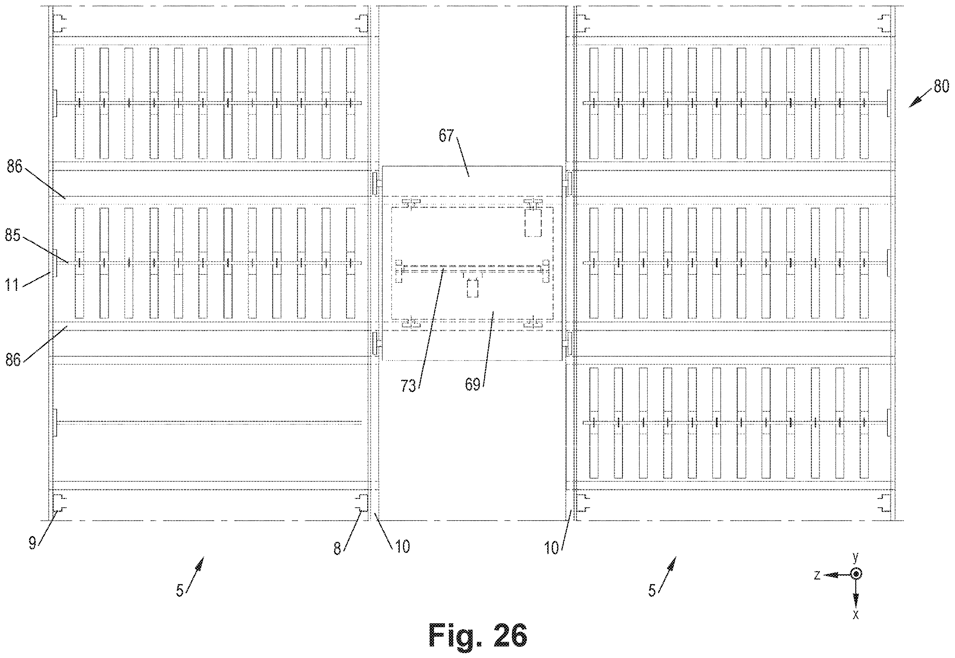

In den gemeinsam beschriebenen Fig. 26 bis 28 ist eine weitere Ausführung eines automatisierten Lagersystems 80 zur Lagerung hängender Waren 2 gezeigt, das zusätzlich ein automatisiertes Warenverteilsystem 81 umfasst. Das Warenverteilsystem 81 umfasst die nachfolgend beschriebene Übergabe- und Übernahmestation 82, 83 und den/die Vertikalförderer 84.

Das Lagersystem 80 umfasst nach gezeigter Ausführung Lagerregale 5 und in übereinander liegenden Fahrebenen 6 vor den Lagerregalen 5 in einer ersten Richtung (x-Richtung) unabhängig voneinander verfahrbare Warentransportvorrichtungen 67. Die Warentransportvorrichtungen 67 dienen dem Einlagern der Waren 2 in das Lagerregal 5 bzw. Auslagern der Waren 2 aus dem Lagerregal 5. Üblicherweise ist ein solches Lagersystem 80 in jeder Fahrebene 6 mit einer Warentransportvorrichtung 67 versehen. Es können aber auch weniger Warentransportvorrichtungen 67 als Fahrebenen 6 vorhanden sein, wobei dann die Warentransportvorrichtungen 67 über eine nicht dargestellte Hebevorrichtung zwischen den Fahrebenen 6 umgesetzt werden kann.

Die Lagerregale 5 umfassen vertikale vordere Regalsteher 8, vertikale hintere Regalsteher 9, vordere Längstraversen 10, hintere Längstraversen 11 und erste Warenaufnahmeträger 85. Die vorderen Längstraversen 10 verlaufen übereinander jeweils horizontal in x-Richtung und sind an den vorderen Stehern 8 befestigt, wobei die paarweise einander gegenüberliegenden vorderen Längstraversen 10 jeweils eine Fahrebene 6 ausbilden, entlang welcher die Warentransportvorrichtung 67 bewegt wird. Die vorderen Längstraversen 10 bilden somit je Fahrebene 6 Führungsschienen für die Warentransportvorrichtung 67. Die hinteren Längstraversen 11 verlaufen horizontal in x-Richtung und sind an den hinteren Stehern 9 befestigt. Die Lagerregale 5 umfassen ferner in den übereinander liegenden Lagerebenen 13 horizontal in z-Richtung und mit gegenseitigem Abstand verlaufende Führungsschienen 86, wobei je erstem Warenaufnahmeträger 85 eine erste Führungsschiene 86 und eine zweite Führungsschienen 86 vorgesehen sind.

Die erste Führungsschiene 86 und die zweite Führungsschienen 86 sind mit der vorderen Längstraverse 10 und hinteren Längstraverse 11 verbunden und haben vorzugsweise einen C-förmigen Querschnitt (vergleiche die in Fig. 25 im Zusammenhang mit der Warentransportvorrichtung 67 dargestellten Führungsschienen 68).

Die ersten Warenaufnahmeträger 85 erstrecken sich in einer Lagerebene 13 horizontal in Tiefenrichtung des Lagerregales 5 (z-Richtung) zwischen den vorderen Längstraversen 10 und hinteren Längstraversen 11, wobei die Waren 2 über die Kleiderbügeln 4 an den ersten Warenaufnahmeträgern 85 aufgehängt werden. Die ersten Warenaufnahmeträger 85 sind ortsfest im Lagerregal 5 angeordnet, beispielsweise an den hinteren Längstraversen 11 vorkragende Tragholme, welche über Montageplatten an den hinteren Längstraversen 11 angeschraubt sind. Jeder erste Warenaufnahmeträger 85 bildet einen Lagerplatz, wobei an einem Lagerplatz eine Vielzahl von Waren 2 gelagert werden können. Somit bildet jedes Lagerregal 1 in den übereinander liegenden Lagerebenen 13 jeweils nebeneinander eine Vielzahl von Lagerplätzen bzw. Lagerbereichen aus.

Die Ein- und Auslagervorrichtung 69 kann mittels der Laufrollen 71 auf den Führungsschienen 68 der Warentransportvorrichtung 67 und den Führungsschienen 86 des Lagerregals 5 bewegt werden.

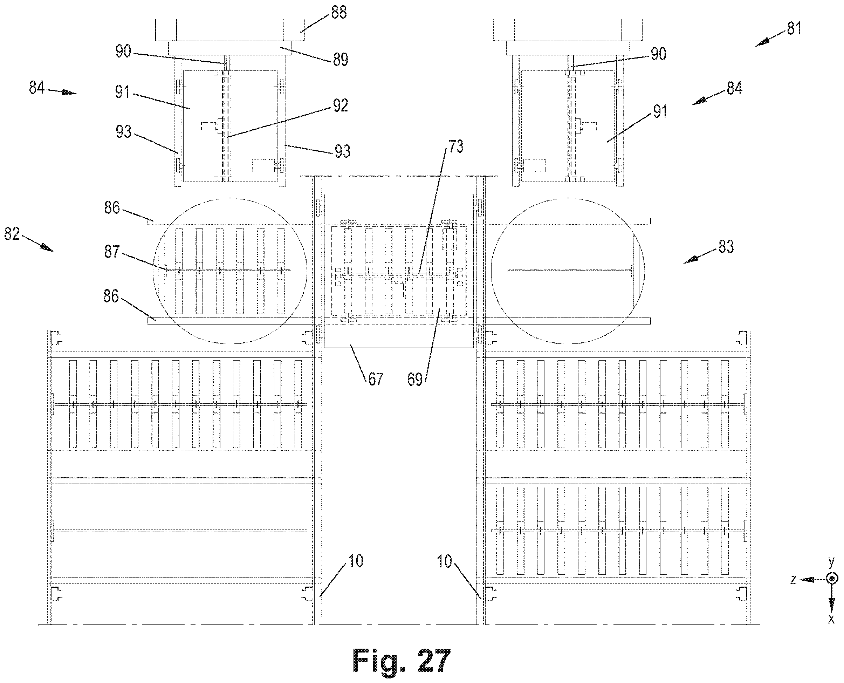

Wie in Fig. 27 schematisch gezeigt, kann das Lagersystem 80 beziehungsweise dessen Warenverteilsystem 81 ferner eine Übergabestation 82 aufweisen, entlang welcher die vorderen Längstraversen 10 je Fahrebene 6 verlaufen und an welcher einzulagernde Hängewaren 2 von der Warentransportvorrichtung 67 abgeholt werden, und eine Übernahmestation 83, entlang welcher die vorderen Längstraversen 10 je Fahrebene 6 verlaufen und an welcher auszulagernde Hängewaren 2 von der Warentransportvorrichtung 67 abgegeben werden.

In diesem Ausführungsbeispiel weisen die Übergabestation 82 und Übernahmestation 83 je Lagerebene 13 zumindest einen ersten Warenaufnahmeträger 87 und wiederum Führungsschienen 86 auf. Sind die Übergabestation 82 und Übernahmestation 83 zu beiden Seiten der Warentransportvorrichtung 67 angeordnet, ist je Lagerebene 13 ein erster Warenaufnahmeträger 87 in der Übergabestation 82 und je Lagerebene 13 ein erster Warenaufnahmeträger 87 in der Übernahmestation 83 angeordnet.

Die ersten Warenaufnahmeträger 87 und Führungsschienen 86 sind je Lagerebene 13 über einen Stellantrieb (nicht dargestellt) zwischen einer Aufnahmestellung und einer Übergabestellung bzw. Übernahmestellung und Abgabestellung verstellbar. In der Aufnahmestellung kann eine Warenübergabevorrichtung 91 (selbstfahrendes Umlagerfahrzeug) vom Vertikalförderer 84 in die Übergabestation 82 fahren. Danach wird die Ware 2 von einem Warenaufnahmeträger 92 des Umlagerfahrzeuges 91 auf den Warenaufnahmeträger 87 der Übergabestation 82 abgegeben. Der Warenaufnahmeträger 87 verläuft in der Aufnahmestellung parallel zur x-Richtung und in der Übergabestellung parallel zur z-Richtung. In der Abgabestellung kann eine Warenübergabevorrichtung 91 (selbstfahrendes Umlagerfahrzeug) von der Übernahmestation 83 auf den Vertikalförderer 84 fahren. Zuvor wird die Ware 2 vom Warenaufnahmeträger 87 der Übernahmestation 83 auf den Warenaufnahmeträger 92 des Umlagerfahrzeuges übernommen. Der Warenaufnahmeträger 87 verläuft in der Abgabestellung parallel zur x-Richtung und in der Übernahmestellung parallel zur z-Richtung. Der Stellantrieb umfasst eine über einen Antriebsmotor (nicht dargestellt) um eine Vertikalachse drehbare Montageplatte, auf welcher die Führungsschienen 86 und der zumindest eine Warenaufnahmeträger 87 montiert sind.

Der Warenaufnahmeträger 87 der Übergabe- bzw. Übernahmestation 82, 83 ist nach gezeigter Ausführung wie der erste Warenaufnahmeträger 85 des Lagerregales 5 gestaltet.

Der Vertikalförderer 84 verbindet die Lagerebenen 13 mit zumindest einer Fördertechnikebene und ist an der äußeren Längsseite der Lagerregale 5 angeordnet. Die Vertikalförderer 84 umfassen jeweils einen Führungsrahmen 88, einen heb- und senkbaren Hubrahmen 89, zumindest einen Warenaufnahmeträger 90 und eine Warenübergabevorrichtung 91 (selbstfahrendes Umlagerfahrzeug). Der zumindest eine Warenaufnahmeträger 90 ist am Hubrahmen 89 angeordnet und verläuft parallel zur x-Richtung. Der Warenaufnahmeträger 90 des Vertikalförderers 84 ist nach gezeigter Ausführung wie der erste Warenaufnahmeträger 85 des Lagerregales 5 gestaltet. Die Ware 2 kann mittels der Warenübergabevorrichtung 91 zwischen der Übergabe- bzw. Übernahmestation 82, 83 und dem Vertikalförderer 84 gefördert werden. Der Hubrahmen 89 ist mit Führungsschienen 93 ausgestattet, sodass die Warenübergabevorrichtung 91 entlang der Führungsschienen 86, 93 zwischen der Übergabe- bzw. Übernahmestation 82, 83 und dem Vertikalförderer 84 verfahrbar ist. Die Warenübergabevorrichtung 91 ist nach der gezeigten Ausführung als selbstfahrendes Umlagerfahrzeug (Einlagerfahrzeug) in der Übergabestation 82 und selbstfahrendes Umlagerfahrzeug (Auslagerfahrzeug) in der Übernahmestation 83 gestaltet, wobei das Umlagerfahrzeug relativ zum Vertikalförderer 84 und Übergabe- bzw. Übernahmestation 82, 83 in der x-Richtung bewegbar sind.

Der erste Vertikalförderer 84 schließt an eine erste Fördertechnik zum Antransport von Waren 2 und der zweite Vertikalförderer 83 schließt an eine zweite Fördertechnik zum Abtransport von Waren 2 an. Die erste Fördertechnik und zweite Fördertechnik sind bevorzugt automatisiert betrieben.

Die Warenübergabevorrichtung 91, welche im Bereich der Übergabe- bzw. Übernahmestation 82, 83 und dem Vertikalförderer 84 verfährt, ist bevorzugt identisch wie das Ein- und Auslagerfahrzeug 69 gestaltet, welches der Warentransportvorrichtung 67 zugeordnet ist. Dies gilt sowohl für das Umlagerfahrzeug (Einlagerfahrzeug), welches dem Einlager-Vertikalförderer 84 zugeordnet ist, als auch für das Umlagerfahrzeug (Auslagerfahrzeug), welches dem Auslager-Vertikalförderer 83 zugeordnet ist. Insbesondere kann für den Warenaufnahmeträger 92 dieselbe Verstellvorrichtung 74 wie für den Warenaufnahmeträger 73 verwendet werden. Auf diese Weise kann der Warenaufnahmeträger 92 in y-Richtung und z-Richtung (oder nur in y-Richtung) verstellt werden. Ebenso können beispielsweise der Fahrantrieb und die Mitnehmerleiste 78 sowie die Mitnahmeorgane 79 aus der Warentransportvorrichtung 67 übernommen werden. Grundsätzlich kann die Warenübergabevorrichtung 91 auch anders aufgebaut sein als die Warentransportvorrichtung 67, beispielsweise indem Teile der Warentransportvorrichtung 67 bei der Warenübergabevorrichtung 91 weggelassen oder abgeändert sind.

In dem dargestellten Beispiel ist die Ein- und Auslagervorrichtung 69 dazu eingerichtet, auf den Führungsschienen 68 der Warentransportvorrichtung 67 beziehungsweise auf den Führungsschienen 86 des Lagerregals 5 zu verfahren. Grundsätzlich spricht aber nichts dagegen, dass die Ein- und Auslagervorrichtung 69 auch auf den Führungsschienen 86, 93 zwischen dem Vertikalförderer 84 und der Übergabe- bzw. Übernahmestation 82, 83 verfährt. Dies ist dann möglich, wenn die genannten Einheiten baulich aufeinander abgestimmt sind und insbesondere wenn die Warenübergabevorrichtung 91 identisch wie das Ein- und Auslagerfahrzeug 69 aufgebaut ist.

In analoger Weise ist die Warenübergabevorrichtung 91 in dem dargestellten Beispiel dazu eingerichtet, auf den Führungsschienen 86, 93 zwischen dem Vertikalförderer 84 und der Übergabe- bzw. Übernahmestation 82, 83 verfahren. Grundsätzlich spricht aber nichts dagegen, dass die Warenübergabevorrichtung 91 auch auf den auf den Führungsschienen 68 der Warentransportvorrichtung 67 beziehungsweise auf den Führungsschienen 86 des Lagerregals 5 verfährt. Dies ist dann möglich, wenn die genannten Einheiten baulich aufeinander abgestimmt sind und insbesondere wenn die Warenübergabevorrichtung 91 identisch wie das Einund Auslagerfahrzeug 69 aufgebaut ist.

Im Nachfolgenden wird ein Einlagervorgang und Auslagervorgang beschrieben, wobei insbesondere auf die Figuren 26 bis 27 Bezug genommen wird.

### Einlagervorgang

Die einzulagernde Ware 2 wird über eine (nicht dargestellte) erste Fördertechnik zum Vertikalförderer 84 angefördert. Dort wird die Ware 2 von der ersten Fördertechnik auf das Umlagerfahrzeug (Einlagerfahrzeug) 91, welches mit dem Warenaufnahmeträger 92 versehen ist, gefördert. Danach wird der Hubrahmen 89 mit dem Umlagerfahrzeug 91 vertikal auf Höhe einer der Lagerebenen 13 verstellt. Ferner werden der Warenaufnahmeträger 87 und die Führungsschienen 86 in dieser Lagerebene 13 über einen Stellantrieb (nicht dargestellt) in die Aufnahmestellung verstellt. Danach kann das Umlagerfahrzeug 91 mit der Ware 2 vom Vertikalförderer 84 in die Übergabestation 82 (Puffer) bewegt werden. Dabei verfährt das Umlagerfahrzeug 91 entlang der Führungsschienen 93, 86.

Befindet sich das Umlagerfahrzeug 91 in der Übergabestation 82, wird der Warenaufnahmeträger 92 über die Verstellvorrichtung in y-Richtung und z-Richtung oder ausschließlich in y-Richtung verstellt und die Waren 2 vom Warenaufnahmeträger 92 auf den Warenaufnahmeträger 87 abgegeben. Danach fährt das Umlagerfahrzeug 91 wieder auf den Vertikalförderer 84 zurück, und der Warenaufnahmeträger 87 und die Führungsschienen 86 in dieser Lagerebene 13 werden in die Übergabestellung verstellt.

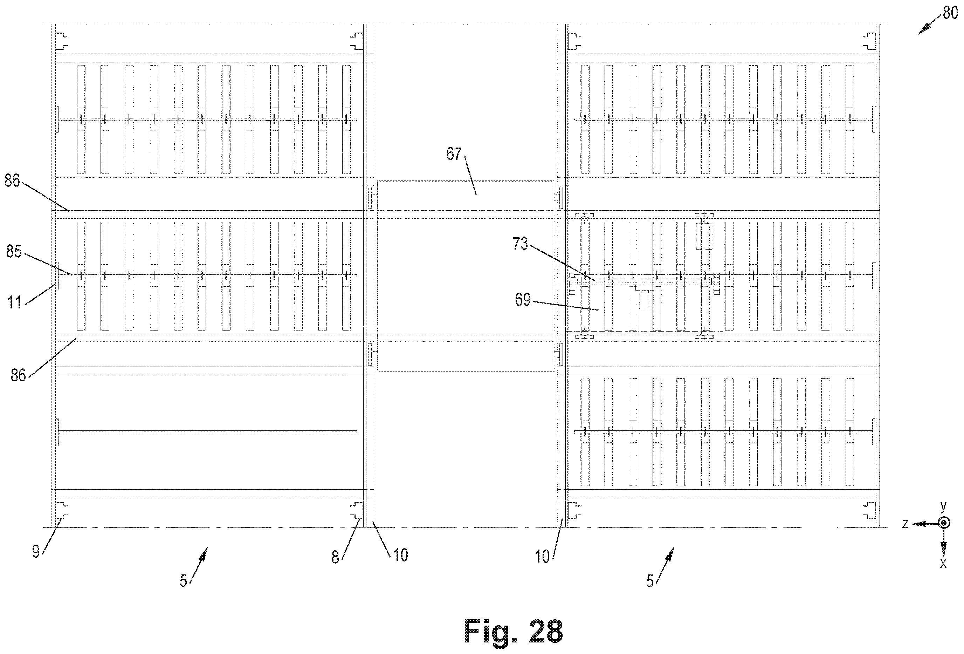

Die Warentransportvorrichtung 67 wird in x-Richtung vor dem Warenaufnahmeträger 87 derart positioniert, dass die Ein- und Auslagervorrichtung 69 (Ein- und Auslagerfahrzeug) entlang der Führungsschienen 68, 86 in z-Richtung zwischen der Warentransportvorrichtung 67 und der Übergabestation 82 verfahren kann (Fig. 26). Befindet sich die Ein- und Auslagervorrichtung 69 in der Übergabestation 82 (Fig. 28), wird der Warenaufnahmeträger 73 über die Verstellvorrichtung 74 in x-Richtung und y-Richtung oder ausschließlich in y-Richtung verstellt, und die Waren 2 werden vom Warenaufnahmeträger 87 auf den Warenaufnahmeträger 73 übernommen.

Danach fährt die Ein- und Auslagervorrichtung 69 (Ein- und Auslagerfahrzeug) wieder auf die Warentransportvorrichtung 67 zurück.

Anschließend wird die Warentransportvorrichtung 67 mit der Ein- und Auslagervorrichtung 69 (Ein- und Auslagerfahrzeug), welches die Ware 2 auf dem Warenaufnahmeträger 73 mitführt, in x-Richtung bis zu einem definierten Lagerplatz verfahren und vor einem Warenaufnahmeträger 85 positioniert.

Nunmehr kann die Ein- und Auslagervorrichtung 69 (Ein- und Auslagerfahrzeug) entlang der Führungsschienen 68. 86 in z-Richtung zwischen der Warentransportvorrichtung 67 und dem Lagerregal 5 verfahren werden. Befindet sich die Ein- und Auslagervorrichtung 69 im Lagerregal 5, wird der Warenaufnahmeträger 73 über die Verstellvorrichtung 74 in x-Richtung und y-Richtung oder ausschließlich in y-Richtung verstellt, und die Waren 2 werden vom Warenaufnahmeträger 73 auf den Warenaufnahmeträger 85 abgegeben. Danach fährt die Ein- und Auslagervorrichtung 69 (Ein- und Auslagerfahrzeug) wieder auf die Warentransportvorrichtung 67 zurück.

Die Waren 2 können beim Einlagervorgang als Hängewarengruppe oder vereinzelt gefördert und gelagert werden.

### Auslagervorgang

Die Warentransportvorrichtung 67 wird hierzu mit der Ein- und Auslagervorrichtung 69 (Einund Auslagerfahrzeug) in x-Richtung verfahren und vor einem der Warenaufnahmeträger 85 positioniert (siehe Fig. 26).

Danach kann die Ein- und Auslagervorrichtung 69 (Ein- und Auslagerfahrzeug) entlang der Führungsschienen 68, 86 in z-Richtung zwischen der Warentransportvorrichtung 67 und dem Lagerregal 5 verfahren werden. Befindet sich die Ein- und Auslagervorrichtung 69 im Lagerregal 5 (Fig. 28), wird der Warenaufnahmeträger 73 über die Verstellvorrichtung 74 in x-Richtung und y-Richtung oder ausschließlich in y-Richtung verstellt, und die Waren 2 werden vom Warenaufnahmeträger 85 abgehoben und auf dem Warenaufnahmeträger 73 übernommen. Danach fährt die Ein- und Auslagervorrichtung 69 (Ein- und Auslagerfahrzeug) wieder auf die Warentransportvorrichtung 67 zurück.

Anschließend wird die Warentransportvorrichtung 67 mit der Ein- und Auslagervorrichtung 69 (Ein- und Auslagerfahrzeug), welches die Ware 2 auf dem Warenaufnahmeträger 73 mitführt, in x-Richtung bis zur Übernahmestation 83 verfahren und vor einem Warenaufnahmeträger 87 positioniert.

Anschließend werden die auszulagernden Waren 2 von der Ein- und Auslagervorrichtung 69 (Ein- und Auslagerfahrzeug) an die Übernahmestation 83 übergeben. Dabei wird die Ein- und Auslagervorrichtung 69 (Ein- und Auslagerfahrzeug) entlang der Führungsschienen 68, 86 in z-Richtung zwischen der Warentransportvorrichtung 67 und der Übernahmestation 83 verfahren. Befindet sich die Ein- und Auslagervorrichtung 69 in der Übernahmestation 83, wird der Warenaufnahmeträger 73 über die Verstellvorrichtung 74 in x-Richtung und y-Richtung oder ausschließlich in y-Richtung verstellt, und die Waren 2 werden vom Warenaufnahmeträger 73 auf den Warenaufnahmeträger 87 abgegeben. Danach fährt die Ein- und Auslagervorrichtung 69 (Ein- und Auslagerfahrzeug) wieder auf die Warentransportvorrichtung 67 zurück.

Anschließend werden der Warenaufnahmeträger 87 und die Führungsschienen 86 der Übernahmestation 83 aus einer Übernahmestellung in eine Abgabestellung verstellt. Danach verfährt die Warenübergabevorrichtung 91 (Umlagerfahrzeug) entlang der Führungsschienen 93, 86 vom Vertikalförderer 84 zur Übernahmestation 83. Befindet sich die Warenübergabevorrichtung 8 in der Übernahmestation 83, wird der Warenaufnahmeträger 92 über die Verstellvorrichtung in y-Richtung und z-Richtung oder ausschließlich in y-Richtung verstellt und die Waren 2 vom Warenaufnahmeträger 87 auf den Warenaufnahmeträger 92 übernommen.

Danach kann das Umlagerfahrzeug 91 mit der Ware 2 aus der Übernahmestation 83 auf den Vertikalförderer 84 bewegt werden.

Schließlich werden die Waren 2 mittels der zweiten Fördertechnik 27 (nicht dargestellt) zu einem Kommissionierarbeitsplatz oder einen Packarbeitsplatz gefördert.

In dem dargestellten Beispiel werden sowohl eine Ein- und Auslagervorrichtung 69 als auch eine Warenübergabevorrichtung 91 dazu verwendet, um die Waren 2 ein- beziehungsweise auszulagern. Grundsätzlich könnte der Ein- und Auslagervorgang aber auch ohne Warenübergabevorrichtung 91 und somit nur mit einer Ein- und Auslagervorrichtung 69 oder aber auch ohne Ein- und Auslagervorrichtung 69 und somit nur mit einer Warenübergabevorrichtung 91 ausgeführt werden. Dies ist wie erwähnt dann möglich, wenn die genannten Einheiten baulich aufeinander abgestimmt sind und insbesondere wenn die Warenübergabevorrichtung 91 identisch wie das Ein- und Auslagerfahrzeug 69 aufgebaut ist.

In diesem Ausführungsbeispiel werden die Haken der Kleiderbügel 4 auf den Warenaufnahmeträgern 73, 85, 87, nicht geschoben, sondern mit dem Warenaufnahmeträger 73 von den Warenaufnahmeträgern 85, 87 angehoben bzw. mit dem Warenaufnahmeträger 73 auf die Warenaufnahmeträger 85, 87, 73 abgesenkt.

Grundsätzlich wäre aber auch vorstellbar, dass die Ware 2 auf Warenaufnahmeträgern 85, 87, 90 verschoben wird, sofern die Ein- und Auslagervorrichtung 69 und/oder die Warenübergabevorrichtung 91 über eine vertikal verstellbare Mitnehmerleiste 78 beziehungsweise vertikal verstellbare Mitnahmeorgane 79 verfügen.

In Bezug auf die Ein- und Auslagervorrichtung 33 bzw. die Teleskopiereinheit ist noch eine weitere, zu der in den Figuren 2 und 3 dargestellten Ausführungsvariante alternative, Ausführungsvariante vorstellbar. Bei dieser ist die dritte Schiene 43 der Ein- und Auslagervorrichtung 33 bzw. der Teleskopiereinheit mit einem motorisch angetriebenen Zugmittel (z.B. Riemen oder Kette) ausgestattet, welches um Umlenkräder geführt ist, die an gegenüber liegenden Enden der dritten Schiene 43 gelagert sind. Auf dem Zugmittel sind die nach außen weißenden Mitnahmeorganen 54, 79 angeordnet.

Sind nun Waren 2 von der Warentransportvorrichtung 7 in das Lagerregal 5 einzulagern, wird die Ein- und Auslagervorrichtung 33 in x-Richtung derart positioniert, dass der zweite Warenaufnahmeträger 34 und der erste Warenaufnahmeträger 12 fluchtend verlaufen. Danach wird der zweite Warenaufnahmeträger 34 in die in Fig. 17 und 19 dargestellte Übergabestellung bewegt. Während der Ausfahrbewegung der Ein- und Auslagervorrichtung 33 in z-Richtung wird das Zugmittel nicht angetrieben (blockiert), sodass die Kleiderbügel 4 zwischen den Mitnahmeorganen 54, 79 vom Warenaufnahmeträger 34 auf den Warenaufnahmeträger 12 geschoben werden. Anschließend wird die Ein- und Auslagervorrichtung 33 in z-Richtung in die Ausgangsstellung eingefahren und dabei das Zugmittel gegenläufig um im Wesentlichen mit derselben Geschwindigkeit zur Einfahrbewegung angetrieben, sodass die eingelagerte Ware 2 am Warenaufnahmeträger 12 verbleiben.

Sind Waren 2 von der Warentransportvorrichtung 7 in das Lagerregal 5 auszulagern, wird die Warentransportvorrichtung 7 in x-Richtung derart positioniert, dass der zweite Warenaufnahmeträger 34 und der erste Warenaufnahmeträger 12 fluchtend verlaufen. Danach wird der zweite Warenaufnahmeträger 34 in die in Fig. 20 dargestellte Übergabestellung bewegt. Sodann wird mit der Verstellung der Ein- und Auslagervorrichtung 33 in z-Richtung das Zugmittel gegenläufig und synchron zur Ausfahrbewegung angetrieben, sodass die Kleiderbügel 4 zwischen den Mitnahmeorganen 54, 79 aufgenommen werden. Ist die Ein- und Auslagervorrichtung 33 ausgefahren, wird das Zugmittel angehalten. Anschließend wird die Ein- und Auslagervorrichtung 33 in z-Richtung in die Ausgangsstellung eingefahren und dabei das Zugmittel nicht angetrieben (blockiert), sodass die auszulagernde Ware 2 mittels der Mitnahmeorgane 54, 79 vom ersten Warenaufnahmeträger 12 auf den zweiten Warenaufnahmeträger 34 geschoben werden. Die Mitnahmeorgane 54, 79 hintergreifen dabei die Kleiderbügel 4. Auf gleiche Weise erfolgt die Übernahme der Waren 2 von der Übergabestation 14 und Übergabe der Waren 2 an die Übernahmestation 15.

Fig. 29 zeigt nun eine beispielhafte Steuerung 94 für den Teleskopiermotor 44 und die Hubmotoren 47a, 47b sowie beispielhaft auf der Warentransportvorrichtung 7 verwendete Sensoren.

Konkret ist die Steuerung 94 mit dem Teleskopiermotor 44 und den Hubmotoren 47a, 47b verbunden und kann diese beispielsweise für die überlagerte Bewegung der Mitnahmeorgane 54 in vertikaler und horizontaler Richtung (siehe auch Fig. 16) und/oder die Bewegung der Mitnahmeorgane 54 bei der Warenaufnahme, welche versetzt zum Absetzten der Hängewaren 2 erfolgt (siehe auch Fig. 15), eingesetzt werden.

In einer ersten Ausführungsform sind beidseits der Warentransportvorrichtung 7 Tiefenmeßsensoren 95a, 95b, angeordnet, deren Erfassungsbereich in die zweite Richtung z weist. In dem konkret dargestellten Beispiel sind die Tiefenmeßsensoren 95a, 95b am Grundrahmen 30 angeordnet, sie könnten aber auch an anderer Stelle positioniert sein. Mit Hilfe dieser Tiefenmeßsensoren 95a, 95b kann ein Erfassungsbereich, der sich von der Warentransportvorrichtung 7 aus in der zweiten Richtung z erstreckt, auf das Vorhandensein eines Objekts überprüft werden. Wird ein nicht erwartetes Objekt im Erfassungsbereich detektiert, wird ein Alarmsignal ausgegeben. Beispielsweise könnten ungewollte Hängewaren 4 von ersten Warenaufnahmeträgern 12 herunterfallen und auf darunter liegenden ersten Warenaufnahmeträgern 12 liegen bleiben. In diesem Fall könnte es bei einem Ein- oder Auslagervorgang zu Problemen kommen. Vorzugsweise wird der Ein- oder Auslagervorgang dann angehalten und ein Alarm ausgegeben. Denkbar ist auch, dass ein Ausfahrweg der Ein- und Auslagervorrichtung 33 bzw. der Teleskopiereinrichtung (Schiene 41, 42, 43) mit Hilfe der Tiefenmeßsensoren 95a, 95b gemessen wird.

Alternativ oder zusätzlich sind in einer zweiten Ausführungsform Tiefenmeßsensoren 96a, 96b auf beiden Seiten der dritten Schiene 43 der Ein- und Auslagervorrichtung 33 bzw. Teleskopiereinrichtung angeordnet. Mit diesen ebenfalls in die zweite Richtung z weisenden Tiefenmeßsensoren 96a, 96b kann ebenfalls ein sich in der zweiten Richtung z erstreckender Erfassungsbereich auf das Vorhandensein eines Objekts überprüft werden und/oder ein Ausfahrweg der dritten Schiene 43 gemessen werden.

In einer weiteren Ausführungsvariante umfasst die Warentransportvorrichtung 7 Warenerfassungssensoren 97a, 97b zur Erfassung der auf dem ersten Warenaufnahmeträger 12 und/oder dem zweiten Warenaufnahmeträger 34 gelagerten Hängewaren 2. Insbesondere können die Hängewaren 2 hinsichtlich ihrer Anzahl und/oder Art/Type erfasst werden. Beispielsweise ist es auf diese Weise möglich, eine bestimmte Anzahl an Mänteln vom ersten Warenaufnahmeträger 12 auf den zweiten Warenaufnahmeträger 34 zu schieben oder umgekehrt. Gleichermaßen ist es vorstellbar, beispielsweise die Mäntel hinsichtlich ihrer Farbe zu unterscheiden oder aber auch zum Beispiel Mäntel von Hemden zu unterscheiden.

Die Warenerfassungssensoren 97a, 97b sind in diesem Beispiel an den Enden der dritten Schiene 43 angeordnet, grundsätzlich könnten sie aber auch an anderer Stelle positioniert sein.

An dieser Stelle wird angemerkt, dass die Tiefenmeßsensoren 95a, 95b, die Tiefenmeßsensoren 96a, 96b und die Warenerfassungssensoren 97a, 97b einzeln oder in Kombination eingesetzt werden können.

Die Figuren 30 bis 33 zeigen nun eine Variante einer Warentransportvorrichtung 7, bei der Warensicherungsbügel 98a, 98b zum Einsatz kommen. Konkret zeigt die Fig. 30 eine perspektivische Ansicht der Warentransportvorrichtung 7 und die Figuren 31 bis 33 verschiedene Ausführungsvarianten in schematischer Vorderansicht.

Die Warentransportvorrichtung 7 weist in dem konkret dargestellten Beispiel zwei Warensicherungsbügel 98a, 98b auf, welche um parallel zur ersten Richtung x ausgerichtete Drehachsen 99a, 99b drehbar an der Warentransportvorrichtung 7 gelagert sind. Die Warensicherungsbügel 98a, 98b sind in eine Freigabestellung bewegbar, in welcher die Warensicherungsbügel 98a, 98b nach oben verschwenkt sind, und in eine Sicherungsstellung, in welcher die Warensicherungsbügel 98a, 98b nach unten verschwenkt sind. Die Freigabestellung ermöglicht den Transfer der Hängewaren 2 zwischen dem ersten Warenaufnahmeträger 12 und dem zweiten Warenaufnahmeträger 34. In der Sicherungsstellung sind die Hängewaren 2 dagegen in einem Sicherungsbereich unterhalb der Warentransportvorrichtung 7 gehalten und insbesondere zusammengedrückt. Dadurch wird ein Schwingen oder Flattern der Hängewaren 2 bei Fahrt der Warentransportvorrichtung 7 in der x-Richtung vermieden oder zumindest verringert.

In der Fig. 30 befindet sich der erste Warensicherungsbügel 98a in der Freigabestellung, der zweite Warensicherungsbügel 98b in der Sicherungsstellung. Dies ist insbesondere dann möglich, wenn die Warensicherungsbügel 98a, 98b durch getrennte Motoren angetrieben werden. Grundsätzlich könnte sich der zweite Warensicherungsbügel 98b bei dem dargestellten Warentransfer aber ebenfalls in der Freigabestellung befinden, was mit sowohl mit zwei getrennten Antriebsmotoren als auch mit einem Antriebsmotor, welcher mit beiden Warensicherungsbügeln 98a, 98b gekoppelt ist, realisiert werden kann.

Fig. 31 zeigt die bereits in Fig. 30 dargestellte Ausführungsvariante in schematisierter Vorderansicht, wobei die Sicherungsstellung mit durchgezogenen Linien und die Freigabestellung mit strichlierten Linien dargestellt ist. In dem in Fig. 31 dargestellten Beispiel sind die Warensicherungsbügel 98a, 98b in der Sicherungsstellung vertikal ausgerichtet. Dies ist jedoch nicht die einzig vorstellbare Möglichkeit, denkbar ist vielmehr auch, dass die Warensicherungsbügel 98a, 98b in der Sicherungsstellung schräg stehen, so wie das in der Fig. 32 dargestellt ist. Die Warensicherungsbügel 98a, 98b können insbesondere durch variable Schrägstellung an eine unterschiedliche Anzahl der auf dem zweiten Warenaufnahmeträger 34 zu transportierenden Hängewaren 2 angepasst werden.

In der Fig. 33 ist schließlich eine Ausführungsvariante der Warentransportvorrichtung 7 dargestellt, bei der die Drehachsen 99a, 99b der Warensicherungsbügel 98a, 98b in der zweiten Richtung z verschiebbar auf der Warentransportvorrichtung 7 gelagert sind. Die Warensicherungsbügel 98a, 98b können insbesondere durch Verschieben an eine unterschiedliche Anzahl der auf dem zweiten Warenaufnahmeträger 34 zu transportierenden Hängewaren 2 angepasst werden. Selbstverständlich ist es auch möglich, die Warensicherungsbügel 98a, 98b durch Schwenken und Verschieben an eine unterschiedliche Anzahl der auf dem zweiten Warenaufnahmeträger 34 zu transportierenden Hängewaren 2 anzupassen.

In einer besonders vorteilhaften Ausführungsform der Warentransportvorrichtung 7 werden die Drehachsen 99a, 99b der Warensicherungsbügel 98a, 98b beim Schwenken in die Freigabestellung in der zweiten Richtung z zur Mitte der Warentransportvorrichtung 7 hin verschoben und beim Schwenken in die Sicherungsstellung in der zweiten Richtung z zur Außenseite der Warentransportvorrichtung 7, 67 hin verschoben. Wie aus der Fig. 33 deutlich wird, ist der zum Schwenken der Warensicherungsbügel 98a, 98b bei dieser Ausführungsvariante sehr klein, der zwischen den Warensicherungsbügeln 98a, 98b befindliche Platz dagegen sehr groß. Demgemäß kann mit der in der Fig. 33 dargestellten Variante der Warentransportvorrichtung 7 eine große Anzahl an Hängewaren 2 gesichert werden, ohne dass die Warensicherungsbügel 98a, 98b dazu über die Warentransportvorrichtung 7 hinaus geschwenkt werden müssen, was zu Kollisionen mit dem ersten Warenaufnahmeträger 34 oder der dort gelagerten Hängewaren 2 führen könnte. Für die Ausführung der kombinierten Schwenk- und Linearbewegung der Warensicherungsbügel 98a, 98b kann beispielsweise die Steuerung 94 herangezogen und zu diesem Zweck mit den Antriebsmotoren für die Schwenk- und Linearbewegung verbunden sein.

Der Antrieb der Warensicherungsbügel 98a, 98b kann elektrisch, pneumatisch oder hydraulisch erfolgen. Zur Beschränkung der Kraft, mit der die Hängewaren 2 zusammengedrückt werden, kann der Strom eines elektrischen Antriebsmotors respektive der Druck eines Pneumatikzylinders/Hydraulikzylinders beschränkt werden. Selbstverständlich können auch Kraftsensoren zum Messen der Kraft, mit der die Hängewaren 2 zusammengedrückt werden, eingesetzt werden.

In den Figuren 30 bis 33 weist die Warentransportvorrichtung 7 zwei Warensicherungsbügel 98a, 98b auf. Denkbar ist natürlich auch, dass die Warentransportvorrichtung 7 nur einen Warensicherungsbügel 98a aufweist, insbesondere wenn die Ein- und Auslagervorrichtung 33 nur zu einer Seite ausgefahren werden kann. Der Warensicherungsbügel 98a kann die Hängewaren 2 dann insbesondere gegen einen festen Warensicherungsbügel drücken.

In den Figuren 29 bis 33 wurde auf die Warentransportvorrichtung 7 Bezug genommen. Selbstverständlich ist die offenbarte technische Lehre aber auch uneingeschränkt auf die Warentransportvorrichtung 67 anwendbar.

Abschließend sei noch erwähnt, dass bei den oben beschriebenen Ausführungen anstatt der Einebenenregalbediengeräte als Warentransportvorrichtung 7, 67 auch (Mehrebenen)Regalbediengeräte eingesetzt werden können, welche in x-Richtung entlang von Führungsschienen verfahrbar sind und einen sich über sämtliche Lagerebenen 13 erstreckenden Mast aufweisen, auf welchem ein heb- und senkbarer Grundrahmen gelagert ist. Auf diesem Grundrahmen ist die Ein- und Auslagervorrichtung 33 (Fig. 2) oder Ein- und Auslagervorrichtung 69 (Fig. 25) angeordnet. Ein solches Regalbediengerät ist beispielweise aus der EP 2 419 368 B1 bekannt. Nach einer anderen Ausführung sind in mehreren Fahrebenen übereinander derartige Regalbediengeräte vorgesehen, wobei jedes dieser Regalbediengeräte mehrere Lagerebenen 13 bedient.

Auch sei noch hingewiesen, dass die oben beschriebenen Übergabe- und Übernahmestationen 14, 15, 82, 83 nicht zwingenderweise getrennt und zu beiden Seiten der Warentransportvorrichtung 7, 67 angeordnet sein müssen, sondern als kombinierte Übergabe- und Übernahmestation 14, 15, 82, 83, welche als Puffer für einzulagernde Waren 2 bzw. Warengruppen als auch für auszulagernde Waren 2 bzw. Warengruppen dienen. Die kombinierte Übergabe- und Übernahmestation ist auf einer Seite der Warentransportvorrichtung 7, 67 angeordnet. In diesem Fall kann die Übergabe- und Übernahmestation 14, 15, 82, 83 in den übereinander liegenden Lagerebenen 13 jeweils zwei Warenaufnahmeträger 16, 87 aufweisen, wobei ein erster Warenaufnahmeträger 16, 87 für die einzulagernde Waren 2 bzw. Warengruppen und ein zweiter Warenaufnahmeträger 16, 87 für die auszulagernde Waren 2 bzw. Warengruppen dienen. Die Übergabe- und Übernahmestationen 14, 15, 82, 83 können jeweils auch nur auf einer Höhenebene einen ersten Warenaufnahmeträger 16, 87 für die einzulagernde Waren 2 bzw. Warengruppen und einen zweiten Warenaufnahmeträger 16, 87 für die auszulagernde Waren 2 bzw. Warengruppen aufweisen. Anderenfalls kann die kombinierte Übergabe- und Übernahmestation 14, 15, 82, 83 auch nur auf einer Höhenebene einen ersten Warenaufnahmeträger 16, 87 für die einzulagernde Waren 2 bzw. Warengruppen und einen zweiten Warenaufnahmeträger 16, 87 für die auszulagernde Waren 2 bzw. Warengruppen aufweisen.

Nach den oben beschriebenen Ausführungen definieren die Waren 2 auf den Warenaufnahmeträgern 12, 16, 34, 73, 87, 90, 98 jeweils eine Hängeebene, senkrecht zur Längserstreckung der Warenaufnahmeträger 12, 16, 34, 73, 87, 90, 98 angeordnet ist. Insbesondere für die Warenaufnahmeträger 12, 34, 73 ist die Hängeebene parallel zu der x-y-Ebene. Eine Bewegungsrichtung für die Ware 2 verläuft in diesen Fällen parallel zur z-Richtung.

Die im Zusammenhang mit dem ersten Warenaufnahmeträger 12 offenbarte technische Lehre ist sinngemäß auch auf die Warenaufnahmeträger 16, 23, 25, 34, 85, 87, 90 und 92 sowie mit Einschränkungen auch auf den Warenaufnahmeträger 73 übertragbar.

In den Ausführungsbeispielen wurde Bezug auf Hängewaren 2 genommen, welche an Kleiderbügeln 4 aufgehängt ist. Selbstverständlich bezieht sie angegebene technische Lehre auch auf Waren, welche in Hängetaschen gelagert sind. Ein Haken der Hängetasche tritt dann an die Stelle des Hakens eines Kleiderbügels 4.

Der Ordnung halber sei abschließend daraufhingewiesen, dass zum besseren Verständnis des Aufbaus des Lagersystems 1, 80 und der Warentransportvorrichtung 7, 67 dieses bzw. deren Bestandteile teilweise unmaßstäblich und/oder vergrößert und/oder verkleinert dargestellt wurden.

**Bezugszeichenaufstellung**

| | | | |
|---|---|---|---|
| 1 | Lagersystem | 31 | Laufrad |
| 2 | Ware | 32 | Fahrantrieb |
| 3 | Warenverteilsystem | 33 | Ein- und Auslagervorrichtung |
| 4 | Kleiderbügel | 34 | Warenaufnahmeträger |
| 5 | Lagerregal | 35 | Antriebswelle |
| 6 | Fahrebene | 36 | Schwenkhebel |
| 7 | Warentransportvorrichtung | 37 | Drehachse |
| 8 | vordere Regalsteher | 38 | Drehachse |
| 9 | hintere Regalsteher | 39 | Antriebsmotor |
| 10 | vordere Längstraverse | 40 | Zahnriemen |
| 11 | hintere Längstraverse | 41 | erste Schiene |
| 12 | Warenaufnahmeträger | 42 | zweite Schiene |
| 13 | Lagerebene | 43 | dritte Schiene |
| 14 | Übergabestation | 44 | Teleskopiermotor |
| 15 | Übernahmestation | 45 | Zugmittel |
| 16 | Warenaufnahmeträger | 46 | Vertikalführung |
| 17 | - | 47 | Hubmotor |
| 18 | Vertikalförderer | 48 | Stützabschnitt |
| 19 | Montageplatte | 49 | Aufnahmeabschnitt |
| 20 | Einlager- / Auslagerbewegung | 50 | Wandabschnitt |
| 21 | Führungsrahmen | 51 | Wandabschnitt |
| 22 | Hubrahmen | 52 | Bodenabschnitt |
| 23 | Warenaufnahmeträger | 53 | Flanschabschnitt |
| 24 | Warenübergabevorrichtung | 54 | Mitnahmeorgan |
| 25 | Warenaufnahmeträger | 55 | Schwenkplatte |
| 26 | Fördertechnik (Einlagerung) | 56 | Drehachse |
| 27 | Fördertechnik (Auslagerung) | 57 | Sicke |
| 28 | Zugmitteltrieb | 58 | Wälzlager |
| 29 | Antriebsmotor | 59 | Achse |
| 30 | Grundrahmen | 60 | Lagerhalter |
| 61 | erster Positionierfortsatz | 94 | Steuerung |
| 62 | zweiter Positionierfortsatz | 95 | Tiefenmeßsensor |
| 63 | Durchschubsicherung | 96 | Tiefenmeßsensor |
| 64 | Öffnung | 97 | Warenerfassungssensor |
| 65 | Fortsatz | 98 | Warensicherungsbügel |
| 66 | Bürste | 99 | Drehachse |
| 67 | Warentransportvorrichtung | | |
| 68 | Führungsschiene | | |
| 69 | Ein- und Auslagervorrichtung | | |
| 70 | Grundrahmen | | |
| 71 | Laufrolle | | |
| 72 | Antriebsmotor | | |
| 73 | Warenaufnahmeträger | | |
| 74 | Verstellvorrichtung | | |
| 75 | Lagerplatte | | |
| 76 | Kulissenführung | | |
| 77 | Antriebsmotor | | |
| 78 | Mitnehmerleiste | | |
| 79 | Mitnahmeorgan | | |
| 80 | Lagersystem | | |
| 81 | Warenverteilsystem | | |
| 82 | Übergabestation | | |
| 83 | Übernahmestation | | |
| 84 | Vertikalförderer | | |
| 85 | Warenaufnahmeträger | | |
| 86 | Führungsschiene | | |
| 87 | Warenaufnahmeträger | | |
| 88 | Führungsrahmen | | |
| 89 | Hubrahmen | | |
| 90 | Warenaufnahmeträger | | |
| 91 | Warenübergabevorrichtung | | |
| 92 | Warenaufnahmeträger | | |
| 93 | Führungsschiene | | |

## Patentansprüche

1. Automatisiertes Lagersystem (1, 80) für Hängewaren (2), welche an Kleiderbügeln (4) aufgehängt sind, und/oder für Hängetaschen für Waren, umfassend
- ein Lagerregal (5), und
- zumindest eine vor dem Lagerregal (5) in einer ersten Richtung (x) verfahrbare Warentransportvorrichtung (7, 67),
wobei das Lagerregal (5)
in übereinander liegenden und im Wesentlichen horizontalen Lagerebenen (13) angeordnete Lagerbereiche für die Hängewaren (2) / Hängetaschen aufweist, und
in den Lagerbereichen erste Warenaufnahmeträger (12) aufweist, wobei an einem ersten Warenaufnahmeträger (12) eine Vielzahl an Hängewaren (2) / Hängetaschen aufnehmbar ist und eine Längserstreckung der ersten Warenaufnahmeträger (12) in einer zweiten Richtung (z) senkrecht zur ersten Richtung (x) ausgerichtet ist,
wobei die Warentransportvorrichtung (7, 67)
einen Grundrahmen (30),
einen zweiten Warenaufnahmeträger (34), der sich in der zweiten Richtung (z) erstreckt und in der zweiten Richtung (z) auf den ersten Warenaufnahmeträger (12) verstellbar ist, und
zumindest eine relativ zum Grundrahmen (30) in der zweiten Richtung (z) bewegbare Ein- und Auslagervorrichtung (33, 69) zum Bewegen der Hängewaren (2) / Hängetaschen zwischen dem ersten Warenaufnahmeträger (12) und dem zweiten Warenaufnahmeträger (34) aufweist,
wobei der erste Warenaufnahmeträger (12) und/oder der zweite Warenaufnahmeträger (34)
einen ersten Stützabschnitt (48a) und einen zweiten Stützabschnitt (48b) aufweist, welche in Längsrichtung (z) des Warenaufhahmeträgers (12, 34) mit gegenseitigem Abstand verlaufen und zur Unterstützung eines Hakens eines Kleiderbügels (4) / einer Hängetasche ausgebildet sind,
einen Aufnahmeabschnitt (49) aufweist, welcher in Längsrichtung (z) des Warenaufnahmeträgers (12, 34) zwischen dem ersten Stützabschnitt (48a) und zweiten Stützabschnitt (48b) verläuft und einen sich in Richtung der Stützabschnitte (48a, 48b) öffnenden Längsschlitz ausbildet,
wobei die Ein- und Auslagervorrichtung (33, 69) Mitnahmeorgane (54, 79) aufweist, welche zwischen einer Freigabestellung und einer Betätigungsstellung verstellbar sind, wobei die Freigabestellung zur Freigabe der Kleiderbügel (4) / der Hängetaschen und die Betätigungsstellung zur Mitnahme der Kleiderbügel (4) / der Hängetaschen vorgesehen ist,
**dadurch gekennzeichnet, dass**
die Mitnahmeorgane (54, 79) nach unten weisen und in der Freigabestellung aus dem Aufnahmeabschnitt (49) zurückgezogen sind und in der Betätigungsstellung von oben in den Aufnahmeabschnitt (49) hineinragen.

2. Automatisiertes Lagersystem (1, 80) nach Anspruch 1, **dadurch gekennzeichnet, dass** der erste Warenaufnahmeträger (12) und/oder der zweite Warenaufnahmeträger (34) zusätzlich einen ersten Wandabschnitt (50a) und einen zweiten Wandabschnitt (50b) aufweisen, welche in Längsrichtung (z) des Warenaufnahmeträgers (12, 34) und parallel zu einer im Wesentlichen vertikal auf die betreffende Lagerebene (13) ausgerichtete Symmetrieebene des Warenaufnahmeträgers (12, 34) verlaufen, wobei an den ersten Wandabschnitt (50a) der erste Stützabschnitt (48a) anschließt und an den zweiten Wandabschnitt (50b) der zweite Stützabschnitt (48b) anschließt, und wobei der erste Stützabschnitt (48a) und zweite Stützabschnitt (48b) in Richtung der Symmetrieebene nach oben geneigt aufeinander zulaufen.

3. Automatisiertes Lagersystem (1, 80) nach Anspruch 1 oder 2, **dadurch gekennzeichnet, dass** die Mitnahmeorgane (54, 79) durch in Richtung (y) zum ersten Warenaufnahmeträger (12) und/oder zweiten Warenaufnahmeträger (34) weisende, stiftförmige Fortsätze gebildet sind.

4. Automatisiertes Lagersystem (1, 80) nach einem der Ansprüche 1 bis 3, **dadurch gekennzeichnet, dass** die Mitnahmeorgane (54, 79) vertikal in einer dritten Richtung (y) bewegbar sind.

5. Automatisiertes Lagersystem (1, 80) nach einem der Ansprüche 1 bis 4, **gekennzeichnet durch** Mittel (94) zur Bewegungssteuerung, welche der Bewegung der Mitnahmeorgane (54, 79) quer zur zweiten Richtung (z) und zum ersten/zweiten Warenaufnahmeträger (12, 34) hin eine Bewegung in der zweiten Richtung (z) überlagern.

6. Automatisiertes Lagersystem (1, 80) nach einem der Ansprüche 1 bis 5, **gekennzeichnet durch** Mittel (94) zur Bewegungssteuerung, welche die Bewegung der Mitnahmeorgane (54, 79) quer zur zweiten Richtung (z) und zum ersten/zweiten Warenaufnahmeträger (12, 34) hin an einer anderen Stelle bewirken als die Bewegung der Mitnahmeorgane (54, 79) quer zur zweiten Richtung (z) und vom ersten/zweiten Warenaufnahmeträger (12, 34) weg.

7. Automatisiertes Lagersystem (1, 80) nach Anspruch 5, **dadurch gekennzeichnet, dass** die Bewegung in der zweiten Richtung (z) eine oszillierende Bewegung ist.

8. Automatisiertes Lagersystem (1, 80) nach einem der Ansprüche 1 bis 7, **dadurch gekennzeichnet, dass** der zweite Warenaufnahmeträger (34) an seinem dem ersten Warenaufnahmeträger (12) zugewandten Ende erste und zweite Positionierfortsätze (61, 62) aufweist, die in den ersten Warenaufnahmeträger (12) ragen, wenn der zweite Warenaufnahmeträger (34) an den ersten Warenaufnahmeträger (12) heran bewegt ist, wobei
- der zumindest eine erste Positionierfortsatz (61) so angeordnet ist, dass eine vom ersten Warenaufnahmeträger (12) auf den zweiten Warenaufnahmeträger (34) abwärts gerichtete Stufe entsteht, wenn der erste Positionierfortsatz (61) auf dem ersten Warenaufnahmeträger (12) aufliegt, und
- der zumindest eine zweite Positionierfortsatz (62) so angeordnet ist, dass eine vom zweiten Warenaufnahmeträger (34) auf den ersten Warenaufnahmeträger (12) abwärts gerichtete Stufe entsteht, wenn der zweite Positionierfortsatz (62) auf dem ersten Warenaufnahmeträger (12) aufliegt.

9. Automatisiertes Lagersystem (1, 80) nach einem der Ansprüche 1 bis 7, **dadurch gekennzeichnet, dass** der erste Warenaufnahmeträger (12) an seinem dem zweiten Warenaufnahmeträger (34) zugewandten Ende erste und zweite Positionierfortsätze (61, 62) aufweist, die in den zweiten Warenaufnahmeträger (34) ragen, wenn der zweite Warenaufnahmeträger (34) an den ersten Warenaufnahmeträger (12) heran bewegt ist, wobei
- der zumindest eine erste Positionierfortsatz (61) so angeordnet ist, dass eine vom ersten Warenaufnahmeträger (12) auf den zweiten Warenaufnahmeträger (34) abwärts gerichtete Stufe entsteht, wenn der zweite Warenaufnahmeträger (34) auf dem ersten Positionierfortsatz (61) aufliegt, und
- der zumindest eine zweite Positionierfortsatz (62) so angeordnet ist, dass eine vom zweiten Warenaufnahmeträger (34) auf den ersten Warenaufnahmeträger (12) abwärts gerichtete Stufe entsteht, wenn der zweite Warenaufnahmeträger (34) auf dem zweiten Positionierfortsatz (62) aufliegt.

10. Automatisiertes Lagersystem (1, 80) nach einem der Ansprüche 1 bis 9, **dadurch gekennzeichnet, dass** im Lagerregal (5) im Bereich des ersten Warenaufnahmeträgers (12) eine Durchschubsicherung (63) montiert ist, die eine Öffnung (64) / einen Fortsatz aufweist, welche mit einem Fortsatz (65) / einer Öffnung der Ein- und Auslagervorrichtung (33, 69) zusammenwirkt, wenn die Ein- und Auslagervorrichtung (33, 69) bis an die Durchschubsicherung (63) heran bewegt ist.

11. Automatisiertes Lagersystem (1, 80) nach einem der Ansprüche 1 bis 10, **gekennzeichnet durch** ein im Bereich des ersten Warenaufnahmeträgers (12) und/oder des zweiten Warenaufnahmeträgers (34) angeordnetes Blockierelement (66), das in Richtung auf den Warenaufnahmeträger (12, 34) vorragt.

12. Automatisiertes Lagersystem (1, 80) nach einem der Ansprüche 1 bis 11, **gekennzeichnet durch** einen auf der Warentransportvorrichtung (7, 67) angeordneten Tiefenmeßsensor (95a, 95b 96a, 96b), dessen Erfassungsbereich in die zweite Richtung (z) weist.

13. Automatisiertes Lagersystem (1, 80) nach einem der Ansprüche 1 bis 12, **gekennzeichnet durch** einen auf der Warentransportvorrichtung (7, 67) angeordneten Warenerfassungssensor (97a, 97b) zur Erfassung der auf dem ersten Warenaufnahmeträger (12) und/oder dem zweiten Warenaufnahmeträger (34) gelagerten Hängewaren (2) / Hängetaschen.

14. Automatisiertes Lagersystem (1, 80) nach einem der Ansprüche 1 bis 13, **gekennzeichnet durch** zumindest einen Warensicherungsbügel (98a, 98b), welcher um eine parallel zur ersten Richtung (x) ausgerichtete Drehachse (99a, 99b) drehbar an der Warentransportvorrichtung (7, 67) gelagert ist und welcher zwischen einer Freigabestellung, in welcher der Warensicherungsbügel (98a, 98b) nach oben verschwenkt ist, und einer Sicherungsstellung, in welcher der Warensicherungsbügel (98a, 98b) nach unten verschwenkt ist, verstellbar ist, wobei die Freigabestellung einen Transfer der Hängewaren (2) / Hängetaschen zwischen dem ersten Warenaufnahmeträger (12) und dem zweiten Warenaufnahmeträger (34) ermöglicht und die Hängewaren (2) / Hängetaschen in der Sicherungsstellung in einem Sicherungsbereich unterhalb der Warentransportvorrichtung (7, 67) gehalten sind.

15. Betriebsverfahren für ein automatisiertes Lagersystem (1, 80) für Hängewaren (2), welche an Kleiderbügeln (4) aufgehängt sind, und/oder für Hängetaschen für Waren, wobei das Lagersystem (1, 80) ein Lagerregal (5) mit in übereinander liegenden und im Wesentlichen horizontalen Lagerebenen (13) angeordneten Lagerbereichen für die Hängewaren (2) / Hängetaschen und zumindest eine vor dem Lagerregal (5) in einer ersten Richtung (x) verfahrbare Warentransportvorrichtung (7, 67) umfasst, aufweisend die Schritte
- Bewegen der Warentransportvorrichtung (7, 67) in der ersten Richtung (x) in eine Warenübergabeposition im Bereich eines ersten Warenaufnahmeträgers (12) des Lagerregals (5), wobei eine Längserstreckung des ersten Warenaufnahmeträgers (12) in einer zweiten Richtung (z) senkrecht zur ersten Richtung (x) ausgerichtet ist,
- Bewegen eines auf der Warentransportvorrichtung (7, 67) verstellbar angeordneten und sich in der zweiten Richtung (z) erstreckenden, zweiten Warenaufnahmeträgers (34) in der zweiten Richtung (z) bis zum ersten Warenaufnahmeträger (12),
- Bewegen von Mitnahmeorganen (54, 79) einer Ein- und Auslagervorrichtung (33, 69) von einer Freigabestellung, in welcher die Mitnahmeorgane (54, 79) quer zur zweiten Richtung (z) vom ersten Warenaufnahmeträger (12) wegbewegt sind, in eine Betätigungsstellung, in welcher die Mitnahmeorgane (54, 79) quer zur zweiten Richtung (z) zum ersten Warenaufnahmeträger (12) hin bewegt sind, wobei die Freigabestellung zur Freigabe der Kleiderbügel (4) / der Hängetaschen und die Betätigungsstellung zur Mitnahme der Kleiderbügel (4) / der Hängetaschen vorgesehen ist, und
- Bewegen der Hängewaren (2) / Hängetaschen vom ersten Warenaufnahmeträger (12) auf den zweiten Warenaufnahmeträger (34) oder umgekehrt mit Hilfe der in der zweiten Richtung (z) bewegbaren Ein- und Auslagervorrichtung (33, 69),
wobei der erste Warenaufnahmeträger (12) und/oder der zweite Warenaufnahmeträger (34) einen ersten Stützabschnitt (48a) und einen zweiten Stützabschnitt (48b) aufweist, welche in Längsrichtung (z) des Warenaufnahmeträgers (12, 34) mit gegenseitigem Abstand verlaufen und zur Unterstützung eines Hakens eines Kleiderbügels (4) / einer Hängetasche ausgebildet sind, und
wobei der Aufnahmeabschnitt (49) in Längsrichtung (z) des Warenaufnahmeträgers (12, 34) zwischen dem ersten Stützabschnitt (48a) und zweiten Stützabschnitt (48b) verläuft und einen sich in Richtung der Stützabschnitte (48a, 48b) öffnenden Längsschlitz ausbildet,
**dadurch gekennzeichnet, dass**
die Mitnahmeorgane (54, 79) nach unten weisen und bei der Bewegung von der Freigabestellung in die Betätigungsstellung von oben in einen Aufnahmeabschnitt (49) des ersten Warenaufnahmeträgers (12) und/oder des zweiten Warenaufnahmeträgers (34) hinein bewegt werden.

16. Betriebsverfahren nach Anspruch 15, **dadurch gekennzeichnet, dass** die Mitnahmeorgane (54, 79) in der Betätigungsstellung positioniert sind, wenn die Warentransportvorrichtung (7, 67) in der ersten Richtung (x) bewegt wird.

17. Betriebsverfahren nach Anspruch 15, **dadurch gekennzeichnet, dass** die Kleiderbügel (4) / Hängetaschen beim Bewegen zwischen dem ersten Warenaufnahmeträger (12) und dem zweiten Warenaufnahmeträger (34) an einem im Bereich des ersten Warenaufnahmeträgers (12) und/oder des zweiten Warenaufnahmeträgers (34) angeordneten Blockierelement (66) vorbei bewegt werden, das in Richtung auf den Warenaufnahmeträger (12, 34) vorragt.

18. Betriebsverfahren nach einem der Ansprüche 15 bis 17, **dadurch gekennzeichnet, dass** zumindest ein Warensicherungsbügel (98a, 98b), welcher um eine parallel zur ersten Richtung (x) ausgerichteten Drehachse (99a, 99b) drehbar an der Warentransportvorrichtung (7, 67) gelagert ist, beim Transfer der Hängewaren (2) / Hängetaschen zwischen dem ersten Warenaufnahmeträger (12) und dem zweiten Warenaufnahmeträger (34) nach oben in eine Freigabestellung geschwenkt wird und beim Transport der auf dem zweiten Warenaufnahmeträger (34) gelagerten Hängewaren (2) / Hängetaschen in der ersten Richtung (x) nach unten in eine Sicherungsstellung geschwenkt wird.

19. Warentransportvorrichtung (7, 67) zum Ein- und Auslagern von Hängewaren (2), welche an Kleiderbügeln (4) aufgehängt sind, und/oder für Hängetaschen für Waren, in ein und aus einem Lagerregal (5) eines automatisierten Lagersystems (1, 80) mit ersten Warenaufnahmeträgern (12),
wobei die Warentransportvorrichtung (7, 67) in einer ersten Richtung (x) verfahrbar ist und umfasst
einen Grundrahmen (30),
einen zweiten Warenaufnahmeträger (34), der sich in der zweiten Richtung (z) erstreckt und in der zweiten Richtung (z) auf den ersten Warenaufnahmeträger (12) verstellbar ist, und
zumindest eine relativ zum Grundrahmen (30) in der zweiten Richtung (z) bewegbare Ein- und Auslagervorrichtung (33, 69) zum Bewegen der Hängewaren (2) / Hängetaschen zwischen dem ersten Warenaufnahmeträger (12) und dem zweiten Warenaufnahmeträger (34), wobei die Ein- und Auslagervorrichtung (33, 69) Mitnahmeorgane (54, 79) aufweist, welche zwischen einer Freigabestellung und einer Betätigungsstellung verstellbar sind, wobei die Freigabestellung zur Freigabe der Kleiderbügel (4) / der Hängetaschen und die Betätigungsstellung zur Mitnahme der Kleiderbügel (4) / der Hängetaschen vorgesehen ist,
**dadurch gekennzeichnet, dass**
der zweite Warenaufnahmeträger (34)
einen ersten Stützabschnitt (48a) und einen zweiten Stützabschnitt (48b) aufweist, welche in Längsrichtung (z) des zweiten Warenaufnahmeträgers (34) mit gegenseitigem Abstand verlaufen und zur Unterstützung eines Hakens eines Kleiderbügels (4) / einer Hängetasche ausgebildet sind, und
einen Aufnahmeabschnitt (49) aufweist, welcher in Längsrichtung (z) des zweiten Warenaufnahmeträgers (34) zwischen dem ersten Stützabschnitt (48a) und zweiten Stützabschnitt (48b) verläuft und einen sich in Richtung der Stützabschnitte (48a, 48b) öffnende Längsschlitz ausbildet,
wobei die Mitnahmeorgane (54, 79) nach unten weisen und in der Freigabestellung aus dem Aufnahmeabschnitt (49) zurückgezogen sind und der Betätigungsstellung von oben in den Aufnahmeabschnitt (49) hineinragen.

## Claims

1. An automated warehouse system (1, 80) for hanging articles (2) which are suspended on clothes hangers (4), and/or for hanging bags for articles, comprising
- a storage rack (5), and
- at least one article transport device (7, 67) displaceable in a first direction (x) in front of the storage rack (5),
wherein the storage rack (5)
comprises storage zones for hanging articles (2) / hanging bags, arranged in storage planes (13) that are located above one another and are essentially horizontal, and comprises first article receiving carriers (12) in the storage zones, wherein a plurality of hanging articles (2) / hanging bagscan be received on a first article receiving carrier (12), and a longitudinal extension of the first article receiving carriers (12) is oriented in a second direction (z) perpendicular to the first direction (x),
wherein the article transport device (7, 67) comprises
a base frame (30)
a second article receiving carrier (34), which extends in the second direction (z) and is adjustable in the second direction (z) relative to the first article transport device (12), and
at least one storage and retrieval device (33, 69) movable in the second direction (z) relative to the base frame (30) for moving the hanging articles (2) / hanging bags between the first article receiving carrier (12) and the second article receiving carrier (34),
wherein the first article receiving carrier (12) and/or the second article receiving carrier (34) comprises
a first support section (48a) and a second support section (48b), which extend in the longitudinal direction (z) of the article receiving carrier (12, 34) with a mutual distance and are formed for supporting a hook of a clothes hanger (4) / a hanging bag,
a receiving section (49), which extends in the longitudinal direction (z) of the article receiving carrier (12, 34) between the first support section (48a) and second support section (48b) and forms a longitudinal slot which opens in the direction of the support sections (48a, 48b),
wherein the storage and retrieval device (33, 69) comprises drive members (54, 79), which are adjustable between a release position and an actuating position, wherein the release position is provided for releasing the clothes hangers (4) / the hanging bags, and the actuating position is provided for gripping the clothes hangers (4) / the hanging bags,
**characterized in that**
the drive members (54, 79) point downwards and are retracted out of the receiving section (49) when in the release position and protrude into the receiving section (49) from above when in the actuating position.

2. The automated warehouse system (1, 80) according to claim 1, **characterized in that** the first article receiving carrier (12) and/or the second article receiving carrier (34) additionally comprise a first wall section (50a) and a second wall section (50b), which extend in the longitudinal direction (z) of the article receiving carrier (12, 34) and in parallel to a symmetry plane of the article receiving carrier (12, 34) oriented essentially vertical to the respective storage plane (13), wherein the first support section (48a) connects to the first wall section (50a), and the second support section (48b) connects to the second wall section (50b), and wherein the first support section (48a) and second support section (48b) run towards one another in the direction of the symmetry plane in an upwardly inclined manner.

3. The automated warehouse system (1, 80) according to claim 1 or 2, **characterized in that** the drive members (54, 79) are formed by pin-shaped extensions pointing in the direction (y) toward the first article receiving carrier (12) and/or second article receiving carrier (34).

4. The automated warehouse system (1, 80) according to one of claims 1 to 3, **characterized in that** the drive members (54, 79) are movable vertically in a third direction (y).

5. The automated warehouse system (1, 80) according to one of claims 1 to 4, **characterized by** means (94) for movement control, which superimpose a movement in the second direction (z) onto the movement of the drive members (54, 79) transversely to the second direction (z) and towards the first/second article receiving carrier (12, 34).

6. The automated warehouse system (1, 80) according to one of claims 1 to 5, **characterized by** means (94) for movement control, which effect the movement of the drive members (54, 79) transversely to the second direction (z) and towards the first/second article receiving carrier (12, 34) at a different location than the movement of the drive members (54, 79) transversely to the second direction (z) and away from the first/second article receiving carrier (12, 34).

7. The automated warehouse system (1, 80) according to claim 5, **characterized in that** the movement in the second direction (z) is an oscillating movement.

8. The automated warehouse system (1, 80) according to one of claims 1 to 7, **characterized in that** the second article receiving carrier (34) comprises first and second positioning extensions (61, 62) on its end facing the first article receiving carrier (12), which positioning extensions (61, 62) protrude into the first article receiving carrier (12) when the second article receiving carrier (34) is moved up to the first article receiving carrier (12), wherein
- the at least one first positioning extension (61) is arranged such that a step oriented downwards from the first article receiving carrier (12) onto the second article receiving carrier (34) is created when the first positioning extension (61) rests on the first article receiving carrier (12), and
- the at least one second positioning extension (62) is arranged such that a step oriented downwards from the first article receiving carrier (12) onto the second article receiving carrier (34) is created when the second positioning extension (62) rests on the first article receiving carrier (12).

9. The automated warehouse system (1, 80) according to one of claims 1 to 7, **characterized in that** the first article receiving carrier (12) comprises first and second positioning extensions (61, 62) on its end facing the second article receiving carrier (34), which positioning extensions (61, 62) protrude into the second article receiving carrier (34) when the second article receiving carrier (34) is moved up to the first article receiving carrier (12), wherein
- the at least one first positioning extension (61) is arranged such that a step oriented downwards from the first article receiving carrier (12) onto the second article receiving carrier (34) is created when the second article receiving carrier (34) rests on the first positioning extension (61), and
- the at least one second positioning extension (62) is arranged such that a step oriented downwards from the first article receiving carrier (12) onto the second article receiving carrier (34) is created when the second article receiving carrier (34) rests on the second positioning extension (62).

10. The automated warehouse system (1, 80) according to one of claims 1 to 9, **characterized in that** in the storage rack (5) in the region of the first article receiving carrier (12), a push-through protection (63) is mounted, which comprises an opening (64) / an extension, which cooperates with an extension (65) / an opening of the storage and retrieval device (33, 69) when the storage and retrieval device (33, 69) is moved up to the push-through protection (63).

11. The automated warehouse system (1, 80) according to one of claims 1 to 10, **characterized by** a blocking element (66) arranged in the region of the first article receiving carrier (12) and/or of the second article receiving carrier (34), which blocking element (66) protrudes in the direction towards the article receiving carrier (12, 34).

12. The automated warehouse system (1, 80) according to one of claims 1 to 11, **characterized by** a depth measuring sensor (95a, 95b 96a, 96b) arranged on the article transport device (7, 67), whose detection area points in the second direction (z).

13. The automated warehouse system (1, 80) according to one of claims 1 to 12, **characterized by** an article detection sensor (97a, 97b) arranged on the article transport device (7, 67) for detecting the hanging articles (2) / hanging bags stored on the first article receiving carrier (12) and/or the second article transport device (34).

14. The automated warehouse system (1, 80) according to one of claims 1 to 13, **characterized by** at least one article securing bracket (98a, 98b), which is mounted on the article transport device (7, 67) so as to be rotatable about rotation axis (99a, 99b) oriented parallel to the first direction (x) and which is adjustable between a release position, in which the article securing bracket (98a, 98b) is pivoted upwards, and a securing position, in which the article securing bracket (98a, 98b) is pivoted downwards, wherein the release position enables a transfer of the hanging articles (2) / hanging bags between the first article receiving carrier (12) and the second article receiving carrier (34), and in the securing position, the hanging articles (2) / hanging bags are held in a securing area below the article transport device (7, 67)

15. An operating method for an automated warehouse system (1, 80) for hanging articles (2) which are suspended on clothes hangers (4), and/or for hanging bags for articles, wherein the warehouse system (1, 80) comprises a storage rack (5) with storage zones for hanging articles (2) / hanging bags, arranged in storage planes (13) that are located above one another and are essentially horizontal, and at least one article transport device (7, 67) displaceable in a first direction (x) in front of the storage rack (5), comprising the steps
- moving the article transport device (7, 67) in the first direction (x) into an article transfer position in the region of a first article receiving carrier (12) of the storage rack (5), wherein a longitudinal extension of the first article receiving carrier (12) is oriented in a second direction (z) perpendicular to the first direction (x),
- moving a second article receiving carrier (34), which is arranged so as to be adjustable on the article transport device (7, 67) and extends in the second direction (z), in the second direction (z) up to the first article receiving carrier (12),
- moving drive members (54, 79) of a storage and retrieval device (33, 69) from a release position, in which the drive members (54, 79) are moved away from the first article receiving carrier (12) transversely to the second direction (z), into an actuating position, in which the drive members (54, 79) are moved towards the first article receiving carrier (12) transversely to the second direction (z), wherein the release position is provided for releasing the clothes hangers (4) / the hanging bags, and the actuating position is provided for gripping the clothes hangers (4) / the hanging bags, and
- moving the hanging articles (2) / hanging bags from the first article receiving carrier (12) onto the second article receiving carrier (34) or vice versa with the aid of the storage and retrieval device (33, 69) movable in the second direction (z)
wherein the first article receiving carrier (12) and/or the second article receiving carrier (34) comprises a first support section (48a) and a second support section (48b), which extend in the longitudinal direction (z) of the article receiving carrier (12, 34) with a mutual distance and are formed for supporting a hook of a clothes hanger (4) / a hanging bag, and
wherein the receiving section (49) extends in the longitudinal direction (z) of the article receiving carrier (12, 34) between the first support section (48a) and the second support section (48b) and forms a longitudinal slot which opens in the direction of the support sections (48a, 48b),
**characterized in that**
the drive members (54, 79) point downwards and are moved into a receiving section (49) of the first article receiving carrier (12) and/or of the second article receiving carrier (34) from above during the movement from the release position into the actuating position.

16. The operating method according to claim 15, **characterized in that** the drive members (54, 79) are positioned in the actuating position when the article transport device (7, 67) is moved in the first direction (x).

17. The operating method according to claim 15, **characterized in that** when being moved between the first article receiving carrier (12) and the second article receiving carrier (34), the clothes hangers (4) / hanging bags are moved past a blocking element (66) arranged in the region of the first article receiving carrier (12) and/or the second article receiving carrier (34), which blocking element (66) protrudes in the direction towards the article receiving carrier (12, 34).

18. The operating method according to one of claims 15 to 17, **characterized in that** at least one article securing bracket (98a, 98b), which is mounted on the article transport device (7, 67) so as to be rotatable about rotation axis (99a, 99b) oriented parallel to the first direction (x), is pivoted upwards into a release position during the transfer of the hanging articles (2) / hanging bags between the first article receiving carrier (12) and the second article receiving carrier (34), and is pivoted downwards in the first direction (x) into a securing position during the transport of the hanging articles (2) / hanging bags stored on the second article receiving carrier (34).

19. An article transport device (7, 67) for storing and retrieving hanging articles (2) which are suspended on clothes hangers (4), and/or for hanging bags for articles, into or out of a storage rack (5) of an automated warehouse system (1, 80) with first article receiving carriers (12),
wherein the article transport device (7, 67) is displaceable in a first direction (x) and comprises
a base frame (30)
a second article transport device (34), which extends in the second direction (z) and is adjustable in the second direction (z) relative to the first article transport device (12), and
at least one storage and retrieval device (33, 69) movable in the second direction (z) relative to the base frame (30) for moving the hanging articles (2) / hanging bags between the first article receiving carrier (12) and the second article receiving carrier (34),
wherein the storage and retrieval device (33, 69) comprises drive members (54, 79), which are adjustable between a release position and an actuating position, wherein the release position is provided for releasing the clothes hangers (4) / the hanging bags, and the actuating position is provided for gripping the clothes hangers (4) / the hanging bags,
**characterized in that**
the second article receiving carrier (34) comprises
a first support section (48a) and a second support section (48b), which extend in the longitudinal direction (z) of the second article receiving carrier (34) with a mutual distance and are formed for supporting a hook of a clothes hanger (4) / a hanging bag, and
a receiving section (49), which extends in the longitudinal section (z) of the second article receiving carrier (34) between the first support section (48a) and the second support section (48b) and forms a longitudinal slot which opens in the direction of the support sections (48a, 48b),
wherein the drive members (54, 79) point downwards and are retracted out of the receiving section (49) when in the release position and protrude into the receiving section (49) from above when in the actuating position.

## Revendications

1. Système de stockage automatisé (1, 80) pour articles suspendus (2), qui sont suspendus à des cintres à vêtements (4) et/ou pour des housses suspendues pour articles, comprenant
- un rayonnage de stockage (5) et
- au moins un dispositif de transport d'articles (7, 67) pouvant être déplacé devant le rayonnage de stockage (5) dans une première direction (x),
dans lequel le rayonnage de stockage (5)
comprend des zones de stockage superposées et disposées dans des plans de stockage (13) globalement horizontaux pour les articles suspendus (2) / housses suspendues et comprend, dans les zones de stockage, des premiers supports de logement d'articles (12), dans lequel, au niveau d'un premier support de logement d'article (12), une pluralité d'articles suspendus (2) / housses suspendues peuvent être logées et une extension longitudinale des premiers supports de logement d'articles (12) est orientée dans une deuxième direction (z) perpendiculaire à la première direction (x),
dans lequel le dispositif de transport d'articles (7, 67) comprend un châssis de base (30),
un deuxième support de logement d'articles (34), qui s'étend dans la deuxième direction (z) et peut être déplacé dans la deuxième direction (z) vers le premier support de logement d'articles (12) et
au moins un dispositif de stockage et de déstockage (33, 69) pouvant être déplacée par rapport au châssis de base (30) dans la deuxième direction (z), pour le déplacement des articles suspendus (2) / housses suspendues entre le premier support de logement d'article (12) et le deuxième support de logement d'article (34),
dans lequel le premier support de logement d'article (12) et/ou le deuxième support de logement d'article (34)
comprend une première portion d'appui (48a) et une deuxième portion d'appui (48b), qui s'étendent dans la direction longitudinale (z) du support de logement d'article (12, 34) avec une distance entre elles et qui sont conçues pour l'appui d'un crochet d'un cintre à vêtement (4) / d'une housse suspendue,
comprend une portion de logement (49) qui s'étend dans la direction longitudinale (z) du support de logement d'article (12, 34) entre la première portion d'appui (48a) et la deuxième portion d'appui (48b) et forme une fente longitudinale s'ouvrant dans la direction des portions d'appui (48a, 48b),
dans lequel le dispositif de stockage et déstockage (33, 69) comprend des organes d'entraînement (54, 79) qui peuvent être déplacés entre une position de libération et une position d'actionnement, dans lequel la position de libération est prévue pour la libération des cintres à vêtements (4) / housses suspendues et la position d'actionnement est prévue pour l'entraînement des cintres à vêtements (4) / housses suspendues, **caractérisé en ce que**
les organes d'entraînement (54, 79) sont orientés vers le bas et, dans la position de libération, sont rétractés hors de la portion de logement (49) et, dans la position d'actionnement, pénètrent à partir du haut dans la portion de logement (49).

2. Système de stockage automatisé (1, 80) selon la revendication 1, **caractérisé en ce que** le premier support de logement d'article (12) et/ou le deuxième logement d'article (34) comprennent en outre une première portion de paroi (50a) et une deuxième portion de paroi (50b), qui s'étendent dans la direction longitudinale (z) du support de logement d'article (12, 34) et parallèlement à un plan de symétrie, orienté globalement verticalement vers le plan de stockage (13) concerné, du support de logement d'article (12, 34), dans lequel, à la première portion de paroi (50a), se raccorde la première portion d'appui (48a) et, à la deuxième portion de paroi (50b), se raccorde la deuxième portion d'appui (48b) et dans lequel la première portion d'appui (48a) et la deuxième portion d'appui (48b) s'étendent l'une vers l'autre de manière inclinée vers le haut dans la direction du plan de symétrie.

3. Système de stockage automatisé (1, 80) selon la revendication 1 ou 2, **caractérisé en ce que** les organes d'entraînement (54, 79) sont constitués de saillies en forme de tiges, orientées dans la direction (y) vers le premier support de logement d'article (12) et/ou deuxième support de logement d'article (34).

4. Système de stockage automatisé (1, 80) selon l'une des revendications 1 à 3, **caractérisé en ce que** les organes d'entraînement (54, 79) sont mobiles verticalement dans une troisième direction (y).

5. Système de stockage automatisé (1, 80) selon l'une des revendications 1 à 4, **caractérisé par** des moyens (94) de contrôle du mouvement, qui superposent au mouvement des organes d'entraînement (54, 79) transversalement par rapport à la deuxième direction (z) et en direction du premier/deuxième support de logement d'article (12, 34), un mouvement dans la deuxième direction (z).

6. Système de stockage automatisé (1, 80) selon l'une des revendications 1 à 5, **caractérisé par** des moyens (94) de contrôle du mouvement, qui provoquent le déplacement des organes d'entraînement (54, 79) transversalement par rapport à la deuxième direction (z) et en direction du premier/deuxième support de logement d'article (12, 34) à un autre endroit que le mouvement des organes d'entraînement (54, 79) transversalement par rapport à la deuxième direction (z) et s'éloignant du premier/deuxième support de logement d'article (12, 34).

7. Système de stockage automatisé (1, 80) selon la revendication 5, **caractérisé en ce que** le mouvement dans la deuxième direction (z) est un mouvement oscillant.

8. Système de stockage automatisé (1, 80) selon l'une des revendications 1 à 7, **caractérisé en ce que** le deuxième support de logement d'article (34) comprend, à son extrémité orientée vers le premier support de logement d'article (12), des première et deuxième saillies de positionnement (61, 62), qui pénètrent dans le premier support de logement d'article (12) lorsque le deuxième support de logement d'article (34) est approché du premier support de logement d'article (12), dans lequel
- l'au moins une première saillie de positionnement (61) est disposée de façon à ce qu'il en résulte un épaulement orienté vers le bas, du premier support de logement d'article (12) vers le deuxième support de logement d'article (34), lorsque la première saillie de positionnement (61) repose sur le premier support de logement d'article (12) et
- l'au moins une deuxième saillie de positionnement (62) est disposée de façon à ce qu'il en résulte un épaulement orienté vers le bas, du deuxième support de logement d'article (34) vers le premier support de logement d'article (12), lorsque la deuxième saillie de positionnement (62) repose sur le premier support de logement d'article (12).

9. Système de stockage automatisé (1, 80) selon l'une des revendications 1 à 7, **caractérisé en ce que** le premier support de logement d'article (12) comprend, à son extrémité orientée vers le deuxième support de logement d'article (34), des première et deuxième saillies de positionnement (61, 62), qui pénètrent dans le deuxième support de logement d'article (34) lorsque le deuxième support de logement d'article (34) est approché du premier support de logement d'article (12), dans lequel
- l'au moins une première saillie de positionnement (61) est disposée de façon à ce qu'il en résulte un épaulement orienté vers le bas, du premier support de logement d'article (12) vers le deuxième support de logement d'article (34), lorsque le deuxième support de logement d'article (34) repose sur la première saillie de positionnement (61) et
- au moins une deuxième saillie de positionnement (62) est disposée de façon à ce qu'il en résulte un épaulement orienté vers le bas, du deuxième support de logement d'article (34) vers le premier support de logement d'article (12), lorsque le deuxième support de logement d'article (34) repose sur la deuxième saillie de positionnement (62).

10. Système de stockage automatisé (1, 80) selon l'une des revendications 1 à 9, **caractérisé en ce que**, dans le rayonnage de stockage (5), au niveau du premier support de logement d'article (12), est montée une butée (63) qui comprend une ouverture (64) / une saillie, qui interagit avec une saillie (65) / une ouverture du dispositif de stockage et de déstockage (33, 69) lorsque le dispositif de stockage et de déstockage (33, 69) est approché de la butée (63).

11. Système de stockage automatisé (1, 80) selon l'une des revendications 1 à 10, **caractérisé par** un élément de blocage (66) disposé au niveau du premier support de logement d'article (12) et/ou du deuxième support de logement d'article (34), qui dépasse en direction du support de logement d'article (12, 34).

12. Système de stockage automatisé (1, 80) selon l'une des revendications 1 à 11, **caractérisé par** un capteur de mesure de profondeur (95a, 95b, 96a, 96b), disposé sur le dispositif de transport d'articles (7, 67), dont la zone de mesure est orientée dans la deuxième direction (z).

13. Système de stockage automatisé (1, 80) selon l'une des revendications 1 à 12, **caractérisé par** un détecteur d'article (97a, 97b) disposé sur le dispositif de transport d'articles (7, 67), pour la détection des articles suspendues (2) housses suspendues stockées sur le premier support de logement d'article (12) et/ou le deuxième support de logement d'article (34).

14. Système de stockage automatisé (1, 80) selon l'une des revendications 1 à 13, **caractérisé par** au moins un étrier de sécurisation d'article (98a, 98b) qui est logé sur le dispositif de transport d'articles (7, 67) de manière rotative autour d'un axe de rotation (99a, 99b) orienté parallèlement à la première direction (x) et qui peut être déplacé entre une position de libération, dans laquelle l'étrier de sécurisation d'article (98a, 98b) est pivoté vers le haut, et une position de sécurisation, dans laquelle l'étrier de sécurisation d'article (98a, 98b) est pivoté vers le bas, dans lequel la position de libération permet un transfert des articles suspendues (2) / housses suspendues entre le premier support de logement d'article (12) et le deuxième support de logement d'article (34) et les articles suspendus (2) / housses suspendues sont maintenues dans la position de sécurisation dans une zone de sécurisation en dessous du dispositif de transport d'articles (7, 67).

15. Procédé de fonctionnement pour un système de stockage automatisé (1, 80) pour des articles suspendus (2) qui sont suspendus à des cintres à vêtements (4) et/ou pour des housses suspendues pour des articles, dans lequel le système de stockage (1, 80) comprend un rayonnage de stockage (5) avec des zones de stockage superposées et disposés dans des plans de stockage (13) globalement horizontaux pour les articles suspendus (2) / housses suspendues et au moins un dispositif de transport d'articles (7, 67) mobile devant le rayonnage de stockage (5) dans une première direction (x), comprenant les étapes suivantes
- déplacement du dispositif de transport d'articles (7, 67) dans la première direction (x), vers une position de transfert d'article au niveau d'un premier support de logement d'article (12) du rayonnage de stockage (5), dans lequel une extension longitudinale du premier support de logement d'article (12) est orientée dans une deuxième direction (z) perpendiculaire à la première direction (x),
- déplacement d'un deuxième support de logement d'article (34), disposé de manière mobile sur le dispositif de transport d'articles (7, 67) et s'étendant dans la deuxième direction (z), dans la deuxième direction (z) jusqu'au premier support de logement d'article (12),
- déplacement d'organes d'entraînement (54, 79) d'un dispositif de stockage et de déstockage (33, 69) d'une position de libération, dans laquelle les organes d'entraînement (54, 79) sont éloignés du premier support de logement d'article (12) de manière transversale par rapport à la deuxième direction (z), vers une position d'actionnement dans laquelle les organes d'entraînement (54, 79) sont déplacés en direction du premier support de logement d'article (12) de manière transversale par rapport à la deuxième direction (z), dans lequel la position de libération est prévue pour la libération des cintres à vêtements (4) / housses suspendues et la position d'actionnement est prévue pour l'entraînement des cintres à vêtements (4) / housses suspendues et
- déplacement des articles suspendus (2) / housses suspendues du premier support de logement d'article (12) vers le deuxième support de logement d'article (34) ou inversement à l'aide du dispositif de stockage et de déstockage (33, 69) mobile dans la deuxième direction (z),
dans lequel le premier support de logement d'article (12) et/ou le deuxième support de logement d'article (34) comprend une première portion d'appui (48a) et une deuxième portion d'appui (48b), qui s'étendent dans la direction longitudinale (z) du support de logement d'article (12, 34) avec une distance entre elles et qui sont conçues pour l'appui d'un crochet d'un cintre à vêtement (4) / d'une housse suspendue, et
dans lequel la portion de logement (49) s'étend dans la direction longitudinale (z) du support de logement d'article (12, 34) entre la première portion d'appui (48a) et la deuxième portion d'appui (48b) et forme une fente longitudinale s'ouvrant dans la direction des portions d'appui (48a, 48b),
**caractérisé en ce que**
les organes d'entraînement (54, 79) sont orientés vers le bas et, lors du mouvement de la position de libération vers la position d'actionnement, sont déplacés à partir du haut vers l'intérieur d'une portion de logement (49) du premier support de logement d'article (12) et/ou du deuxième support de logement d'article (34).

16. Procédé de fonctionnement selon la revendication 15, **caractérisé en ce que** les organes d'entraînement (54, 79) sont positionnés dans la position d'actionnement lorsque le dispositif de transport d'articles (7, 67) est déplacé dans la première direction (x).

17. Procédé de fonctionnement selon la revendication 15, **caractérisé en ce que** les cintres à vêtements (4) / housses suspendues, lors du déplacement entre le premier support de logement d'article (12) et le deuxième support de logement d'article (34), passent devant un élément de blocage (66), disposé au niveau du premier support de logement d'article (12) et/ou du deuxième support de logement d'article (34), qui dépasse en direction du support de logement d'article (12, 34).

18. Procédé de fonctionnement selon l'une des revendications 15 à 17, **caractérisé en ce qu'**au moins un étrier de sécurisation d'article (98a, 98b), qui est logé sur le dispositif de transport d'articles (7, 67) de manière rotative autour d'un axe de rotation (99a, 99b) orienté parallèlement à la première direction (x), qui est pivoté vers le haut dans une position de libération lors du transfert des articles suspendues (2) / housses suspendues entre le premier support de logement d'article (12) et le deuxième support de logement d'article (34) et qui est pivoté vers le bas dans une position de sécurisation lors du transport des articles suspendus (2) / housses suspendues stockées sur le deuxième support de logement d'article (34) dans la première direction (x).

19. Dispositif de transport d'articles (7, 67) pour le stockage et le déstockage d'articles suspendus (2), qui sont suspendus à des cintres à vêtements (4) et/ou pour des housses suspendues pour des articles, dans et hors d'un rayonnage de stockage (5) d'un système de stockage automatisé (1, 80) avec des premiers supports de logement d'articles (12), dans lequel le dispositif transport d'articles (7, 67) peut être déplacé dans une première direction (x) et comprend
un châssis de base (30),
un deuxième support de logement d'articles (34), qui s'étend dans la deuxième direction (z) et peut être déplacé dans la deuxième direction (z) vers le premier support de logement d'articles (12) et
au moins un dispositif de stockage et de déstockage (33, 69) pouvant être déplacé par rapport au châssis de base (30) dans la deuxième direction (z), pour le déplacement des articles suspendus (2) / housses suspendues entre le premier support de logement d'article (12) et le deuxième support de logement d'article (34), dans lequel le dispositif de stockage et de déstockage (33, 69) comprend des organes d'entraînement (54, 79) qui peuvent être déplacés entre une position de libération et une position d'actionnement, dans lequel la position de libération est prévue pour la libération des cintres à vêtements (4) / housses suspendues et la position d'actionnement est prévue pour l'entraînement des cintres à vêtements (4) / housses suspendues,
**caractérisé en ce que**
le deuxième support de logement d'article (34)
comprend une première portion d'appui (48a) et une deuxième portion d'appui (48b), qui s'étendent dans la direction longitudinale (z) du deuxième support de logement d'article (34) avec une distance entre elles et qui sont conçues pour l'appui d'un crochet d'un cintre à vêtement (4) / d'une housse suspendue,
comprend une portion de logement (49) qui s'étend dans la direction longitudinale (z) du deuxième support de logement d'article (34) entre la première portion d'appui (48a) et la deuxième portion d'appui (48b) et forme une fente longitudinale s'ouvrant dans la direction des portions d'appui (48a, 48b),
dans lequel les organes d'entraînement (54, 79) sont orientés vers le bas et, dans la position de libération, sont rétractés hors de la portion de logement (49) et, dans la position d'actionnement, pénètrent à partir du haut dans la portion de logement (49).
